# EUROPEAN PATENT SPECIFICATION

(11) **EP 4 037 467 B1**
(45) Date of publication and mention of the grant of the patent: **06.08.2025**
(21) Application number: 20789532.7
(22) Date of filing: 02.10.2020
(51) Int. Cl.: A01F 15/07

(54) **AXIALLY PROTRUDING CONTINUOUS ROUND BALER**
AXIAL HERVORRAGENDE KONTINUIERLICHE RUNDBALLENPRESSE
PRESSE À BALLES RONDES CONTINUES DÉPASSANT AXIALEMENT

(30) Priority: 02.10.2019 US 201962909391 P
(43) Date of publication of application: 10.08.2022
(73) Proprietor: McHale Engineering, Ballinrobe, County Mayo (IE)
(72) Inventor: UNDERHILL, Kenneth, R., Strasburg, PA 17579 (US)
(74) Representative: Gorman, Francis Fergus
(86) International application number: PCT/EP2020/077748
(87) International publication number: WO 2021/064224

(56) References cited:
- EP-A2- 0 268 002
- EP-A2- 0 268 003
- WO-A1-2016/089546
- JP-A- S61 212 226
- US-A- 3 323 445
- US-A- 3 520 250

## Description

### FIELD OF THE INVENTION

This invention relates generally to a machine for baling forage crops, such as hay and, more particularly, to a machine operable to form large round bales of forage crop and protruding a continuously growing round bale in an axial direction.

### BACKGROUND OF THE INVENTION

The baling of agricultural crop material has traditionally been done with rectangular balers that formed compressed bales of crop material, such as forage crop material, that could be handled manually. As farming operations became more mechanized, the sizes of the bales of crop material increased with some balers forming large rectangular bales and other balers forming cylindrically shaped bales, commonly referred to as round bales. The rectangular balers, whether the balers formed a small bale that can be manually handled, or a large bale that requires machinery to handle the bales, had an advantage of being able to continuously gather the crop material from the fields for compressing into the bales.

The rectangular balers collected loose crop material from the field and fed the collected crop material into a baling chamber for compression against the previously formed bales and against the compression structure of the baler. Once the rectangular bale of crop material was formed, the formed bale remained in the bale case to serve as a back stop for the next bale being formed until the formed rectangular bale reached the end of the bale case where the formed bale was dropped back onto the field, although in some configurations of large rectangular balers the formed bale was collected by a trailing apparatus connected to the baler.

Conventional round balers also collect crop material from the field and using an apparatus that can be continuous belts, either a single wide belt or multiple smaller belts, a chain mechanism, or rollers, to form an expandable webbed bale chamber for the formation of a cylindrical bale of crop material within the machine where the serpentine formation of the belt or chain mechanism allow the bale chamber to expand as the bale grows through the addition of crop material into the machine. Other configurations of round balers define a fixed diameter bale chamber, typically utilizing a plurality of rolls mounted circumferentially to define the fixed chamber, and cause the crop material fed therein to roll into a compressed cylindrical bale.

However, all of these conventional round balers form the round bales by layering crop material onto the circumference of the growing round bale with the axis of the round bale being oriented perpendicularly to the direction of travel. Furthermore, all of these conventional round balers eventually had to cease temporarily the operation of collecting crop material so that the fully formed bale could be tied and ejected from the machine. Ejection of the bale typically required the machine to stop forward progress, open a tailgate structure and then force the formed cylindrical bale out of the machine onto the surface of the field to be retrieved later, followed by the closing of the tailgate structure to be able to start the process of making a new round bale. Thus, the conventional round balers did not have the advantage of the rectangular balers in being able to continuously move over the surface of the field to collect crop material therefrom.

Wrapping the formed bales is also a distinction between rectangular and cylindrical bales of crop material. Rectangular bales typically utilize heavy needle mechanisms and associated knotters to position twine or wire around the longitudinal periphery of the formed bale, which becomes tied into a knot or twisted wire to secure the wrapping around the bale. Round balers are typically wrapped in netting material, or with plastic sheeting, to secure the cylindrical periphery of the formed bales. Conventional round balers are provided with net wrapping devices that feed a supply of netting material retained on a roll of the netting material within the device into the bale chamber to be fed around the circumference of the cylindrical bale. Typically, the netting material is wrapped multiple times so that the netting material is retained on the bale after being discharged from the round baler.

Such conventional round balers all have several common problems:
1. There is an operational time loss to wrap and eject the bale from the baler.
2. Expensive and complicated mechanisms are required to form and then quickly eject the formed bale. Some round baler manufacturers have spent considerable effort to obtain a 3 - 5 second reduction in time for ejecting the bale from the round baler.
3. For balers that utilize belts, belt tracking and durability are problems, particularly for the more complicated continuous round balers. With multiple belts, and especially with long multiple belts, problems are encountered with manufacturing consistency and with utilization of the belts in different crop conditions. Belts that travel over rollers have an inherent problem of crop wrapping around the rollers and forcing the belts out of engagement with the rollers. Furthermore, belts have known problems of tracking and will at times roll over and overlap each other causing bale formation and belt life problems.
4. Maintaining a uniform cylindrical bale shape requires the operator to weave the round baler back and forth laterally over the crop windrow so that an even amount of hay will be maintained at both ends of the round bale.
5. Net wrapping systems are complicated and use heavy rolls of netting material that have to be lifted and loaded into an elevated receptacle on the baler.
6. Crop loss, particularly those very valuable leaves and other fines, leak from the baler during operation and are lost from the baling process and fall to the ground.
7. Netting material on conventional balers has to be cut and then restarted for each bale that is formed, which can present problems of getting the netting material restarted and properly spread across the surface of the round bale, or even not wrapping around the bale at all.
8. When the round bale does not get properly wrapped during the wrapping cycle, the operator cannot see that the bale just formed is not getting wrapped, or is being wrapped improperly, as the bale-forming and wrapping chamber is shielded. Accordingly, the operator may not be aware the improper wrapping has occurred until after then round bale has been ejected from the baler.
9. Conventional round balers have known bale core starting issues with each new round bale being formed. Bale cores can start out misshapen and not rotate within the bale chamber, requiring the tailgate to be opened to manually dig the misshapen core from the baler.

Accordingly, a major objective of most manufacturers of conventional round balers is to develop a round baler that is continuously operable to collect crop material from the surface of the field without requiring a stop to eject or discharge the formed bale from the round baler, thus capturing the advantage of operating a rectangular baler. Such a machine has been referred to as a continuous round baler. Conventional round balers have three major cycles, formation of the cylindrical bale, wrapping the formed bale, and ejecting the wrapped bale from the machine. Conventional thought is to add a fourth cycle to the process, the accumulation of the crop material being collected from the field while the machine is going through the wrapping and ejection cycles.

Most of the attempts to create a continuous round baler have centred on the provision of a two chamber round baler such that one chamber can be used to start a new round bale while the other chamber ejects the round bale from the machine. One such attempt was patented by Kenneth R. Underhill in U. S. Patent No. 4,534,285, issuing on August 13, 1985. The chain and slat serpentine mechanism interrupted the flow of hay into the rear bale chamber to start a new bale in a front chamber while the formed bale was being discharged. Once the main bale chamber was emptied, the partially completed bale would be transferred to the rear chamber and completed. This two chamber concept theoretically solved the first problem noted above to end the operational time loss, but worsened the second problem noted above, as this was a very big, heavy, complicated, and expensive machine.

A similar approach was patented by Don Bowden in U. S. Patent No. 4,597,254, issuing on July 1, 1986, and used a disk to rotate an indexing roller from behind the formed bale to a position in front of the formed bale, temporarily creating a new bale-forming chamber while the formed bale was being ejected from the machine. This Bowden machine encountered problems of the newly formed bale in the front chamber growing too fast while the formed bale was being ejected, which was particularly true in heavy crop conditions.

Examples of this conventional thinking can be found in U. S. Patent No. 8,707,865, granted on April 29, 2014, to Scott Oakes in which a surge bin is supported on the frame of the round baler in front of the primary crop pick-up mechanism which collects and feeds crop material into the bale chamber. This surge bin includes a supplemental crop pick-up mechanism that collects crop material into the surge bin where the material accumulates while the baler discharges the previously formed bale. The surge bin then meters the accumulated crop material into the primary crop pick-up mechanism to be transferred into the bale for the bale formation cycle. Although the surge bin does not start the formation of a round bale, as noted for the Underhill and Bowden machines, the surge bin is still part of the two chamber concept allowing incoming hay to be collected in a front chamber while the bale is being ejected from the rear chamber.

A substantially more complex accumulation apparatus is disclosed in U. S. Patent No. 8,733,361, granted to Martin Roberge on May 27, 2014, in which the round baler is provided with first and second bale chambers with associated first and second belt or chain serpentine mechanisms. The first bale chamber is operated to start the formation of a round bale while the second bale chamber wraps and discharges the completed round bale. Then the first chamber transfers the partially finished bale into the second chamber to complete the bale formation cycle. Once completed, the first chamber interrupts the flow of crop material to the second bale chamber to accumulate the crop material by starting a new round bale. This Roberge machine appears to be very heavy and very complex.

A different form of an accumulation chamber is disclosed in U. S. Patent No. 8,291,687, issued on October 23, 2012, and also in U. S. Patent No. 8,413,414, issued on April 9, 2013; in U. S. Patent No. 8,464,509, issued on June 18, 2013; and in U. S. Patent No. 8,544,243, issued on October 1, 2013, to Maynard Herron, et al. The Herron configuration provides an elongated accumulation chamber in which the conventional crop pick-up mechanism is located at a forward end of the accumulation chamber. The incoming hay is simply collected in the elongated accumulation chamber while the previously formed bale is wrapped and discharged from the baler. The problem with this design is that the accumulation chamber has to be very large, especially if accumulating loose crop and operating in heavy crop windrows. Also, the forward ground speed of the round baler has to be slowed enough to be able to feed the accumulated hay from the accumulation chamber along with the hay from a heavy windrow, so that this large amount of crop being inserted into the bale chamber does not plug the machine. Slowing the machine defeats the original reason for having the accumulation chamber which is to speed up the production.

European Patent No. 2556741, published on February 13, 2013, reflects a continuous round baler concept developed by Krone. This Krone machine also incorporates the accumulation chamber concept and the accumulation of loose hay is a difficult thing to properly manipulate. This Krone machine is very large and very complex. The accumulation chamber is disposed at the front to collect loose hay while the bale is being ejected to a rear wrapping platform. Once the tail gate has closed, the accumulated hay it pushed into the bale chamber while the bale on the rear platform is wrapped in plastic and dropped onto the ground.

All of these crop material accumulation devices purportedly accomplish the same goal, i.e. to allow the baler to continue to move forwardly and collect crop material while the non-bale formation cycles are completed, and the bale chamber is ready to re-start the formation of a round bale. While technically the baler does not stop moving in a forward direction, these two chamber concepts are not a truly continuous bale formation process. Furthermore, each of these configurations suffer from the same disadvantages in that the tailgate of the baler must be opened, raising the centre of gravity of the machine, and adding stress on the structural components, while the baler is being moved along the surface of the field.

One skilled in the art will recognize that the surface of an agricultural field is not a smooth, level surface, but instead contains crop mounds, tilling and cultivating furrows and other undulations that cause the machines traveling thereon to bounce and shake significantly. Raising the tailgate of a round baler to discharge a completely formed round bale, which can weigh more than one thousand pounds, while the round baler is moving across the undulating surface of an agricultural field, magnifies the stress that has to be carried by the frame and other structural components of the round baler. Thus, not only is durability brought into question, but stability and safety are also significant factors.

European Patent Publication No. 0268002, published on May 25, 1988; European Patent Publication No. 0268003, published May 25, 1988; and European Patent Publication No. 0270726, published on June 15, 1988, disclose a concept developed by Deere & Company whereby a conical bale-forming chamber formed from tapered rollers receives hay from the field via a conventional pick-up mechanism to create a spirally formed, cylindrically shaped bale. The frusto-conical bale-forming chamber is oriented such that the lower angled side thereof is parallel to the ground to facilitate the feed of crop into the conical chamber. Crop moves from the conical bale-forming chamber into a cylindrical fixed diameter chamber formed by rollers in alignment with the large ends of the tapered rollers in the conical bale-forming chamber. The cylindrical portion extends upwardly at a 10 to 30 degree angle to the ground to provide an elevated end so that the discharge can be made directly onto a wagon or transporter. A density control mechanism is disclosed along with the discharge of the formed cylindrical bale radially from the cylindrical chamber.

In European Publication 0268003, a bale cut-off mechanism is disclosed as being located near the conical bale chamber, although the specification does not disclose how the cylindrical rollers are to be supported next to the opening for insertion of the cutting mechanism. In European Publication 0268002, a bale cut-off mechanism is disclosed at the downstream end of the cylindrical bale chamber, although the specification does not disclose how the formed round bale is to be supported before and while being cut. WO 2016089546 discloses a further example of round baler having a conical forming chamber.

A problem that has been encountered with round balers that form the round bale along the axis of the bale is that the spirally layers formed in the conical bale-forming chamber tend to push crop material along the central axis of the bale due to the compressive forces of the outer net wrapping against the conical layers of the bale, creating a phenomenon referred to as "bale end bulge". While the bulge of crop material at the centre axis is not disruptive of the utilization of the bale, the appearance of the bulged end of the bale is not believed to be commercially acceptable.

### SUMMARY OF THE INVENTION

According to the invention there is provided a round baler operable to form an axially extending round bale from crop material comprising:
a frame;
a conical bale-forming chamber defining a central geometrical axis, and formed from a plurality of tapered rolls arranged in a generally circular array, the conical bale-forming chamber being carried on the frame and being configured to receive crop material therein, to form the crop material into a round bale and to urge the round bale axially therefrom;
a cylindrical bale-forming chamber formed from a plurality of cylindrical rolls arranged in a generally circular array, the cylindrical bale-forming chamber being in communication with said conical bale-forming chamber to receive a protrusion of said round bale urged from the conical bale-forming chamber and to produce the round bale of crop material axially extending from the cylindrical bale-forming chamber;
a crop pick-up mechanism for picking up crop material from the ground; and
a crop conveying means receiving crop material from said crop pick-up mechanism and presenting said crop material to said conical bale-forming chamber in a generally transverse direction transversely relative to the central geometrical axis of the conical bale-forming chamber;
wherein
an infeed apparatus is provided that lifts the crop material from said crop conveying means and feeds the crop material into said conical bale-forming chamber.

In one embodiment of the invention the infeed apparatus is configured to feed the crop material into the cylindrical bale-forming chamber.

In another embodiment of the invention the conical bale-forming chamber extends between an upstream end and a downstream end relative to the direction in which crop material is urged axially therethrough

Preferably, the crop conveying means is configured to receive the crop material from the pick-up mechanism in a longitudinal direction parallel to the normal direction of travel of said frame, and to direct the crop material to travel in a transverse direction transversely of the normal direction of travel of said frame, so that when the crop material is presented to the conical bale-forming chamber, the crop material is presented to the conical bale-forming chamber travelling in the said transverse direction.

Advantageously, the crop conveying means comprises a rotary feed table, rotatably mounted to receive crop material from the pick-up means, and to present the crop material to the conical bale-forming chamber as the rotary feed table rotates.

Preferably, the rotary feed table is configured to receive the crop material from the pick-up means in an inwardly radial direction relative to the rotary feed table.

Advantageously, the rotary feed table is rotatable about a central rotational axis.

Advantageously, the upstream end of the conical bale-forming chamber is located adjacent the central rotational axis of the rotary feed table.

Preferably, the conical bale-forming chamber extends radially relative to the rotary feed table.

**In** one embodiment of the invention the rotary feed table is formed with a plurality of arcuate starter strips mounted on the upper surface of said rotary feed table to urge crop material on said rotary feed table outwardly upon rotation thereof.

**In** another embodiment of the invention the infeed apparatus comprises a feed roll supported above said crop conveying means adjacent said conical bale-forming chamber to direct said crop material from said crop conveying means into said conical bale-forming chamber.

Preferably, the feed roll is configured to direct the crop material from the crop conveying means into the cylindrical bale-forming chamber.

In one embodiment of the invention said feed roll comprises:
a first conical portion adjacent the conical bale-forming chamber, and operable to direct said crop material from the crop conveying means into said conical bale-forming chamber; and
a second conical portion located axially aligned with said first conical portion and located adjacent the cylindrical bale-forming chamber, the second conical portion being operable to direct said crop material into an upstream portion of said cylindrical bale-forming chamber, relative to the direction of travel of the axially extending round bale.

In another embodiment of the invention the infeed apparatus comprises a pinch roller apparatus supported above said crop conveying means to cooperate with said feed roll to direct said crop material into said conical bale-forming chamber, said crop material passing beneath said pinch roller apparatus before engaging said feed roll.

Preferably, the pinch roller apparatus is cooperable with the feed roll to direct the crop material from the crop conveying means into the cylindrical bale-forming chamber.

Advantageously, the pinch roller apparatus comprises at least one pinch roller member cooperable with the feed roll for urging crop material into the conical bale-forming chamber.

Advantageously, the pinch roller apparatus comprises at least two pinch roller members, one of the pinch roller members being cooperable with the feed roll for urging crop material into the conical bale-forming chamber, and the other one of the pinch roller members being cooperable with the feed roll for urging the crop material into the cylindrical bale-forming chamber.

Ideally, said pinch roller apparatus comprises three pinch roller members, a first pinch roller member and a second pinch roller member of said three pinch roller members being cooperable with the feed roll for urging crop material into the conical bale chamber, and a third pinch roller member of the three pinch roller members being cooperable with the feed roll for urging crop material into said cylindrical bale-forming chamber.

Preferably, each of the pinch roller members, which cooperate with the feed roll for urging the crop material into the conical bale-forming chamber, cooperates with the first conical portion of the feed roll.

Advantageously, each of the pinch roller members which cooperate with the feed roll for urging the crop material into the cylindrical bale-forming chamber, cooperates with the second conical portion of the feed roll.

Ideally, each respective pinch roller member is independently mounted for vertical pivotal movement to accommodate varying depths of the crop material passing underneath said pinch roller member.

In an alternative embodiment of the invention the infeed apparatus comprises a starter roll oriented to extend above the crop conveying means and being located relative to the feed roll so that the crop material passes beneath the starter roll before engaging the feed roll, said starter roll having a plurality of circumferentially extending flaps that compress the crop material onto the crop conveying means, said starter roll being rotated in a direction that enables a lower surface of said starter roll to move in the same direction as the crop conveying means beneath said starter roll, the starter roll being cooperable with the feed roll to elevate crop material passing beneath the starter roll into said conical bale-forming chamber.

In another embodiment of the invention the round baler further comprises a crop distribution device to distribute said crop material in a desired manner on said crop conveying means, the crop distribution device being supported on the frame above the crop conveying means, upstream of the infeed apparatus relative to the direction of flow of the crop material on the crop conveying means.

Preferably, the crop distribution device is located upstream of the infeed apparatus relative to the direction of flow of the crop material on the crop conveying means.

Advantageously, said crop distribution device comprises an auger oriented generally transversely relative to the flow of the crop material on the crop conveying means, said auger being positioned to engage said crop material as said crop material passes beneath said auger, said auger having helical flighting that engages said crop material to move said crop material generally transversely relative to the flow of the crop material on the crop conveying means.

Preferably, said auger is powered in rotation by a variable speed motor to vary the operation of said auger to distribute said crop material on the crop conveying means.

Advantageously, said auger is pivotally mounted for vertical movement relative to said crop conveying means to accommodate varying depths of said crop material on said crop conveying means.

Ideally, the auger is oriented generally radially relative to the rotary feed table.

In another embodiment of the invention a gauge wheel is rotatably supported to ride on top of the crop material on the crop conveying means, the gauge wheel being pivotally mounted for vertical movement in response to the depth of the crop material passing beneath said gauge wheel, and being operatively connected to the rolls of the conical and cylindrical bale-forming chambers to control the speed of operation thereof in response to the depth of the crop material on the crop conveying means.

Preferably, the gauge wheel is located upstream of the infeed apparatus relative to the flow of crop material on said crop conveying means.

Advantageously, the gauge wheel is located between the infeed apparatus and the crop distribution device.

In another embodiment of the invention a windguard is located above the crop conveying means and is vertically moveable to control the flow of the crop material on the crop conveying means. Preferably, the windguard is mounted to said gauge wheel and is vertically movable therewith, said windguard extending downstream from said gauge wheel toward said infeed apparatus. Advantageously, the windguard is pivotally mounted on the gauge wheel.

In another embodiment of the invention a severance mechanism is operable to sever the cylindrical bale extending axially from the cylindrical bale-forming chamber to form the round bale therefrom.

Preferably, the severance mechanism is operable to engage the axially extending round bale when sufficient length has protruded from the cylindrical bale-forming chamber to sever a selected length of said axially extending bale for discharge to the ground.

Advantageously, the severance mechanism is configured to travel with the round bale extending axially from the cylindrical bale-forming chamber during severing thereof.

In one embodiment of the invention the severance mechanism comprises a severance frame and at least one knife supported on the severance frame for engaging the axially extending round bale circumferentially and being configured for urging radially through the axially extending round bale to the centre thereof.

Preferably, a pair of knives are supported in said severance frame for engaging the axially extending round bale circumferentially and being configured for urging radially through the axially extending round bale to the centre thereof.

In another embodiment of the invention the frame comprises a telescoping beam oriented longitudinally and upwardly in a rearward direction, said telescoping beam having a fixed outer member and an inner telescoping member extendable rearwardly from the fixed outer member.

Preferably, the severance mechanism is mounted on the inner telescoping member for accommodating travel of the severance mechanism with the axially extending round bale during severing thereof.

In one embodiment of the invention the severance mechanism comprises:
a generally circular severance frame having an opening therethrough for the passage of the axially extending round bale protruding therethrough from said cylindrical bale-forming chamber,
a slide collar forming part of said severance frame being positioned for the passage of said inner telescoping member therethrough;
a latch mechanism connecting said slide collar to said fixed outer member of the telescoping beam so that any extension of said inner telescoping member corresponding to the growth of said axially extending round bale from said cylindrical bale-forming chamber slides through the slide collar until the latch mechanism is released;
an actuator connected to said inner telescoping member and sliding through said severance frame while said latch mechanism retains said slide collar against said fixed outer member of the telescoping beam, said actuator including a trip member that engages said latch mechanism to release said severance frame from said fixed outer member of the telescoping beam when a predetermined length of said inner telescoping member has extended from said fixed outer member; and
the at least one knife is engageable with said axially extending round bale when said latch mechanism is released to sever a selected length of said axially extending round bale for discharge therefrom.

Preferably, a drop assist apparatus is supported on the frame below the axially extending round bale to receive the severed round bale and deposit the severed round bale on the ground rearwardly of said frame.

Advantageously, a damping means is provided to damp downward movement of the drop assist apparatus for retarding the downward movement of the drop assist apparatus for in turn slowly lowering the severed round bale to the ground.

In one embodiment of the invention the drop assist apparatus comprises a receiver formed by a pair of laterally spaced apart support arms adapted to receive said severed bale.

Preferably, a lateral flange projects upwardly and outwardly from each of said support arms for guiding the severed round bale onto said support arms.

Preferably, the drop assist apparatus is pivotally mounted on the frame by a pivot bar for pivoting of the drop assist apparatus towards the ground.

Advantageously, the round baler further comprises a slide plate affixed to the severance mechanism below the axially extending round bale for guiding a severed round bale onto the drop assist apparatus.

In another embodiment of the invention a rotatably mounted distal bale support member is engageable with a distal end face of the axially extending round bale protruding from the cylindrical bale-forming chamber, and is configured to move axially with and to rotate with the axially extending round bale. Preferably, a pressure inducing means is cooperable with the distal bale support member for applying a pressure to the axially extending round bale adjacent the distal end thereof in a direction towards the conical bale-forming chamber to retard the advancement of the axially extending round bale in order to control a density parameter of the crop material within the axially extending round bale.

Advantageously, a drive apparatus is provided to rotate the distal bale support member in response to activation of the bale severance mechanism.

In another embodiment of the invention the cylindrical bale chamber is configured to be selectively operable to form axially extending round bales of at least two different bale diameters.

Preferably, the cylindrical bale-forming chamber is formed by two opposing partly semi-circular arrays of the cylindrical rolls, a first one of the partly semi-circular arrays defining a left side of said cylindrical bale-forming chamber and being pivotally mounted for movement about a first pivot, and a second one of the partly semi-circular arrays defining a right side of the cylindrical bale-forming chamber, and being pivotally mounted for movement about a second pivot, said first and second partly semi-circular arrays being selectively pivotally movable between a first diameter position and a second diameter position for formation of said axially extending round bale of the selectable diameters.

Advantageously, each of said first and second partly semi-circular arrays terminate at respective distal ends that are spaced apart around a selected portion of a perimeter of said cylindrical bale-forming chamber, said round baler further comprising:
an arcuate guide member connected to a distal end of one of said partly semi-circular arrays to be movable therewith, said guide member being positioned to correspond to at least a portion of the distance between the distal ends of said first and second partly semi-circular arrays.

Advantageously, each respective partly semi-circular array comprises:
a forward sledge arm and a rearward sledge arm having the corresponding cylindrical rollers rotatably mounted therebetween, the first pivot being located below said sledge arms for said second partly semi-circular array and said second pivot being located outboard of said first partly semi-circular array such that the respective sledge arms of said arrays overlap.

**In** one embodiment of the invention each cylindrical roll of the cylindrical bale-forming chamber is formed with a plurality of sides extending longitudinally, adjacent sides being joined longitudinally to define a corresponding one of a plurality of apices extending longitudinally along the roll.

Advantageously, each conical roll of the conical bale-forming chamber is formed with a plurality of longitudinally tapering sides, adjacent sides being joined longitudinally to define a corresponding one of a plurality of apices extending longitudinally along the roll.

Preferably, the cylindrical bale-forming chamber is located rearwardly of the conical bale-forming chamber relative to the normal direction of travel of the frame.

Advantageously, the cylindrical bale-forming chamber defines a central geometrical axis coinciding with the central geometrical axis of the conical bale-forming chamber.

Advantageously, the central geometrical axis of the conical bale-forming chamber extends in a generally upwardly rearwardly direction relative to the normal forward direction of movement of the frame.

In one embodiment of the invention a wrapping mechanism is provided for wrapping the axially extending round bale. Preferably, the wrapping mechanism is cooperable with the cylindrical rolls of the cylindrical bale-forming chamber for circumferentially wrapping the wrapping material around the outer peripheral circumferential surface of the axially extending round bale.

Advantageously, the wrapping mechanism is configured for wrapping the wrapping material around the axially extending round bale as the axially extending round bale is progressing through the cylindrical bale-forming chamber.

Preferably, the wrapping mechanism is configured for wrapping the wrapping material around the axially extending round bale downstream of the infeed apparatus.

Advantageously, the wrapping mechanism is configured for dispensing one of a netting material, a wrapping film and twine.

In one embodiment of the invention the round baler is configured for continuous operation.

In one embodiment of the invention the crop feeding mechanism continues to feed crop material into the conical bale-forming chamber while the severance mechanism is operating to sever the selected length of the axially extending round bale. Preferably, the cylindrical bale-forming chamber is axially aligned with the conical bale-forming chamber.

Preferably, the starter roll is oriented to extend over the feed table, said starter roll having a plurality of circumferentially extending flaps that compress the crop material onto the surface of the feed table, said starter roll being rotated in a direction that enables a lower surface of said starter roll to move in the same direction as the feed table beneath said starter roll; and the feed roll is adjacent said starter roll and is located downstream of said starter roll with respect to the direction of travel of the crop material on said feed table, said feed roll having a tapered shape to conform to the conical bale-forming chamber and being operable to elevate crop material compressed by said starter roll into said conical bale-forming chamber.

Preferably, said feed table is provided with at least one infeed enhancing device operable to direct crop material radially across said feed table to establish a desired distribution of crop material over said feed table in order to provide an effective delivery of crop material to said conical bale chamber.

Advantageously, said feed table is formed with a plurality of arcuate starter strips mounted on the upper surface of said feed table to urge crop material on said feed table outwardly upon rotation of said feed table.

Preferably, at least one infeed enhancing device includes an auger distribution device oriented generally radially with respect to said feed table and positioned above said feed table, said auger distribution device having helical flighting to direct crop material toward an inner portion of said feed table and to assist in moving crop material rearwardly along said feed table.

Preferably, said starter roll is formed from at least three pinch rollers mounted above said feed table upstream of said feed roll with respect to the direction of travel of said crop material on said feed table, at least two of said pinch rollers being directly engaged with said feed roll to assist in feeding said crop material into said conical and cylindrical bale chambers.

In one embodiment of the invention said pinch rollers are mounted for independent vertical pivotal movement to accommodate a passage of various volumes of crop material between said pinch rollers and said feed table.

Preferably, the starter roll comprising a plurality of circumferentially spaced apart radial flaps extending radially from the starter roll, the radial flaps being configured to compress the crop material between the radial extending flaps and the surface of the feed table. Advantageously, the radial flaps of the starter roll comprise a resilient material, or alternatively comprise a flexible material, or comprise both a partly resilient material and a partly flexible material. Preferably, the starter roll is rotatable in a direction that enables a lower surface of the starter roll to move in substantially the same direction as the feed table beneath the starter roll.

In another embodiment of the invention the radially extending flaps extending from the starter roll extend substantially the length of the starter roll.

In another embodiment of the invention the radial length of the radial flaps extending from the starter roll increases from the respective opposite ends of the starter roll to an intermediate location intermediate the respective opposite ends of the starter roll. Preferably, the intermediate location is substantially midway between the respective opposite ends of the starter roll.

Preferably, the starter roll comprises a tapered roll tapering in an upstream direction relative to the movement of the axially extending round bale from the conical bale-forming chamber.

In one embodiment of the invention the feed roll comprises a first tapered roll, and preferably, conforms to the conical bale-forming chamber, and advantageously, is located and operable to elevate crop material compressed by the starter roll into the conical bale-forming chamber.

In one embodiment of the invention the first feed roll comprises a plurality of circumferentially spaced apart radially extending flaps extending therefrom, and preferably, the radially extending flaps extending from the first feed roll cooperate with the radial flaps extending from the starter roll for elevating the crop material into the conical bale-forming chamber.

In one embodiment of the invention the radially extending flaps extending from the first feed roll extend substantially the length of the first feed roll. Preferably, the radially extending flaps extending from the first feed roll comprise a resilient material, or alternatively, comprise a flexible material, or comprise both a partly resilient material and a partly flexible material.

In one embodiment of the invention the first feed roll comprises a forward or upstream conical portion of the feed roll, the term upstream being relative to the direction through which the forming bale of the crop material is being urged through the conical bale-forming chamber.

In another embodiment of the invention an inlet slot is provided into the conical bale-forming chamber for accommodating the crop material into the bale-forming chamber, and preferably, the inlet slot is defined between an adjacent pair of the tapered rolls defining the conical bale-forming chamber. Advantageously, the inlet slot extends substantially the length of the conical bale-forming chamber. Advantageously, the inlet slot to the conical bale-forming chamber is located at the lowest location of the conical bale-forming chamber, and preferably, substantially directly above the crop conveying means.

In another embodiment of the invention the rotary feed table is rotatably mounted beneath the conical bale-forming chamber, and preferably, the inlet slot to the conical bale-forming chamber extends substantially radially relative to the feed table, and preferably, the inlet slot extends from a location adjacent but slightly radially spaced apart from the rotational axis of the feed table to a location towards an outer periphery of the feed table, and preferably, adjacent but spaced apart above the periphery of the feed table.

In one embodiment of the invention the rotary feed table is circular.

In one embodiment of the invention the starter strips on the rotary feed table are configured as outwardly extending spiral segments.

Preferably, the crop pick-up mechanism is configured to deliver crop material onto the feed table adjacent a front portion thereof, and the conical bale-forming chamber is located above the feed table adjacent a rearward portion thereof.

In one embodiment of the invention the baler comprises a frame, and the conical and cylindrical bale-forming chambers are supported on the frame, and advantageously, the feed table is rotatably mounted on the frame.

Advantageously, a pressure inducing means is cooperable with the bale support member for applying a pressure to the axially extending round bale adjacent the distal end thereof in a direction towards the conical bale-forming chamber to retard the advancement of the axially extending round bale in order to control a density parameter of the crop material within the axially extending round bale. Preferably, the pressure inducing means comprises a hydraulic ram operably connected between the inner telescoping member and the fixed outer member of the telescoping beam for applying a pressure to the distal bale support member in a direction towards the conical bale-forming chamber. Advantageously, the inner telescoping member is connected to a hydraulic ram for operating the inner telescoping member inwardly and outwardly relative to the fixed outer member, and preferably, for applying the pressure to the distal bale support member.

Advantageously, the hydraulic ram is configured for urging the inner telescoping member into the fixed outer member on the severance mechanism having severed a selected length of the axially extending round bale.

In another embodiment of the invention the infeed apparatus for feeding crop material into the conical bale-forming chamber is further configured to feed crop material into the cylindrical bale-forming chamber.

In one embodiment of the invention the infeed apparatus comprises a second feed roll for feeding the crop material into the cylindrical bale-forming chamber. Preferably, the second feed roll comprises a tapered roll tapering in an upstream direction relative to the movement of the axially extending round bale from the conical bale-forming chamber, and preferably, the second feed roll is coaxial with the first feed roll, and preferably, is driven with the first feed roll. Preferably, the first and second feed rolls are located on a common shaft, and advantageously, the second feed roll is located on the shaft downstream of the first feed roll relative to the direction of movement of the axially extending round bale from the conical bale-forming chamber.

In one embodiment of the invention the second feed roll comprises a rearward or downstream conical portion of the feed roll.

Preferably, the second feed roll comprises a plurality of circumferentially spaced apart radially extending flaps configured for urging crop material into the cylindrical bale-forming chamber.

In one embodiment of the invention the radially extending flaps extending from the second feed roll extend substantially the length of the second feed roll. In another embodiment of the invention the radially extending flaps extending from the second feed roll comprise a resilient material, or alternatively comprise a flexible material, or comprise both a partly resilient material and a partly flexible material.

Preferably, the second feed roll is configured to deliver the crop material into the cylindrical bale-forming chamber adjacent an upstream end thereof with respect to the direction of movement of the axially extending round bale from the cylindrical bale-forming chamber.

In a further embodiment of the invention an assist roll is located adjacent the second feed roll for cooperating with the feed table and the second feed roll for delivering the crop material from the feed table into the cylindrical bale-forming chamber.

In another embodiment of the invention the assist roll tapers in an upstream direction relative to the direction of movement of the axially extending round bale from the conical bale-forming chamber, and preferably, the assist roll comprising a plurality of circumferentially spaced apart radially extending flaps extending radially from the assist roll. Advantageously, the radially extending flaps extending from the assist roll cooperate with the radially extending flaps extending from the second feed roll for urging the crop material into the cylindrical bale-forming chamber.

In one embodiment of the invention the radially extending flaps extending radially from the assist roll extend substantially the length of the assist roll. In another embodiment of the invention the radially extending flaps extending from the assist roll comprise a resilient material, or alternatively, comprise a flexible material or comprise a partly resilient and a partly flexible material.

In another embodiment of the invention the assist roll is located closer to the feed table than the second feed roll.

In a further embodiment of the invention the axial length of the assist roll is substantially similar to the axial length of the second feed roll.

In another embodiment of the invention the starter roll cooperates with the assist roll for urging crop material from the feed table to the second feed roll.

In another embodiment of the invention an inlet slot is provided to the cylindrical bale-forming chamber for receiving the crop material from the second feed roll. Preferably, the inlet slot to the cylindrical bale-forming chamber is defined between an adjacent pair of the cylindrical rolls of the cylindrical bale-forming chamber.

In one embodiment of the invention the wrapping mechanism is configured for dispensing a netting material, and in another embodiment of the invention the wrapping mechanism is configured for dispensing a wrapping film, preferably, of a plastics material, and advantageously, of an adhesive coated plastics material.

In another embodiment of the invention the severance mechanism comprises a stabilising mechanism, and preferably, the stabilising mechanism is configured in order to offset tilting movement of the severance frame induced by gravity and twisting movement induced by the operation of the knives to sever a selected portion of the forming bale. Preferably, the stabilising mechanism is associated with a lower portion of the severance frame.

In another embodiment of the invention the stabilising mechanism comprises a stabiliser fin mounted on the severance frame, and preferably, mounted on a lower portion of the severance frame. Advantageously, the stabilising fin being engageable with a slotted bracket extending from the frame of the round baler to resist the twisting movement of the said severance frame.

In another embodiment of the invention the stabilising mechanism comprises a weight offset apparatus connected to the severance frame, and preferably, to the lower portion of the severance frame, and preferably, the weight offset mechanism comprises a crank pivotally mounted on the frame of the round baler, a spring assembly operable to assert a consistent spring force to said crank irrespective of the position of the severance frame and a link interconnecting the crank with the severance frame, and preferably, with a lower portion of the severance frame to provide a substantially constant offset of the weight of the severance frame to allow the severance frame to move with the said inner telescoping member in a perpendicular orientation thereto.

In a further embodiment of the invention the frame of the round baler is supported on a pair of ground engaging wheels, and advantageously, the round baler is configured for towing by a prime mover.

### ADVANTAGES OF THE INVENTION

The advantages of the invention are many. The round baler according to the invention provides a continuous output of round bales without having to deactivate the bale-forming chambers during delivery of the round bale from the cylindrical bale-forming chamber or during severing of the round bale, since the round bale is continuously extruded from the cylindrical bale-forming chamber and is severed as it is being continuously extruded. In other words, the round baler according to the invention allows for continuous operation. There is no need to stop the baler while a bale is being severed and/or discharged. The round baler can be continuously towed by a towing vehicle along a sward of crop material and can continuously pick-up the sward of crop material while the bale is being formed and severed and discharged from the baler. This is achieved by virtue of the fact that the bale is continuously axially urged and extruded from the cylindrical bale-forming chamber, and a bale is severed from the axially extending bale as the axially extending bale is being extruded.

A further advantage of the round baler according to the invention is the fact that the round bale is wrapped before severing thereby producing a circumferentially wrapped round bale. Another advantage of some embodiments of the round baler according to the invention is that round bales of different diameter can be produced by the baler. Another advantage of the round baler according to the invention is that the axial length of the round bales being formed by the round baler is selectable, and the round baler can be readily configured to form bales of any desired length.

Other advantages of the invention will become readily apparent from the following description of some embodiments thereof.

### BRIEF DESCRIPTION OF THE DRAWINGS

The advantages of this invention will become apparent upon consideration of the following detailed disclosure of the invention, especially when taken in conjunction with the accompanying drawings wherein:
Fig. 1 is front elevational view of a continuous round baler incorporating the principles of the instant invention;
Fig. 2 is a left side elevational view of the continuous round baler shown in Fig. 1;
Fig. 3 is a right side elevational view of the continuous round baler shown in Fig. 1;
Fig. 4 is a rear elevational view of the continuous round baler shown in Fig. 1;
Fig. 5 is a left, front perspective view of the continuous round baler shown in Fig. 1;
Fig. 6 is a right rear perspective view of the continuous round baler shown in Fig. 1;
Fig. 7 is a rear view of the continuous round baler looking into the axis of the conical and cylindrical bale-forming chambers which are covered by the distal or rear bale support plate;
Fig. 8 is a rear view similar to that of Fig. 7, but having the distal or rear support plate removed to show the cylindrical bale-forming chamber;
Fig. 9 is a rear view similar to that of Fig. 7, but looking below the distal or rear support plate and the cylindrical bale-forming chamber to show the conical bale-forming chamber;
Fig. 10 is a rear view similar to that of Fig. 7, but having the distal or rear support plate removed for purposes of clarity, and having the cylindrical bale-forming chamber placed into an orientation to form a four foot bale diameter round bale, the round bale being shown schematically;
Fig. 11 is a rear view similar to that of Fig. 7, but having the distal or rear support plate removed for purposes of clarity, and having the cylindrical bale-forming chamber placed into an orientation to form a five foot bale diameter round bale, the round bale being shown schematically;
Fig. 12 is a vertical, longitudinal cross-sectional view of the continuous round baler incorporating the principles of the instant invention, showing the left side of the continuous round baler;
Fig. 13 is a vertical, longitudinal cross-sectional view of the continuous round baler incorporating the principles of the instant invention, showing the right side of the continuous round baler;
Fig. 14 is an enlarged detail view of the primary drive mechanism, the drive transfer members between opposing sprockets being removed for purposes of clarity;
Fig. 15 is an enlarged detail view of the planetary drive mechanism powered from the primary drive to operate the conical rollers in the conical bale-forming chamber, the drive transfer members between opposing sprockets being removed for purposes of clarity;
Fig. 16 is an enlarged detail view of the drive member underneath of the drive sprocket;
Fig. 17 is an enlarged detail view of the drive mechanism for the feed table and crop pick-up mechanism, the drive transfer members between opposing sprockets being removed for purposes of clarity;
Fig. 18 is a rear view of the continuous round baler aligned with the central axis of the formed round baler to depict the drive mechanism for the cylindrical rollers;
Fig. 19 is an enlarged detail view of the supplemental drive mechanism for powering the feed roll and the corresponding assist roll;
Fig. 20 is a schematic perspective view of the severance mechanism;
Fig. 21 is a schematic perspective view of the severance mechanism with the rearward portion of the housing broken away to show the internal knives and hydraulic actuators in the retracted position;
Fig. 22 is a schematic view of the severance mechanism similar to that of Fig. 21, but depicting the movement of the severance mechanism in the full, completed cut position;
Fig. 23 is a rear view of the continuous round baler with the rear support plate removed for purposes of clarity to show the orientation of the severance mechanism in the full cut position relative to a formed round bale within the cylindrical bale-forming chamber and the stabilizing mechanism at the bottom of the severance mechanism frame;
Fig. 24 is a right side elevational view of the continuous round baler showing the latch apparatus associated with the bale severance mechanism;
Fig. 25 is an enlarged detail view showing a side elevational view of the bale severance latch being released by the actuator trip;
Fig. 25A is an enlarged detail view of the latch apparatus being released by the actuator trip;
Fig. 26 is an enlarged view of the latch apparatus shown in Fig. 24 but with the severance mechanism having completed the severance of the round bale from the forming bale;
Fig. 27 is an enlarged detail view of the latch mechanism shown in Fig. 24 being reset with the retraction of the severance mechanism to its home position;
Fig. 28 is an enlarged view of the stabilization mechanism for the bottom portion of the severance mechanism with the severance mechanism being in the home position;
Fig. 29 is an enlarged view similar to that of Fig. 28, but with the severance mechanism being moved to the forward position where the round bale is severed from the forming bale;
Fig. 30 is an enlarged plan view of the weight offset mechanism connected to the bottom of the severance mechanism frame with the severance mechanism being in the home position;
Fig. 31 is an enlarged plan view of the weight offset mechanism shown in Fig. 30, but with the severance mechanism moved to the forward position where the round bale has been severed from the forming bale;
Fig. 32 is an enlarged perspective view of the weight offset mechanism in the forward position;
Fig. 33 is a schematic perspective view of the feed table, crop feeding mechanism, and conical and cylindrical bale-forming chambers with frame and other components removed for purposes of clarity;
Fig. 34 is a schematic perspective view of the feed table and the mechanism for feeding crop into the bale-forming chambers with the frame and other components removed for purposes of clarity;
Fig. 35 is a schematic perspective view similar to that of Fig. 34, but looking in the direction of the mechanism for feeding crop material into the bale-forming chambers;
Fig. 36 is a schematic upper rear perspective schematic view of the continuous round baler to depict the flow of crop material into the conical bale-forming chamber;
Fig. 37 is a schematic view of the feed table, feed roll and bale-forming chambers similar to Fig. 33 but showing the flow of crop material;
Fig. 38 is a left, rear perspective schematic view of the continuous round baler with the round bale beginning to protrude from the cylindrical bale-forming chamber;
Fig. 39 is a left, rear perspective schematic view showing the full formation of a round bale and the instigation of the severance mechanism to discharge the formed round bale;
Fig. 40 is a left, rear perspective schematic view showing the completion of the severance mechanism to the full cut position;
Fig. 41 is a left, rear perspective schematic view showing the release of the formed and severed round bale;
Fig. 42 is a left, rear perspective schematic view showing the retraction of the rear bale support plate and severance mechanism to engage the rearward end of the bale beginning to protrude from the cylindrical bale-forming chamber;
Fig. 43 is a schematic cross-sectional view of a round bale being formed according to the principles of the instant invention;
Fig. 44 is a perspective view of a continuous round baler according to another embodiment of the invention with much of the structure of the drive mechanism and the two bale chambers being removed for the purpose of clarity to reveal a plurality of devices whose function is to improve the mechanism for feeding crop material from the pick-up mechanism into the conical and cylindrical bale chambers;
Fig. 45 is an upper front perspective view of the continuous round baler as shown in Fig. 44;
Fig. 46 is a perspective view similar to that of Fig. 44 of the baler of Fig. 44, but showing only an auger distribution device overlying the feed table;
Fig. 47 is an enlarged detail view of the auger distribution device depicted in Fig. 46;
Fig. 48 is an upper front perspective view similar to that of Fig. 45, but showing only the gauge wheel for controlling the rotational speed of the rollers forming the bale chambers;
Fig. 49 is a partial side perspective view of the continuous round baler of Fig. 44 with much of the central part of the machine and the bale chambers removed for purposes of clarity, with the gauge wheel being the only infeed enhancing components being shown;
Fig. 50 is a partial side elevational view similar to that shown in Fig. 49 of the continuous round baler of Fig. 44 showing the gauge wheel in a lowermost position riding on the rotary feed table;
Fig. 51 is a partial side elevational view of the continuous round baler of Fig. 44 as depicted in Fig. 50, but with the gauge wheel shown in a raised position, corresponding to a heavy flow of crop material being conveyed on the rotary feed table;
Fig. 52 is an enlarged partial top plan view of the baler of Fig. 44 with portions of the bale chambers removed for purposes of clarity to view an alternative pinch roller embodiment to assist in the feeding of crop material into the bale chambers;
Fig. 53 is a partial perspective view similar to that of Fig. 44 of the continuous round baler of Fig. 44 depicting the alternative embodiment of the pinch rollers shown in Fig. 52;
Fig. 54 is a partial perspective view similar to that shown in Fig. 53 of the continuous round baler of Fig. 44 but showing the centre pinch roller pivoted upwardly corresponding to an increased thickness in the flow of crop material on the rotary feed table;
Fig. 55 is an enlarged elevational detail view of the alternative pinch roller embodiment of the baler of Fig. 44;
Fig. 56 is an enlarged detail elevational view of the baler of Fig. 44 showing an optional infeed enhancing component formed as a windguard mounted on the gauge wheel and positioned between the gauge wheel and the pinch rollers;
Fig. 57 is an enlarged detail view of the windguard device shown in Fig. 56;
Fig. 58 is an upper front perspective view similar to that of Fig. 45 of the continuous round baler of Fig. 44 showing the flow of crop material from in front of the pick-up mechanism, under the infeed enhancing components and into the bale chambers;
Fig. 59 is a right, rear perspective view of the continuous round baler of Fig. 44 having a drive apparatus mounted for selective rotation of the distal or rear bale support member, and a bale discharge drop assist mechanism;
Fig. 60 is a perspective view of the baler of Fig. 44 showing the rear bale support member having the drive apparatus mounted for selective rotation thereof;
Fig. 61 is a side elevational view of the rear bale support member shown in Fig. 60;
Fig. 62 is a left rear perspective view of the continuous round baler of Fig. 44 having a drive apparatus mounted for selective rotation of the rear bale support member, and a bale discharge drop assist mechanism;
Fig. 63 is a left, rear perspective view of the continuous round baler of Fig. 44 demonstrating a first stage of operation of the bale discharge drop assist mechanism;
Fig. 64 is a left, rear perspective view of the continuous round baler of Fig. 44 demonstrating a second stage of operation of the bale discharge drop assist mechanism;
Fig. 65 is a left, rear perspective view of the continuous round baler of Fig. 44 demonstrating a third stage of operation of the bale discharge drop assist mechanism;
Fig. 66 is a left, rear perspective view of the continuous round baler of Fig. 44 demonstrating a fourth stage of operation of the bale discharge drop assist mechanism; and
Fig. 67 is a perspective view of the receiver forming part of the bale discharge drop assist mechanism of the baler of Fig. 44.

### DETAILED DESCRIPTION OF THE PREFERRED EMBODIMENTS

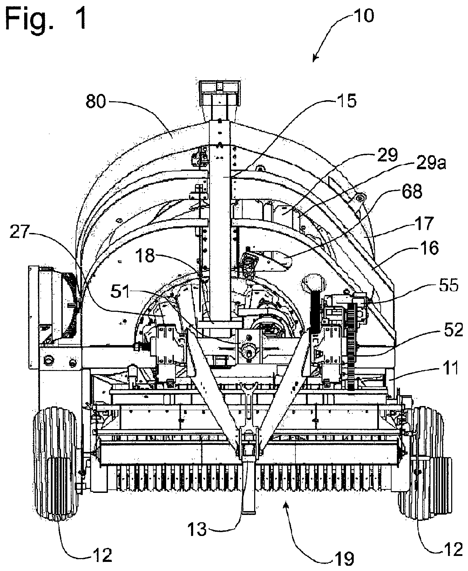

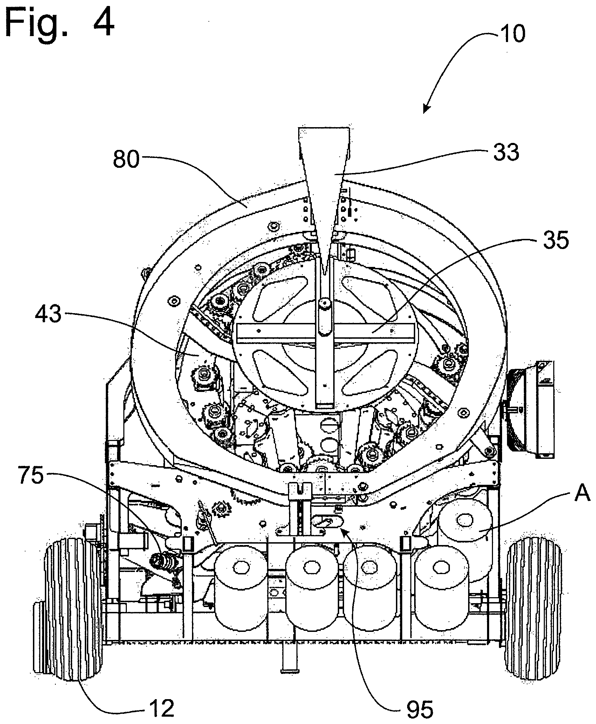

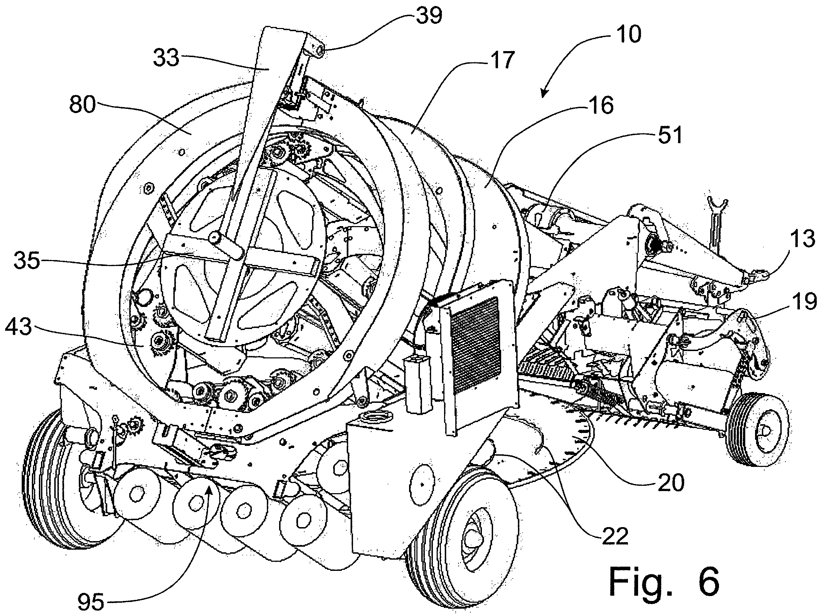

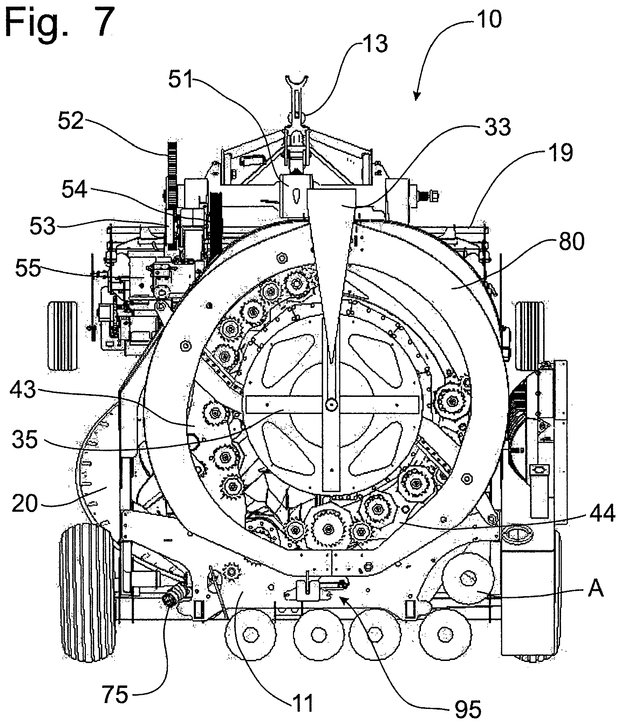

Referring first to Figs. 1 to 7, the general configuration of the continuous round baler operable to form round bales can best be seen. The continuous round baler 10 is formed with a wheeled frame 11 with a pair of ground wheels 12 at the rearward end of the frame 11 and a hitch 13 at the forward end of the frame 11 operable to be connected to a prime mover (not shown) to provide motive and operational power for the baler 10. The frame 11 further includes an upwardly and rearwardly extending telescoping beam 15 supported by mid-frame and rear-frame ribs 16, 17.

A crop pick-up apparatus 19 is supported by the frame 11 at a forward end of the baler 10 behind the hitch 13 to engage severed crop material lying on the ground and to elevate the crop material onto a crop conveying means, in this case a crop transfer mechanism, which is preferably provided in the form of a rotatably mounted rotary feed table 20. The rotary feed table 20 is rotatable about a vertical central rotational axis corresponding to the bearing 21. Crop material C is delivered by the crop pick-up apparatus 19 onto the rotary feed table 20 in a generally radial direction relative to the rotary feed table such that the crop material C is delivered in a generally radial inward direction onto the rotary feed table 20. The crop material C which by being delivered onto the rotary feed table 20 in a generally radial direction, is also delivered onto the rotary feed table 20 in a longitudinal direction parallel to the normal direction of travel of the round baler 10. The rotary feed table 20 as it rotates directs the crop material to travel in a transverse direction transversely of the normal direction of travel of the round baler 10, for presenting the crop material C to bale-forming chambers 26, 28 to be fed into the bale-forming chambers 26 and 28 as will be described below.

The bale-forming chamber 26, 28 comprises a conical bale-forming chamber 26 and a cylindrical bale-forming chamber 28 located downstream of the conical bale-forming chamber 26, and in this case rearwardly of the conical bale-forming chamber 26, the downstream direction being relative to the longitudinal direction through which a forming bale is urged through the bale-forming chambers 26, 28. The conical bale-forming chamber 26 is formed by tapered rollers 27 which define the conical bale-forming chamber 26. The conical bale-forming chamber 26 defines a longitudinally extending central geometrical axis 26a. The tapered rollers 27 are rotated as will be described below for rotating the crop material in the conical bale-forming chamber 26 for rotating the crop material therein to form a conical bale in the conical bale-forming chamber 26.

The cylindrical bale-forming chamber 28 is formed by a plurality of cylindrical rolls 29 which define the cylindrical bale-forming chamber 28. The cylindrical bale-forming chamber 28 defines a longitudinally extending central geometrical axis 28a. The cylindrical bale-forming chamber 28 is located downstream of the conical bale-forming chamber 26 for receiving baled material protruding from the conical bale-forming chamber 26 for in turn producing an axially extending cylindrical round bale which protrudes and extends axially from the downstream end of the cylindrical bale-forming chamber 28. The cylindrical bale-forming chamber 28 is located relative to the conical bale-forming chamber 26, so that the central geometrical axis 28a of the cylindrical bale-forming chamber 28 coincides with the cylindrical geometrical axis 26a of the conical bale-forming chamber 26. The cylindrical rolls 29 are rotated for rotating and further forming the bale in the cylindrical bale-forming chamber 28.

The conical bale-forming chamber 26 extends between an upstream end and a downstream end relative to the direction through which the baled crop material is urged therethrough, and the conical bale-forming chamber 26 is located above the rotary feed table 20 so that the upstream end of the conical bale-forming chamber 26 is located adjacent the central rotational axis of the rotary feed table 20, and the conical bale-forming chamber 26 extends radially from the central rotational axis of the rotary feed table 20. The upstream end of the cylindrical bale-forming chamber 28 is located adjacent the downstream end of the conical bale-forming chamber 26 for receiving the protruding baled crop material from the conical bale-forming chamber 26 into the cylindrical bale-forming chamber 28. In this case, the cylindrical bale-forming chamber 28 is located rearwardly of the conical bale-forming chamber 26.

The crop material C is delivered by the rotary feed table 20 to an infeed mechanism or apparatus 200 which lifts the crop material C from the rotary feed table 20 and feeds the crop material C into the bale-forming chambers 26, 28, as will be described in detail below. The infeed apparatus 200 comprises a dual conical feed roll 25, a starter roll 24 and an assist roll 23. The dual conical feed roll 25 comprises an upstream conical portion 25b, in this case a forward conical portion 25b and a downstream conical portion 25c, in this case a rearward conical portion 25c. The upstream and downstream terms being relative to the longitudinal direction through which the forming bale is urged through the bale-forming chambers 26, 28. The forward conical portion 25b of the dual conical feed roll 25 lifts and delivers the crop material from the rotary feed table 20 into the conical bale-forming chamber 26 through a longitudinally extending slot defined between a pair of the tapered rollers 27 located above the rotary feed table 20. The starter roll 24 cooperates with the forward conical portion 25b of the feed roll 25 for lifting and delivery the crop material into the conical bale-forming chamber 26. The assist roll 23 cooperates with the rearward conical portion 25c of the feed roll 25 for lifting and urging crop material into the cylindrical bale-forming chamber 28, as will be described in greater detail below. The crop material C on the rotary feed table 20 is delivered to the starter roll 24 that is formed with flexible flaps 24a projecting from the body of the starter roll 24 to engage the crop material being delivered on the feed table 20 and pinch the crop material downwardly against the feed table 20 and feed strips 22. The starter roll 24 is rotated in the direction of the rotation of the feed table 20 such that the underside of the starter roll 24 moves in the same direction as the adjacent portion of the feed table 20.

The feed table 20 is formed with a plurality of arcuate feed strips 22 spaced apart both radially and circumferentially on the upper surface of the feed table 20 for distributing the crop material C generally outwardly on the feed table 20.

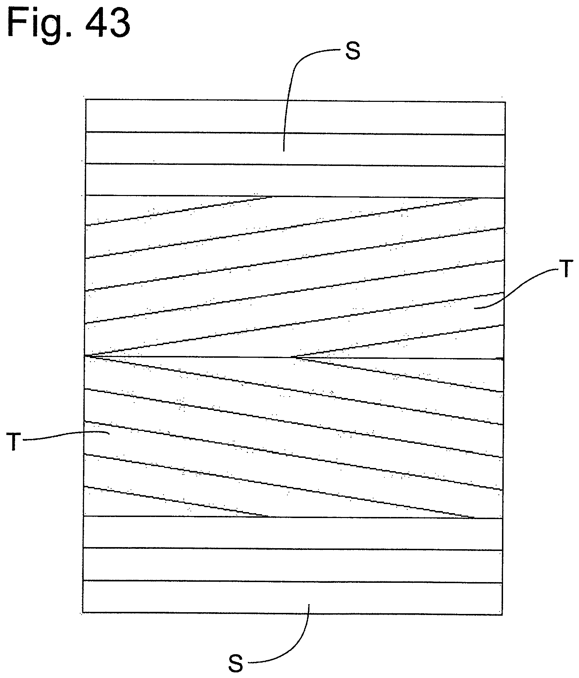

The crop material delivered to the conical bale-forming chamber 26 is rotated within the conical bale-forming chamber 26 by the tapered rollers 27. As crop material continues to be delivered into the conical bale-forming chamber 26 the bale of crop material being formed therein is conically shaped and protrudes upwardly and rearwardly into the cylindrical bale-forming chamber 28 where an additional supply of crop material is applied to the outer surface of the forming bale by the rearward or downstream conical portion 25b of the feed roll 25 so that the forming bale has internal sloped layers T of crop material and external straight layers S of crop material, as is depicted schematically in Fig. 43. As additional crop material is delivered into the conical bale-forming chamber 26 by the forward conical portion 25a of the feed roll 25, the forming bale continues to protrude through the cylindrical bale-forming chamber 28 and into engagement with the distal or rearward bale support member 35, as will be described in greater detail below.

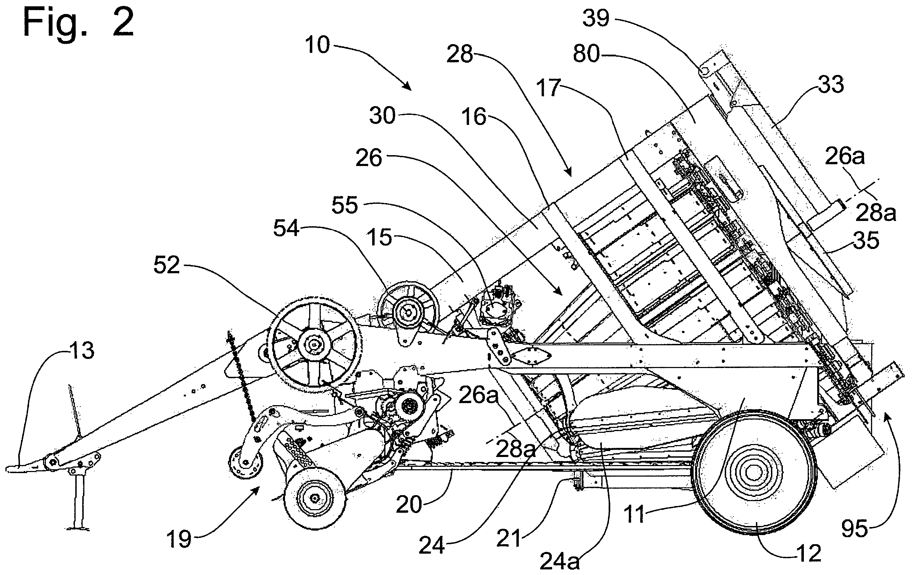

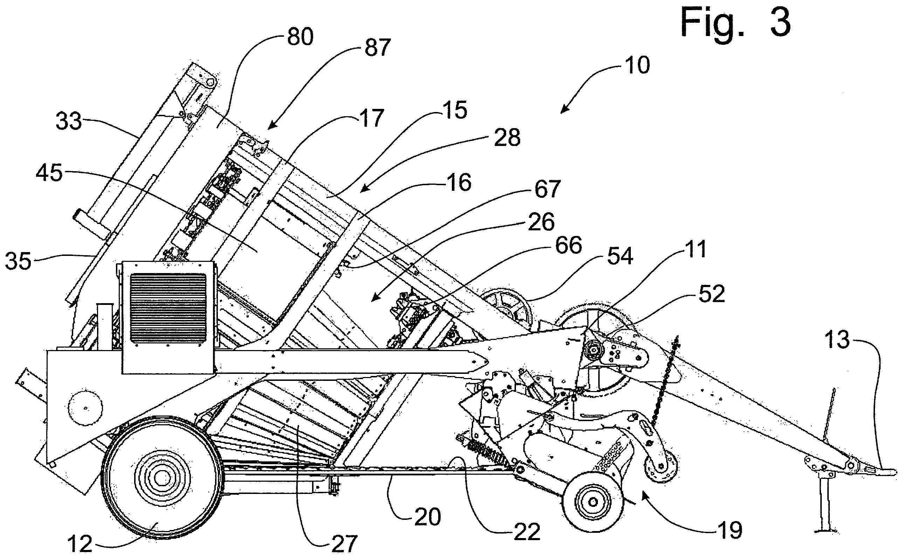

As best seen in Figs. 2 and 3, each tapered roll 27 of the conical bale-forming chamber 26 is formed with the sides thereof diverging outwardly at approximately 4 - 6 degrees; however, the tapered rolls are mounted in a diverging manner such that the conical bale-forming chamber 26 diverges at approximately 15 - 20 degrees from the apex toward the cylindrical bale-forming chamber 28 The tapered rolls 27 are arranged with the small ends at an apex of the conical bale-forming chamber 26 and rotated by a drive mechanism 50 that will be described in greater detail below. Accordingly, the crop material is rotated within the conical bale-forming chamber 26 so that the crop material being delivered into the conical bale-forming chamber 26 lies in an angled orientation relative to the axis of the round bale being formed. Accordingly, the continued delivery of crop material by the feed roll 25 ultimately pushes the growing bale upwardly and rearwardly toward the downstream large end of the conical bale-forming chamber 26 opening into the cylindrical bale-forming chamber 28.

Each tapered roller 27 can be formed with flat side members meeting other flat side members at an angle, the angles having the benefit of aggressively forcing the rotation of the forming round bale. Alternatively, the tapered rolls 27 could be fabricated from a smooth conical shaped member that is either welded or cast, but preferably includes knobs or protrusions on the surface thereof to provide the aggressive engagement of the bale being formed to cause rotation thereof. These are two of known ways to fabricate a tapered roll 27 and other forms of fabrication can be used equally. Similarly, the cylindrical rolls 29 forming the perimeter of the cylindrical bale-forming chamber 28 can be made from flat members that meet at an angle, or from cylindrical members that are either welded or cast.

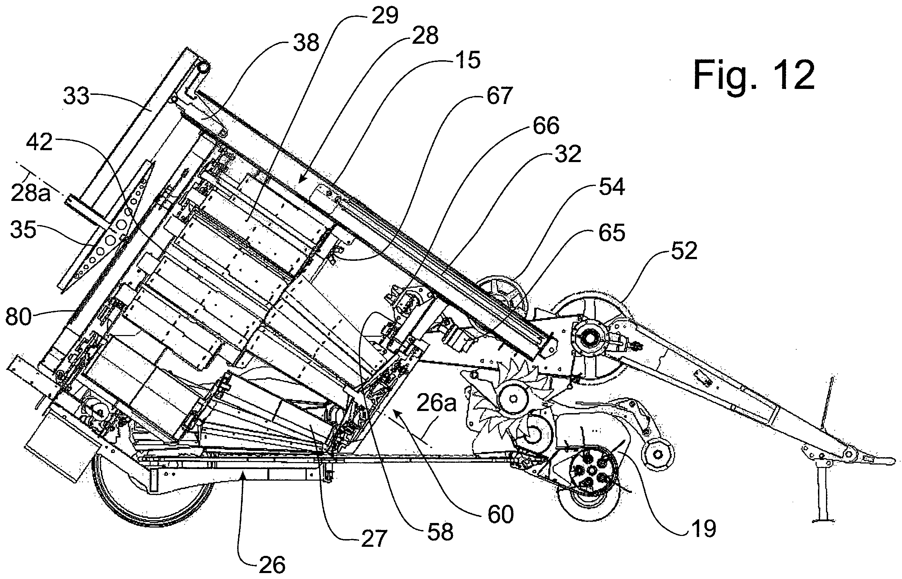

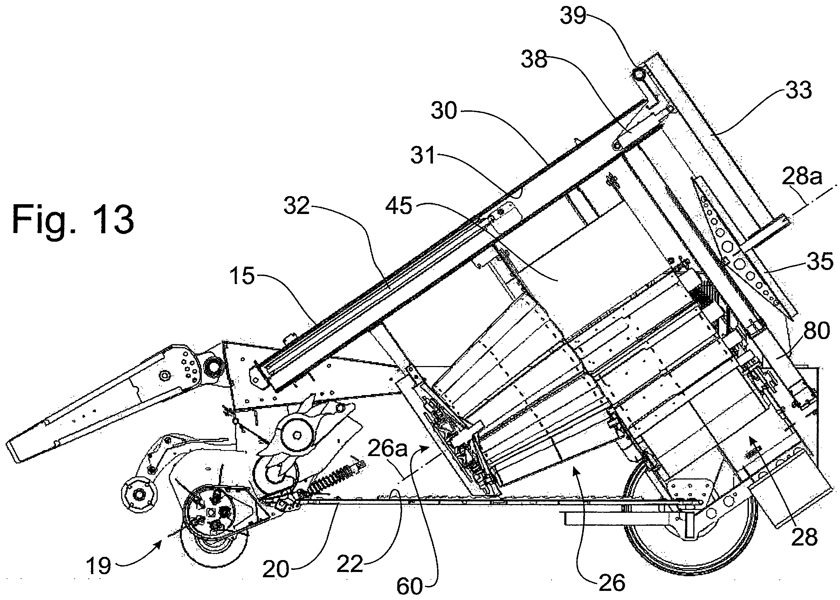

As with the tapered rolls 27, the provision of angles, knobs or protrusions that create an aggressive engagement with the outer surface of the round bale being formed to affect rotation thereof. As is best seen in Figs. 12 and 13, the cylindrical rolls 29 can be formed with protrusions 29a that are project from the body of the cylindrical roll 29 along the lower halves of the cylindrical rolls 29 to assist in the engagement of the crop material being fed into the lower portion of the cylindrical bale-forming chamber 28 by the feed roll 25, as described in greater detail below. The protrusions 29a are flattened against the body of the cylindrical roll 29, or eliminated, along the upper halves of the cylindrical rolls 29 so that the net wrapping material applied along the upper portions of the cylindrical rolls 29 is less aggressively engaged, as will be described in greater detail below.

As best seen in Figs. 12, 13 and 33, the cylindrical rolls will be formed in a cylindrical manner, although the preferred construction could be with a plurality of flat sides having adjacent flat sides forming an apex at the intersection thereof to provide some aggressiveness in the engagement of crop material, or netting material. One skilled in the art will recognize that the layers of crop material applied to the outer circumference of the forming bale within the cylindrical bale-forming chamber 28 must move in an axial manner with the protrusion of the central core section being formed in the conical bale-forming chamber 26 and pushing into the cylindrical bale-forming chamber 28. The proper protrusion of the forming bale may require a slight taper being formed in the cylindrical rolls 29 to assist the movement of the forming bale in an axial manner. Accordingly, any reference herein to a cylindrical roll or to a cylindrical bale-forming chamber will include by definition a roll or bale-forming chamber that has a slight taper as well as being a constant diameter structure from top to bottom.

### Distal or Rear Bale Support Member

Referring now to Figs. 12, 13 and 24 to 26, the telescoping beam 15 that is oriented in an upward and rearward direction from the front to the rear, has a fixed outer member 30 that is connected, such as by welding, to the mid and rear frame ribs 16, 17. The telescoping beam 15 also includes an inner telescoping member 31 that is connected to a hydraulic retraction cylinder 32 secured to the fixed outer member 30. The inner telescoping member 31 has a support member 33 connected at the rearward distal end of the inner telescoping member 31 that extends to a distal end that generally corresponds to the longitudinal axis of the round bale being formed in the cylindrical bale-forming chamber 28. A conically-shaped distal or rear bale support member 35 is rotatably mounted at the distal end of the support member 33. The rear bale support member is aligned with the round bale being formed. The rear bale support member 35 engages the distal end of the round bale being formed in the cylindrical bale-forming chamber 28 to both support the end of the round bale is the bale protrudes from the cylindrical bale-forming chamber 28, and control density of the forming round bale. The diameter of the rear bale support member 35 is smaller than the diameter of the round bale being formed so that the rear bale support member 35 does not disturb the positioning of the net wrap material at the end of the bale.

The rear bale support member 35 controls density in the forming bale by controlling the rate of protrusion from the cylindrical bale-forming chamber 28. The inner telescoping member 31 is connected to the hydraulic retraction cylinder 32, best seen in Figs. 12 and 13, such that the rod of the hydraulic cylinder 32 is pulled from the barrel of the hydraulic cylinder 32 as the round bale grows and protrudes axially from the cylindrical bale-forming chamber 28 by reason that the rear bale support member 35 is pushed rearwardly by the growing bale, which telescopingly draws the inner telescoping member 31 out of the fixed outer member 30. By restricting the flow of hydraulic fluid within the hydraulic retraction cylinder 32 as the rod is being withdrawn from the barrel, the hydraulic cylinder acts as a pressure inducing means for controlling the density of the forming bale. By varying the restriction of the flow of the hydraulic fluid the rate of protrusion of the round bale can be slowed, thereby allowing the delivery and application of more crop material into the forming bale and increasing the density of the forming round bale.

Preferably the rear bale support member 35 is rotatably secured at the distal end of the support member at a fixed location so that upon retraction, the rear bale support member properly engages the end of the round bale being formed. However, the rear bale support member 35 is preferably also slideably mounted within the mounting collar 36 in a manner that the rear bale support member 35 can be extended selectively to be positioned further away from the support member 33, and closer to the cylindrical bale-forming chamber 28. The purpose of this extended position of the rear bale support member 35 is to permit insertion into the cylindrical bale-forming chamber 28 during the formation of the first round bale in a previously empty machine 10. With the first bale being engaged by the rear bale support member 35, the density of the first bale can be established more quickly and help in the formation of the first bale. Preferably, the growth of the first bale will automatically push against the rear bale support member 35 and return the rear bale support member 35 to be latched in the fixed position needed for the support of subsequent formed bales, or the rear bale support member 35 can be manually, or automatically mechanically, re-positioned to the home position.

As noted above and shown in Figs. 12 and 13, the support member 33 is pivotally connected to the inner telescoping member 31. The movement of the support member 33 is controlled through a hydraulic eject cylinder 38 which causes a pivotal movement of the support member about the pivot 39 carried at the end of the inner telescoping member 31. This tilting movement pulls the rear bale support member 35 away from the end of the round bale after being severed from the forming bale to allow the severed round bale to fall unimpeded to the ground, as is described in greater detail below. As the inner telescoping member 31 is telescopingly retracted into the fixed outer member 30 by the hydraulic retraction cylinder 32, the eject cylinder 38 is reset to re-position the rear bale support member 35 for re-engagement with the end of the forming bale protruding from the cylindrical bale-forming chamber 26.

### Variable Bale Diameter Apparatus

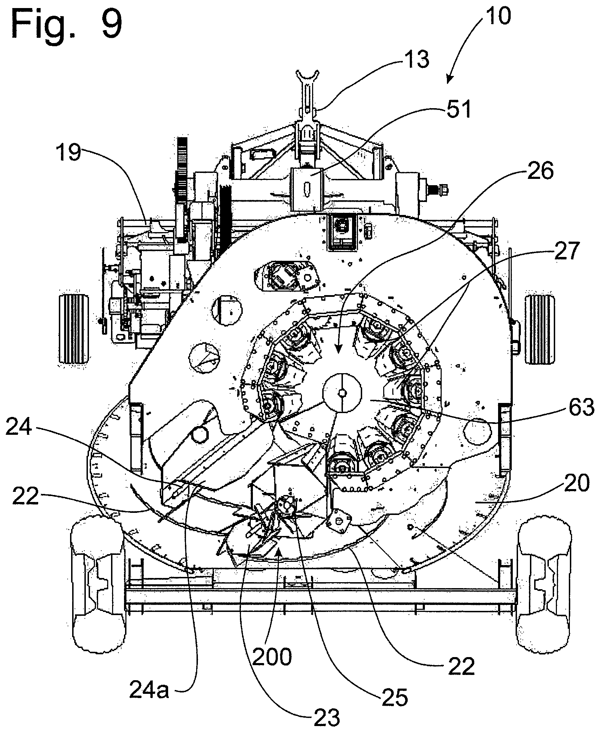

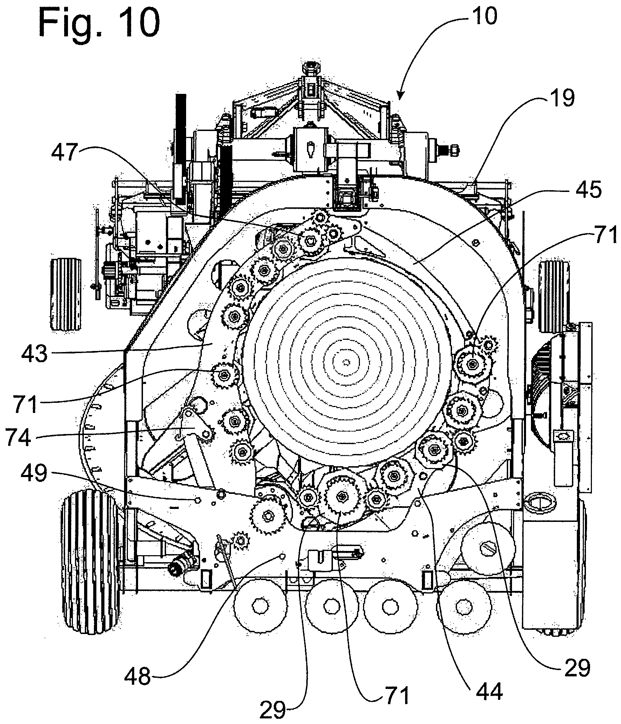

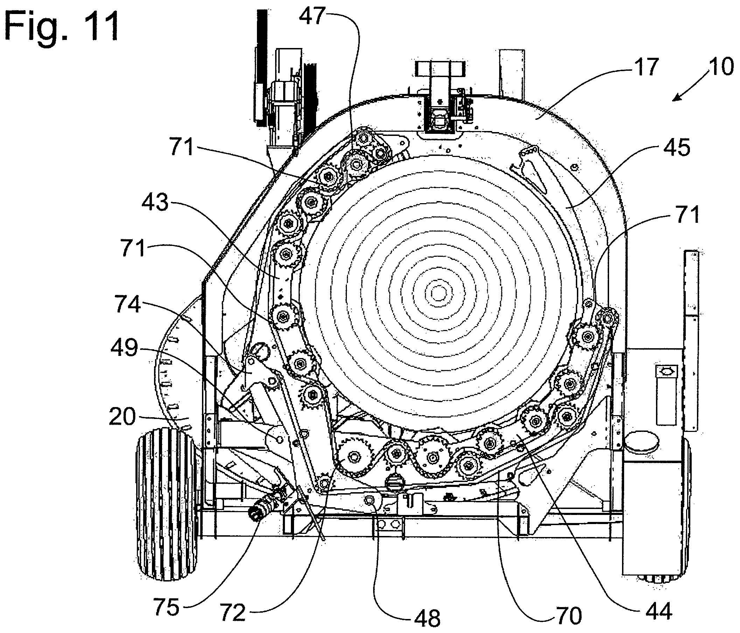

Referring now to Figs. 1 to 11 and particularly to Figs. 10 and 11, a variable bale diameter apparatus 40 can best be seen. Each of the cylindrical rolls 29 are mounted in upper and lower sledge arms 41, 42 to form two cylindrical roll clamshells 43, 44 arranged in arcuate partly semi-circular arrays and located on opposing sides of the cylindrical bale-forming chamber 28. Each clamshell 43, 44 is pivotally mounted on the frame 11. The left clamshell 43 is pivoted on the left pivot member 48 and the right clamshell 44 is pivoted on the right pivot member 49, both pivot members 48, 49 being located on the left side of the bale axis in a manner that the pivoted ends of the clamshells 43, 44 overlap. Each clamshell 43, 44 forms an arcuate configuration of cylindrical rolls 29 covering a portion of the circumference of the forming bale within the cylindrical bale-forming chamber 28. As seen in Figs. 10 and 11, the distal tip of the left clamshell 43 terminates near the top of the cylindrical bale-forming chamber 28, while the distal tip of the right clamshell 44 terminates along the side of the cylindrical bale-forming chamber 28. Between the distal tips of the two clamshells 43, 44 is an arcuate guide member 45 that is connected to the distal tip of the right clamshell 44 and moves therewith.

In the four foot bale diameter mode of operation, as is depicted in Fig. 10, the guide member 45 is engaged with the distal tip of the left clamshell 43 to hold the guide member 45 in proper position to direct the rotation of a four foot bale diameter round bale to the left clamshell 43. In the five foot bale diameter mode of operation, as depicted in Fig. 11, the guide member 45 is moved outwardly with the pivoting of the right clamshell 44 and stopped against the mid and rear frame ribs 16, 17 for proper positioning to guide a five foot bale diameter bale toward the left clamshell 43 which is now spaced away from the guide member 45. Both the left and right clamshells 43, 44 pivot when converting between four foot and five foot modes of operation so that the cylindrical rolls 29 will be positioned for engagement with the periphery of the forming bale in the cylindrical bale-forming chamber 28.

Accordingly, the continuous round baler 10 can be changed to form either four foot or five foot bale diameter bales; however, the conical bale-forming chamber 26 does not vary in size, forming the central part of the round bale being formed with more crop material being applied to the outer periphery of the forming bale by the upper conical member of the feed roll 25 to create a round bale having a five foot bale diameter. To accomplish this placement of additional crop material on the outside of the forming bale, the flow of crop material on the outer peripheral portions of the feed table 20 would preferably be altered from the four foot bale diameter mode of operation to feed more crop material onto the outside of the forming bale when in the five foot bale diameter mode of operation. The drawings do not reflect a powered mode of operation for changing between four and five foot bale diameter round bales; therefore, the intention would be that the bale diameter selection in the embodiment shown in the drawings would be manually accomplished.

One skilled in the art will note that changing the clamshells 43, 44 from a five foot bale diameter to a four foot bale diameter manually, may be difficult to accomplish manually. Accordingly, a powered mechanism would ultimately need to be provided, such as hydraulic cylinders (not shown). Even with a powered mechanism, the movement of the clamshells 43, 44 from a five foot bale diameter to a four foot bale diameter may have to be accomplished incrementally as the bale continues to protrude, which would probably require that transition bale to be disassembled and re-baled.

### Drive Mechanism

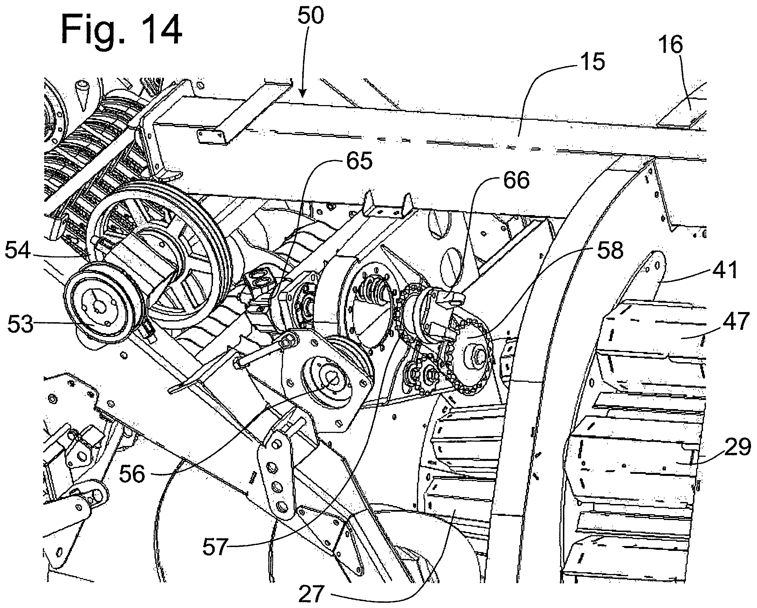

The drive mechanism 50 for the continuous round baler 10 is shown throughout the drawings, but is particularly shown in Figs. 14 to 19. Most prime movers, such as tractors (not shown), typically have a power takeoff (PTO) apparatus, and an on-board hydraulic system capable of driving many machines by connection to hydraulic motors, etc. The choice of drive power for this machine was to power a hydraulic pump through a mechanical drive mechanism driven by the tractor PTO, which then powers a hydraulic motor that transfers rotational power to an extensive drive mechanism 50.

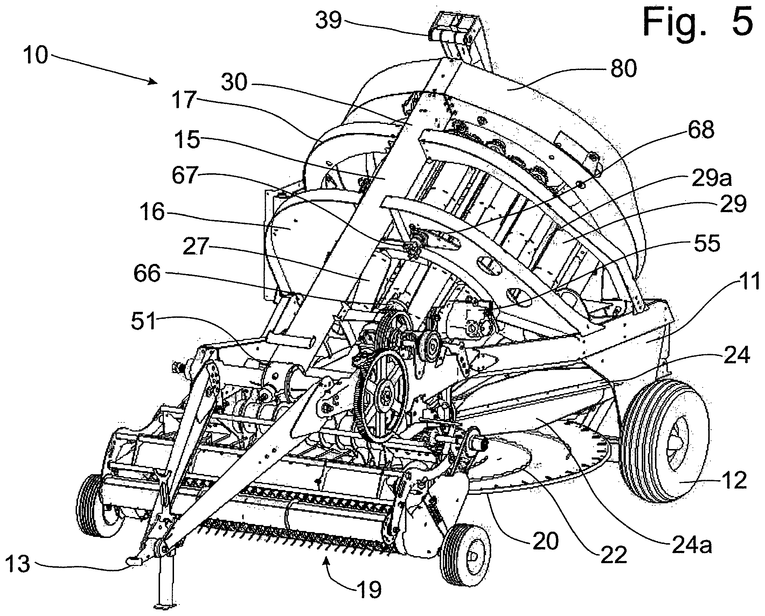

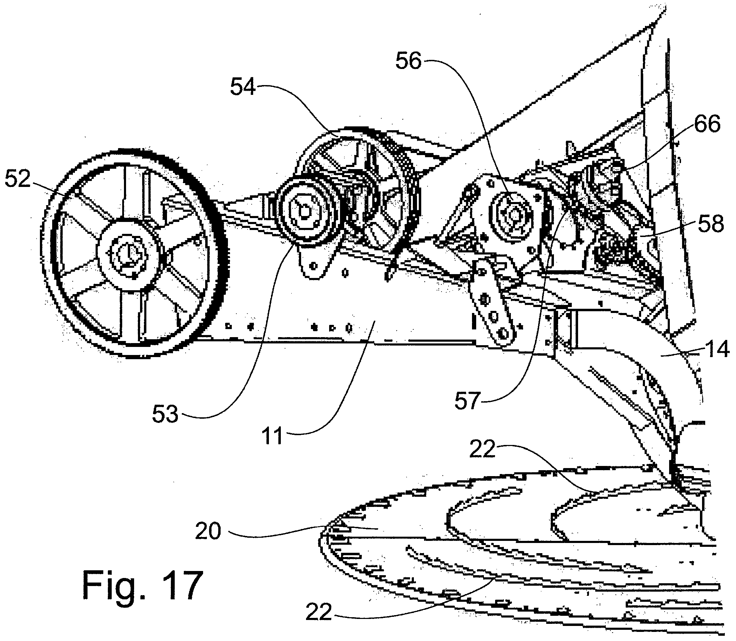

As best seen in Figs. 1 and 5, a central gearbox 51 is adapted to be operatively connected to the tractor PTO (not shown) to deliver a source of rotational power to the gearbox 51. The gearbox 51 drives the operation of the pick-up mechanism 19 and delivers rotational power to a large sheave 52 along the left side of the continuous round baler 10. A drive belt (not shown) is entrained around the first large sheave 52 and a second smaller sheave 53 to transfer rotation thereto. The second smaller sheave 53 is mounted on a jack shaft with a third larger sheave 54 such that the third larger sheave 54 is rotated with the second smaller sheave 53. A drive belt then entrains around the third larger sheave and a fourth smaller sheave 56 to drive a high horsepower hydraulic pump 55, which is not depicted in Figs. 14 or 17, but can be seen in Figs. 1 and 5. Hydraulic conduits (not shown) interconnect the high horsepower hydraulic pump 55 and a hydraulic motor 65 to deliver hydraulic fluid under pressure thereto and drive the operation of the hydraulic motor 65.

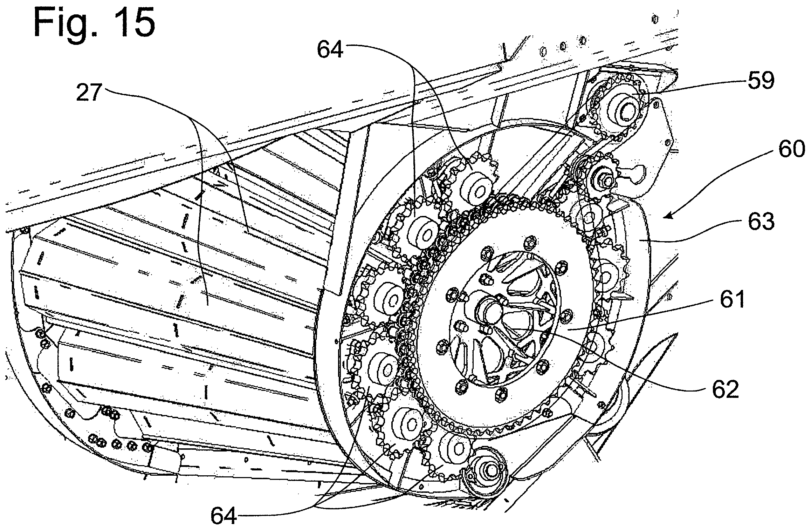

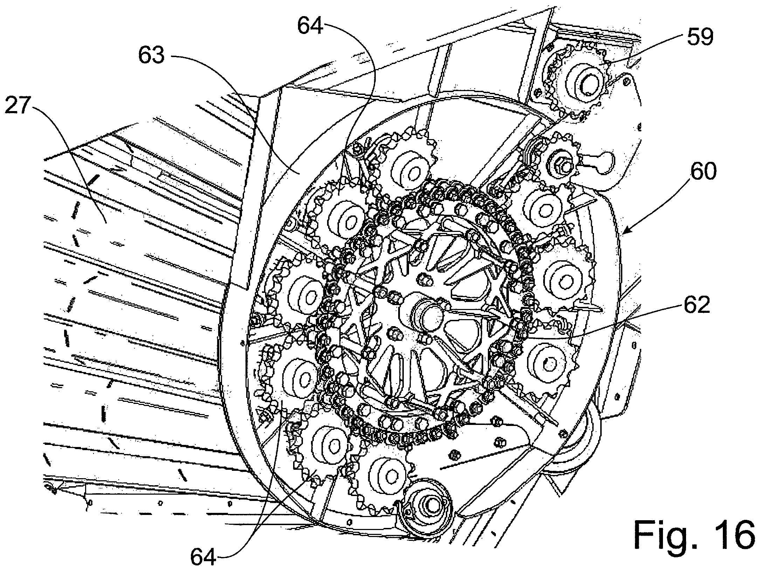

The hydraulic motor 65 becomes the primary power source for both the conical rolls 27 and the cylindrical rolls 29. The hydraulic motor 65 powers the rotation of a first sprocket 57 via a drive shaft (not shown). The first sprocket 57 transfers rotational power by an entrained chain (not shown) to a second sprocket 58, which is connected to the drive sprocket 59 on the opposing side of the frame 11 by a common shaft (not shown), as is depicted in Fig. 15. The drive sprocket 59 transfers rotational power to a large driven sprocket 61 forming a part of a planetary drive mechanism 60 which includes a roller drive sprocket 62 located underneath the large driven sprocket 61 and is best seen in Fig. 16.

As best seen in Figs. 15 and 16, each of the tapered rolls 27 is journaled on a plate 63 in an array that is centred on the hub of the planetary drive mechanism 60. The large driven sprocket 61 and the roller drive sprocket 62 rotate about the hub such that the roller drive sprocket 62 engages each of the tapered roll sprockets 64 mounted at the end of the tapered rolls 27. In this manner, the tapered rolls 27 are driven together in the same direction of rotation to cause rotation of the bale being formed in the conical bale-forming chamber 26. The feed roll 25, the starter roll 24 and the assist roll 23 are driven independently of the tapered rolls 27 that form the conical bale-forming chamber 26, as will be described in greater detail below.

Returning to the primary drive hydraulic motor 65 shown in Fig. 14, the first sprocket 52 which is driven from the primary drive hydraulic motor 65 has mounted thereon a U-joint yoke 66 which is interconnected by a shaft (not shown) bearing corresponding U-joint yokes on opposing ends of the shaft to transfer rotational power to an opposing U-joint yoke 67, best seen in Figs. 3 and 5. This mechanical drive line delivers rotational power through the cylindrical roll 47 mounted on the distal tip of the left clamshell 43. As can be seen in Fig. 1, the mid frame rib 16 is formed with an oval opening 68 therethrough to allow passage of the drive shaft extending from the U-joint yoke 67 through the cylindrical roll 47 and the movement thereof associated with the movement of the left clamshell 43 to change the diameter of the round bale being formed within the cylindrical bale-forming chamber 28.

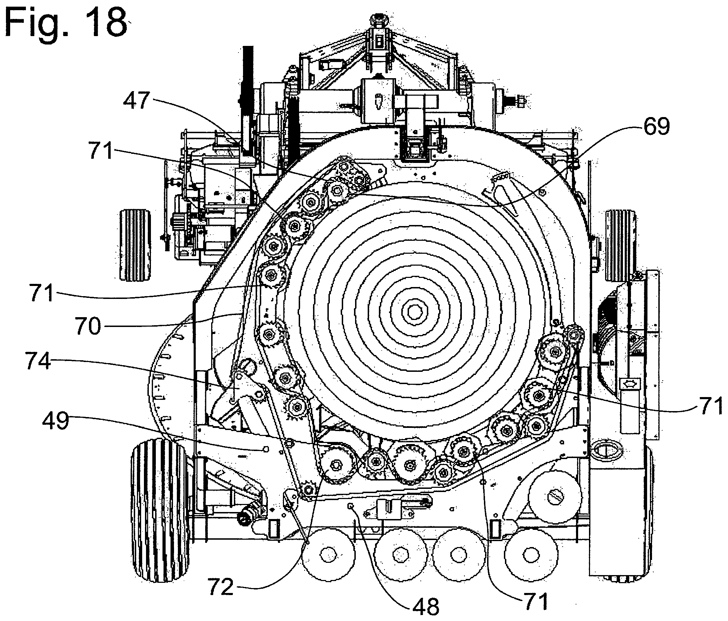

Referring now to Fig. 18, the drive mechanism for the cylindrical rolls 29 can best be seen. The drive sprocket 69 at the rearward end of the cylindrical roll 47 pulls the chain 70 which is entrained around all of the drive sprockets 71 on the respective cylindrical rolls 29 mounted on both clamshells 43, 44. In addition, the chain 70 drives sprocket 72 which is operatively connected to the feed roll 25 through respective U-joints to power the operation of the feed roll 25 to deliver crop material into the conical bale-forming chamber 26. Accordingly, one drive chain 70 can be utilized to drive the rotation of all of the cylindrical rolls 29 on both the left and right clamshells 43, 44. The slack side of the chain 70 returns on the outside of the drive sprockets 71 of the cylindrical rolls 29 so as to entrain all of the drive sprockets and engage a tensioner 74.

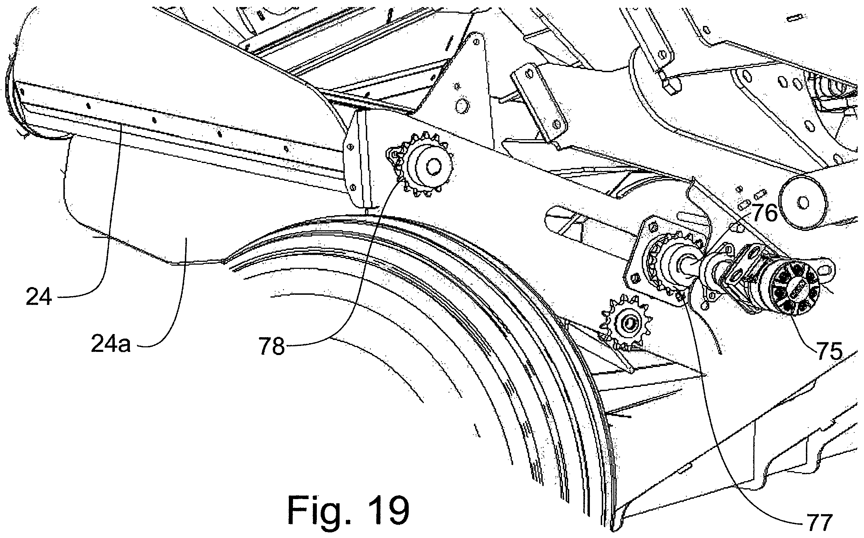

Referring now to Fig. 19, a supplemental drive for the starter roll 24 and the assist roll 23 can best be seen. A hydraulic motor 75 driven by hydraulic fluid under pressure from the hydraulic pump 55 through conduits (not shown) provides the source of rotational power for the starter roll 24 and the assist roll 23. The hydraulic motor 75 directly drives the assist roll 23 through the drive shaft 76. A drive sprocket 77 mounted on the shaft 76 and rotatable therewith is entrained with a drive chain (not shown) to transfer rotational power to a driven sprocket 78 that rotates through a shaft on which the driven sprocket 78 is mounted to drive the rotation of the starter pinch roll 24. The various hydraulic cylinders described herein and/or shown in the drawings are powered by hydraulic fluid under pressure from the valve bank 18 mounted on the beam 15 and connected to the tractor hydraulic system.

### Severance Mechanism

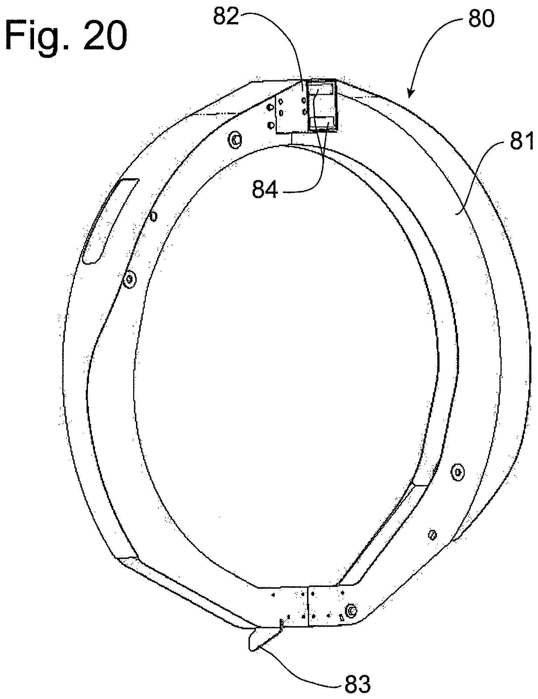

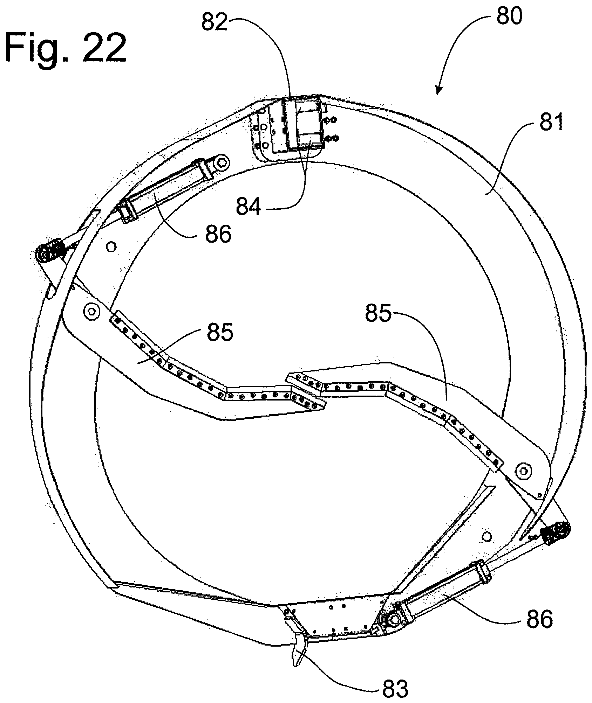

The severance mechanism 80 for separating a selected bale from the formed bale protruding out of the cylindrical bale-forming chamber 28. The severance mechanism 80 is shown in a standalone format in Figs. 20 to 22, but shown throughout the drawings in conjunction with the continuous round baler 10. The severance mechanism 80 includes a generally circular frame 81 having a slide collar 82 mounted on the top of the frame 81 and a stabilizer fin 83 mounted at the bottom of the frame 81. The inner telescoping member 31 slides through the slide collar 82 as the formed bale grows and protrudes from the cylindrical bale-forming chamber 28. Preferably phenolic strips 84 are mounted on the inside of the slide collar 82 to facilitate the movement of the inner telescoping member 31 through the slide collar 82.

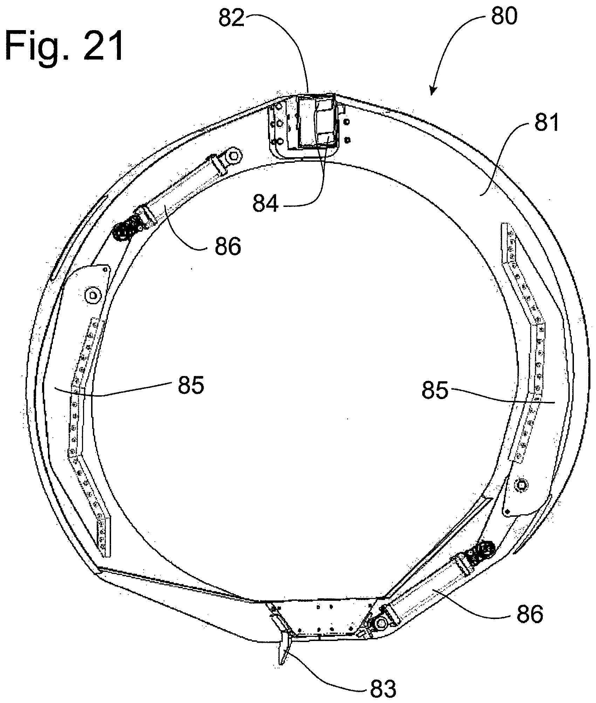

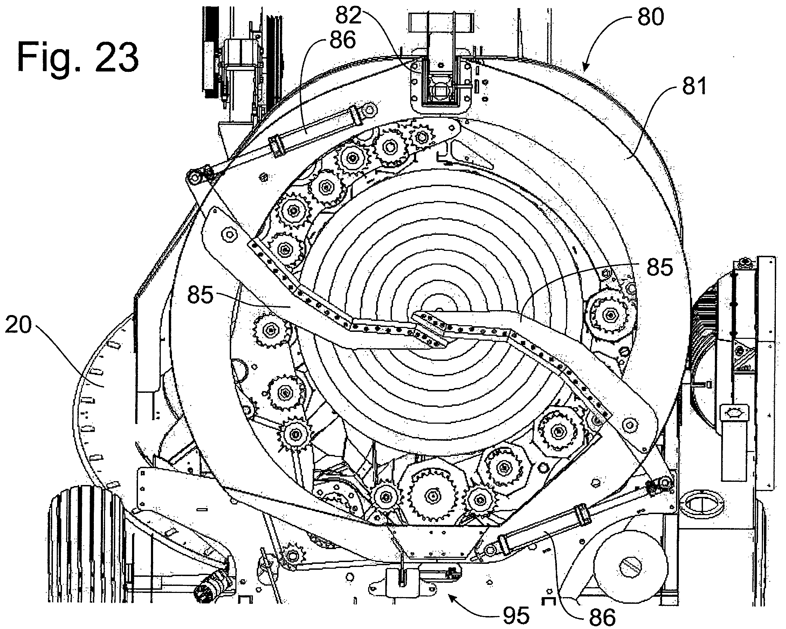

As is best seen in the cutaway view of Fig. 21, the frame 81 encloses a pair of pivoted knives 85 activated by respective hydraulic cylinders 86 mounted in the frame 81. As shown in comparing Figs. 21 to 23, the knives 85 pivot in opposite directions to cut into the formed bale protruding from the cylindrical bale-forming chamber 28 and sever the selected round bale from the formed bale, as will be described in greater detail below. As is best seen in Fig. 23, the distal tips of the knives 85 overlap and pass through the central axis of the formed round bale to provide a clean separation of the selected bale from the formed bale. Since the continuous round baler 10 operates to pick up crop material from the ground and deliver that crop material to the conical and cylindrical bale-forming chambers 26, 28 while the severance mechanism 80 is operating to separate the selected bale from the formed bale, the severance mechanism 80 must be capable of moving with the formed bale as the severance mechanism operates.

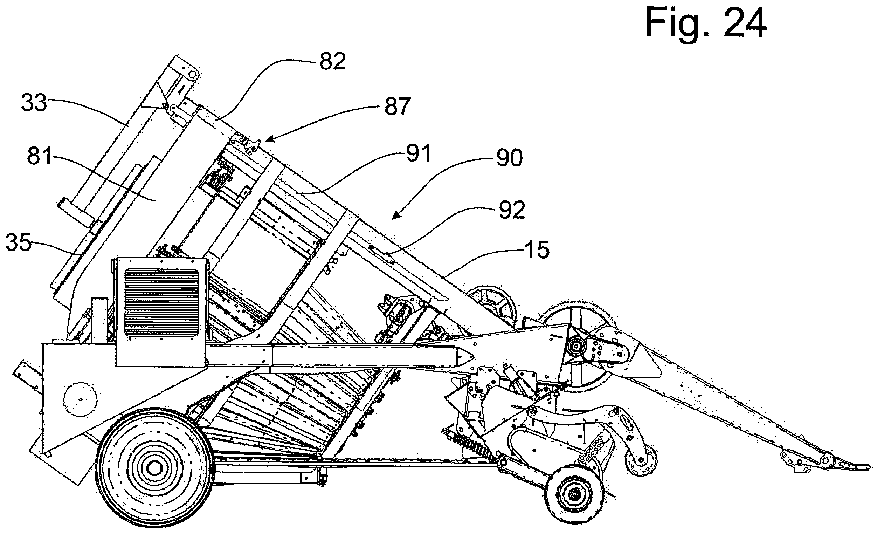

Referring now to Figs. 24 to 26, the frame 81 of the severance mechanism 80 is latched to the fixed outer member 30 of the beam 15 by a latch mechanism 87 that includes a spring-biased latch hook 88 engageable with a latch member 89 carried by the slide collar 82 on the frame 81 of the severance mechanism 90. When the latch hook 88 is engaged with the latch member 89 the frame 81 is secured to the fixed outer member 30 of the beam 15, and therefore, the severance mechanism 80 cannot advance with the inner telescoping member 31. As the inner telescoping member 31 of beam 15 extends telescopingly with the protruding growth of the formed round bale, the severance mechanism 80 stays in the home position waiting for the selected length of the round bale to appear.

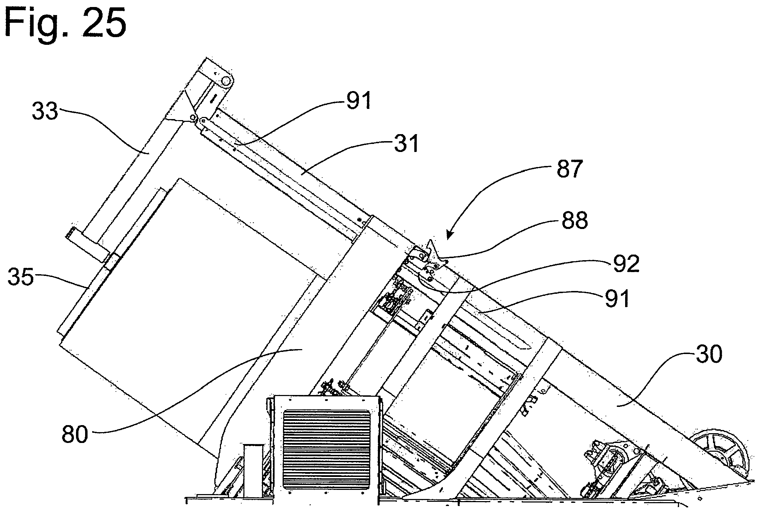

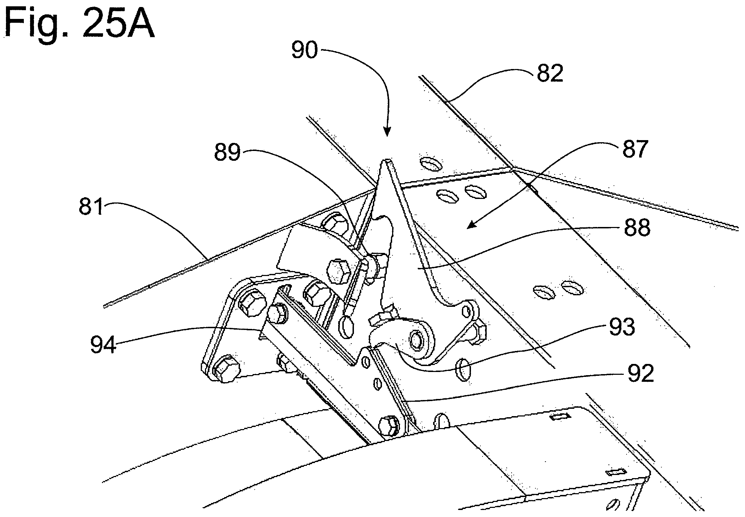

Referring now primarily to Figs. 24 to 27, an actuator mechanism 90 includes an actuator arm 91 and a trip member 92 that is pinned to the distal end of the inner telescoping member 31 so that the actuator arm 91 is dragged along with the inner telescoping member 31 as the round bale being formed increases in length. The actuator arm 91 passes through the frame 81 of the severance mechanism 80 until the trip member 92 is positioned to engage the latch hook 88 which are depicted in Figs. 25 and 25A. The trip member 92 engages a cam member 93 and forces the cam member 93 to move forwardly, which causes the spring-biased latch hook 88 to lift vertically, as is best seen in Fig. 25A, and disengage the latch member 89. With the latch mechanism 87 disengaged, the slide collar 82 is now free to move with the inner telescoping member 31 passing through the slide collar 82.

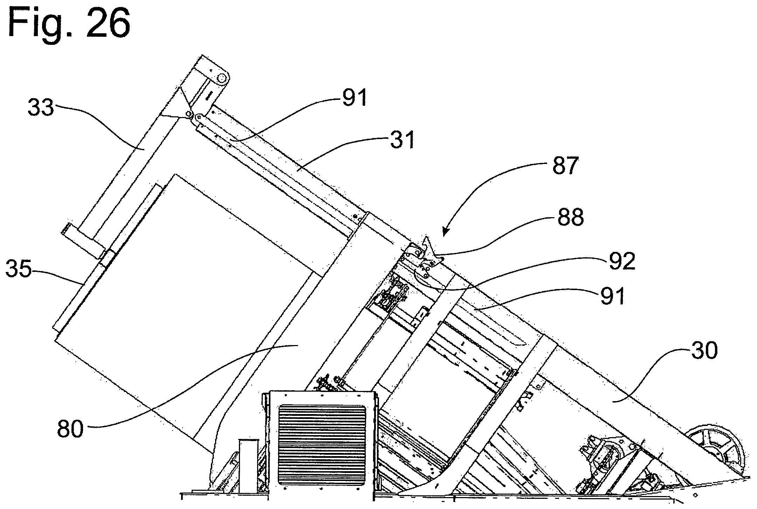

As depicted in Fig. 26, the severance mechanism 80 is now free to move with the inner telescoping member 31 and the advancing round bale. The trip member 92 is sufficiently large as to not be able to pass through the slot 94 in the frame 81 of the severance mechanism 80 as the actuator arm 91 does. While this might apply some force to move the severance mechanism 80, the primary force causing the frame 81 to move with the inner telescoping member 31 and the growing bale is the engagement of the knives 85 into the outer surface of the bale and into the body of the forming bale. A sensor (not shown) would trigger the extension of the hydraulic cylinders 86 and the movement of the knives 85 into the round bale. The positioning of the trip member 92 along the length of the actuator arm 91 is adjustable so that the length of the selected round bale can be varied according to the wishes of the operator.

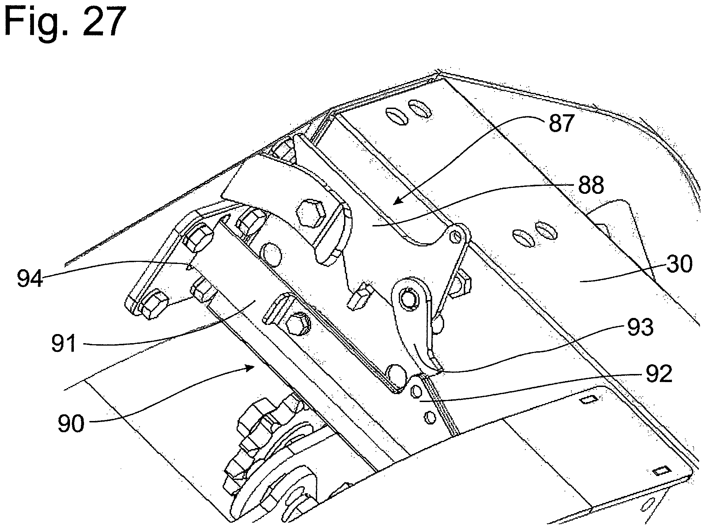

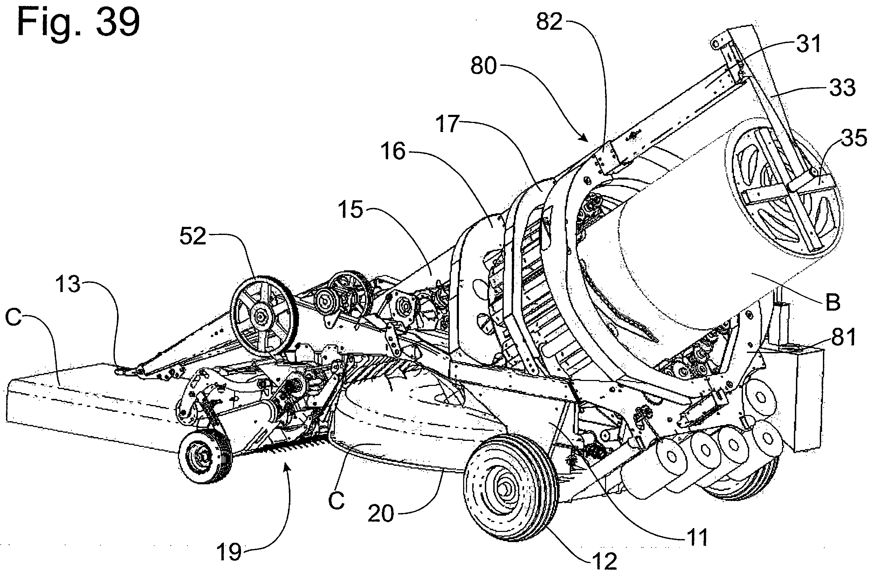

When the selected round bale has been severed from the forming bale and the bale discharged from the continuous round baler 10, as is described above and reflected in Figs. 39 to 42, the inner telescoping member 31 is retracted into the fixed outer member 30 pulling the rear bale support member 35 back into engagement with the end of the forming round bale. As shown in Fig. 27, the retraction of the inner telescoping member 31 pushes the actuator arm 91 back through the slot 94 in the frame 81 and moves the trip member 92 back into engagement with the cam member 93 to reset the latch hook 88 with the spring bias into the latching position. When the frame 81 of the severance mechanism 80 is returned back against the fixed outer member 30 the latch member 89 pushes against the sloped surface of the latch hook 88 to raise the latch hook 88 against the spring bias sufficiently to drop the latch hook 88 over the latch member 89, thus securing the frame 81 to the fixed outer member 30.

### Stabilising Mechanism for Severance Frame

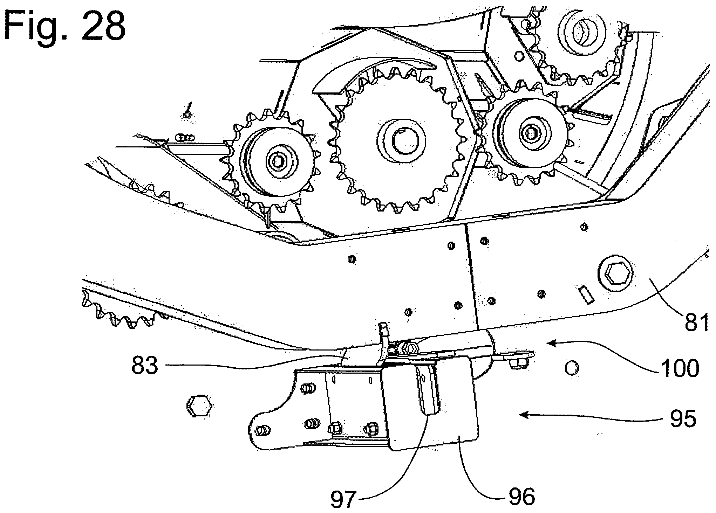

Referring now to Figs. 28 to 32, the stabilizing mechanism 95 for the bottom of the severance frame 81 can best be seen. One skilled in the art will recognize that the frame 81 of the severance mechanism 80 is angled with respect to being vertical, as is depicted in Fig. 26, for example. Accordingly, gravity would urge the frame 81 toward a vertical position. With the inner telescoping member 31 sliding through the slide collar 82, any substantive movement of the frame 81 toward a vertical position would cause the slide collar 82 to bind on the inner telescoping member 31 and disrupt the operation of the severance mechanism 80 and the operation of the continuous round baler 10. In addition, the pivotal movement of the knives 85 into engagement with the round bale can cause a sideways twisting of the frame 81, possibly resulting in a disruption of the severance operation.

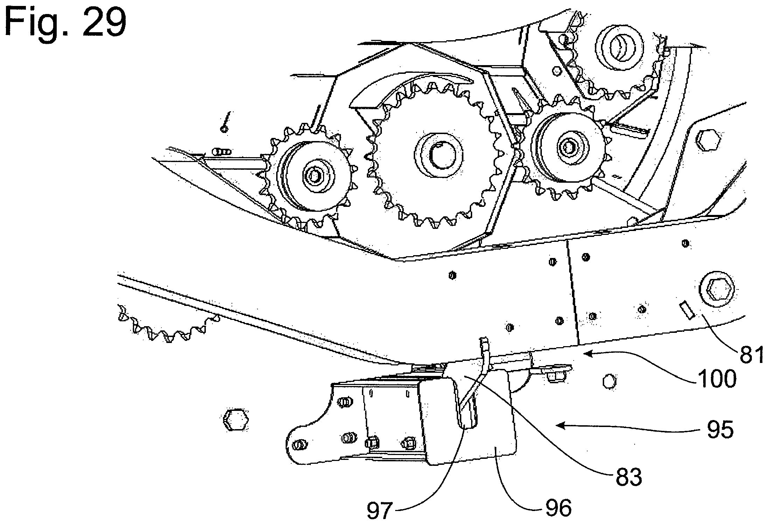

To resist the sideways twisting of the fame 81, the bottom portion of the frame 81 is formed with a stabilizer fin 83 that is located within a longitudinally extending slot 97 in the stabilizer bracket 96. The stabilizer bracket 96 is mounted to the frame 11 of the continuous round baler 10 and is preferably oriented at the same tipped angle as the frame 81 of the severance mechanism 80. In Fig. 28, the stabilizer fin 83 is depicted at the front portion of the slot 97 near the frame 11 to correspond to the positioning of the stabilizer frame 81 in the home position secured to the fixed outer member 30, while Fig. 29 depicts the stabilizer fin 83 having moved rearwardly within the slot 97 as the severance frame 81 moves rearwardly with the growth of the forming round bale. The containment of the stabilizer fin 83 within the stabilizer bracket 96 prevents the frame 81 from twisting sideways.

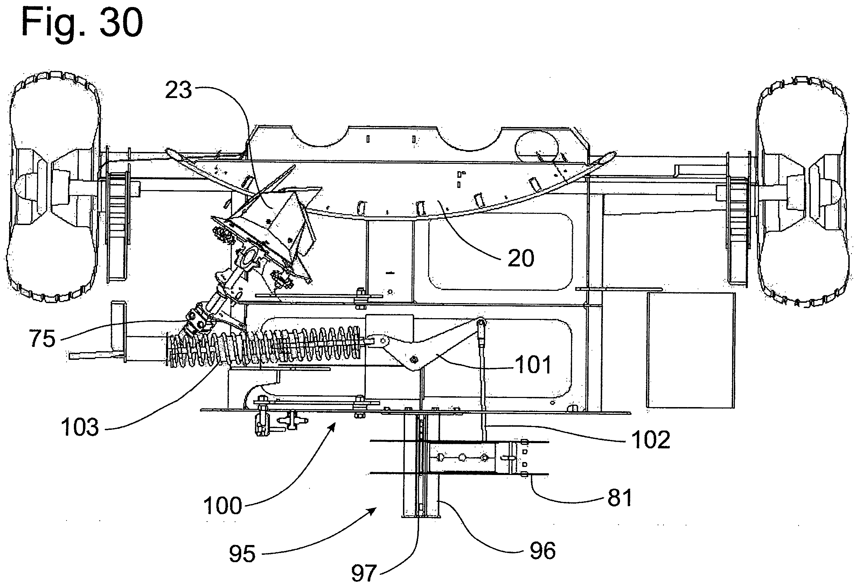

Referring now to Figs. 30 to 32, the weight offset apparatus 100 can best be seen. The purpose of the weight offset apparatus 100 is to balance the force of gravity so that the severance mechanism 80 can move with respect to the inner telescoping member 31 and operate as needed to affect severance of a selected round bale from the forming bale. The weight offset apparatus 100 includes a bellcrank 101 pivotally mounted on the frame 11 with one arm of the bellcrank 101 being connected to the severance frame 81 by a rod 102 and the other arm of the bellcrank 101 being connected to a compression spring assembly 103. The compression spring mechanism 103 is operable to push the severance frame 81 through the bellcrank 101 with a constant force no matter what position the bellcrank 101 is pivoted into as the severance frame 81 moves rearwardly with the inner telescoping member 31.

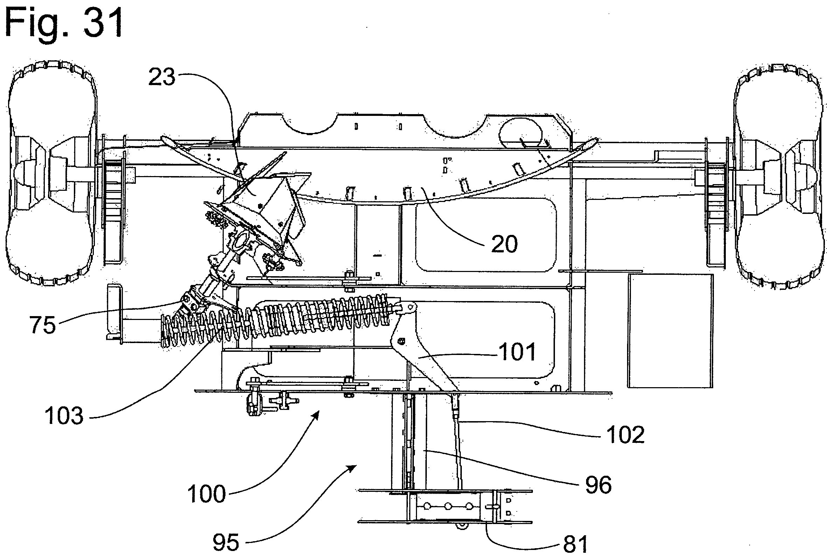

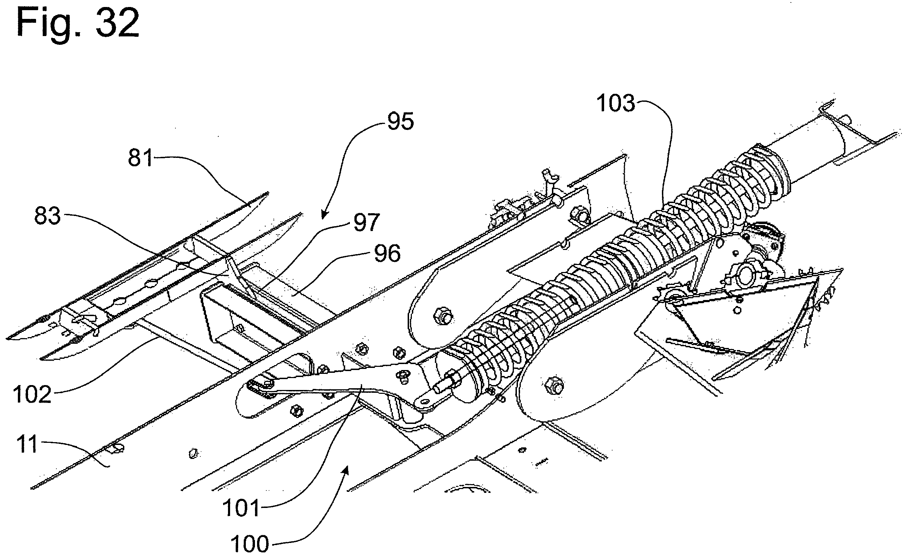

Accordingly, when the severance frame 81 moves rearwardly with the inner telescoping member 31, the bottom of the frame 81 pulls on the link or rod 102 to rotate the bellcrank 101 about its pivot. This rotation as shown in Figs. 31 and 32 turns the bellcrank 101 and draws the spring assembly 103 with the rotating bellcrank 101. Since the spring assembly 103 continues to assert a constant spring force of about 200 pounds, which is approximately the weight of the severance frame 81, the force of gravity remains countered and the severance frame 81 remains in the same orientation through the range of movement the severance mechanism 80 goes through. The return of the severance mechanism 80 to the home position causes the weight offset apparatus 100 to operate in reverse with the rod 102 pushing the bellcrank 101 through a rotation back to the position shown in Fig. 30.

### Crop Feeding Apparatus

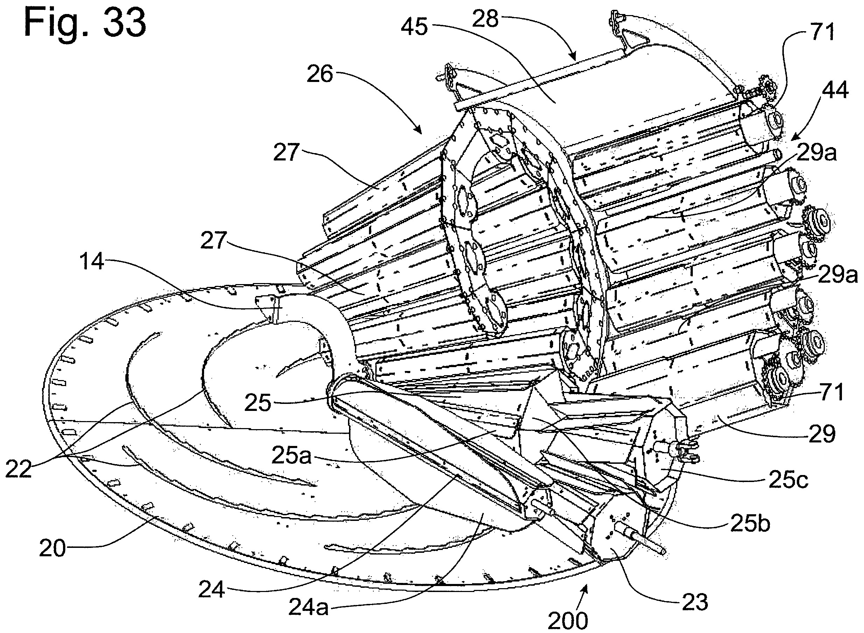

The details of the apparatus for feeding the collected crop material into the conical and cylindrical bale-forming chambers 26, 28 are best seen in Figs. 33 to 35 and 37. The rotary feed table 20 receives crop material from the pick-up 19 and rotating counter clockwise (when viewed from above) delivers the collected crop material to the starter roll 24 whose flexible flaps 24a pinch the crop material under the starter roll 24 against the feed strips 22. The starter roll 24 is rotated such that the surface thereof next to the rotary feed table 20 move in the same direction as the upper surface of the rotary feed table 20. Once the crop material has moved past the starter roll 24, the flaps 24a urge the crop material upwardly. The forward conical portion 25b of the feed roll 25 is located adjacent to the starter roll 24 and is also formed with flexible flaps 25a. The feed roll 25 is rotated in opposition to the starter roll 24 so that the flaps 25a of the forward conical portion 25b elevate the crop material being urged upwardly by the starter roll flaps 24a to move the crop material into the conical bale-forming chamber 26.

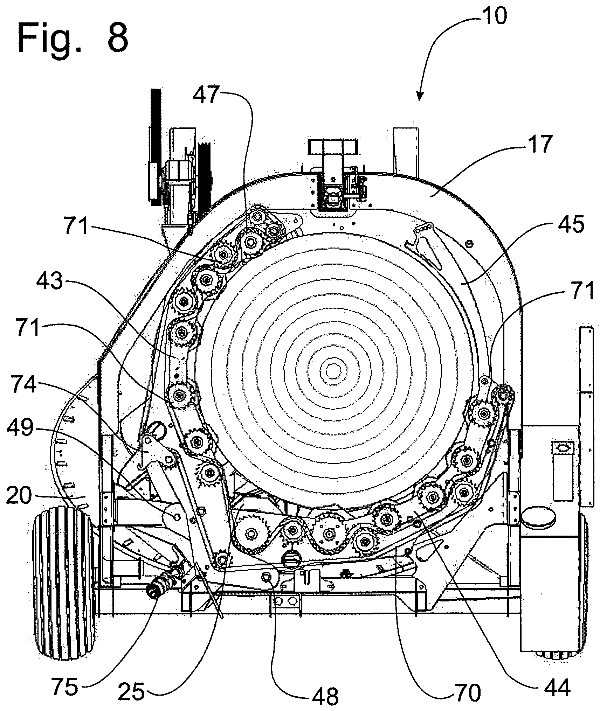

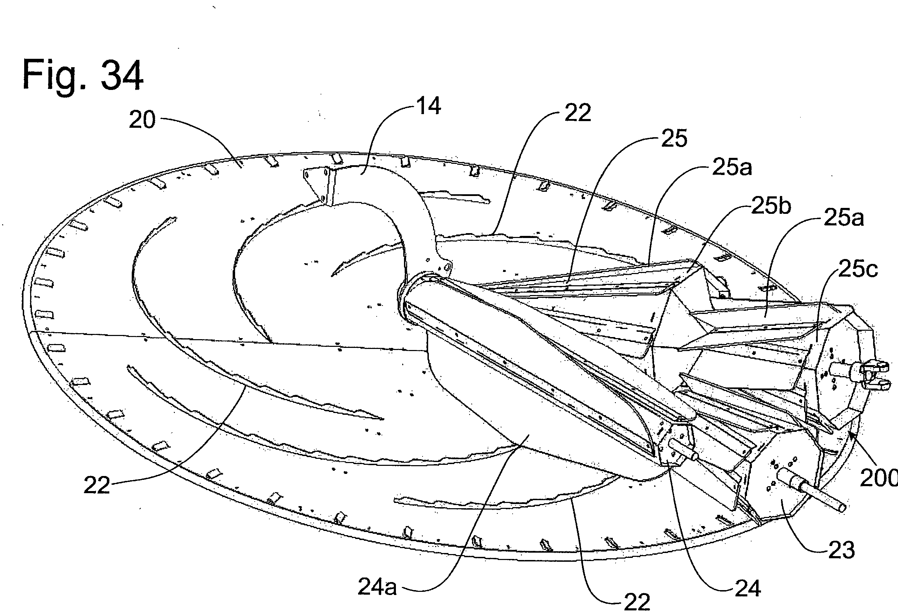

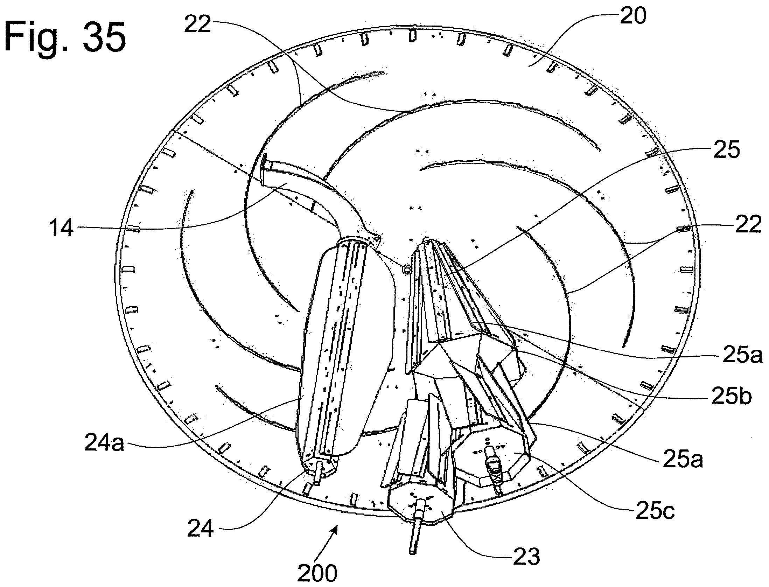

The feed roll 25, which is best seen in Figs. 34 and 35, as discussed above has a dual cone shape with the forward conical portion 25b for delivering crop material into the conical bale-forming chamber 26 and the smaller rearward conical portion 25c for delivering crop material into the upstream portion of the cylindrical bale-forming chamber 28. The cylindrical rolls 29 placed into clamshell arrays 43, 44, as described above, define the cylindrical bale-forming chamber. The second rearward conical portion 25c delivers crop material directly into the lower portion of the cylindrical bale-forming chamber 28 through a gap between the cylindrical rolls 29 on the respective pivoted ends of the two clamshells 43, 44, as best seen in Fig. 8, to apply a layer of crop material in a straight layer S on top of the conical central part T of the bale formed in the conical bale-forming chamber 26, shown schematically in Fig. 43, as the conical central part of the bale is pushed upwardly into the cylindrical bale-forming chamber 28.

Since the second rearward conical portion 25c is aligned with the axis of the forward conical portion 25b, the rearward conical portion 25c is elevated above the feed table 20. To assist the feeding of crop material into the cylindrical bale-forming chamber 28, the assist roll 23 is provided immediately in front of the rearward conical portion 25c to lift crop material off of the feed table 20 and into engagement with the rearward conical portion 25c. As noted above, the feed roll 25 is driven mechanically from the chain 70 rotating the cylindrical rolls 29. The assist roll 23 is driven directly by the hydraulic motor 75, but is supported from the frame 11 in a cantilevered manner. The starter roll 24 is also powered in rotation from the hydraulic motor 75 through a chain drive 77, 78. The starter roll is supported at the distal end thereof by a frame member 14.

### Operation of the Continuous Round Baler

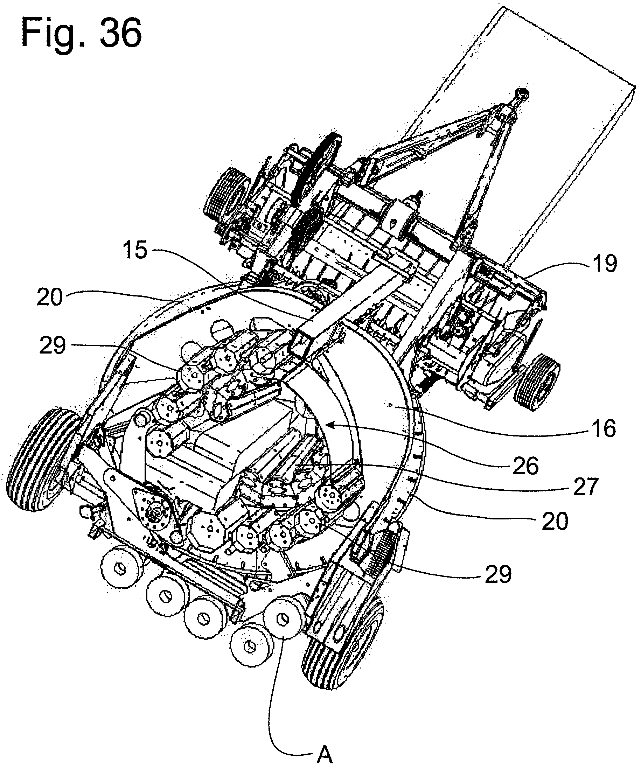

Referring now to Figs. 36 to 42, the operation of the continuous round baler 10 can best be seen. Prior to beginning the baling process, the operator must decide as to the desired diameter of the formed bale, and as to the length of the formed bale before the severance mechanism 80 is activated to sever a selected bale from the forming bale. These selections are accomplished by pivotally moving the left and right clamshell sledges 43, 44 to the appropriate position and then position the trip member 92 on the actuator arm 91 as desired.

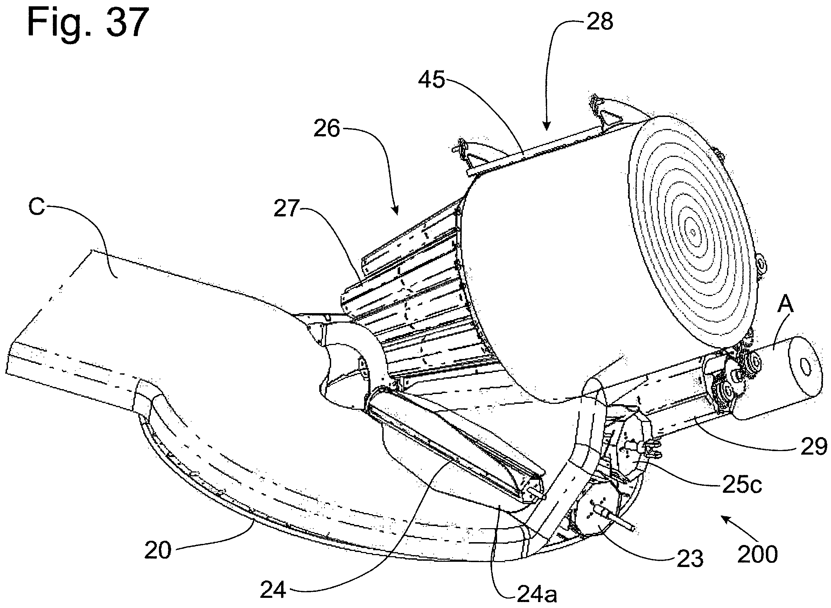

As depicted in Figs. 36 and 37, crop material C is picked up from the surface of the ground by the pick-up mechanism 19 and delivered rearwardly onto the feed table 20. The feed table 20 is rotated by a drive apparatus (not shown) that can be a friction drive powered by the rotational power delivered to the gearbox 51 by the tractor PTO (not shown) in a counter clockwise direction, when viewed from above the feed table 20. The feed table 20 transfers the delivered crop material around the central hub to the starter roll 24 which is rotated such that the bottom of the starter roll 24 moves in the same direction as the feed table 20.

A lightweight pivoted member (not shown) is placed over the flow of crop material on the feed table 20 to pivot in conformance to the volume of crop material on the feed table 20. The lightweight pivoted member is operatively connected to a sensor (not shown) that sends a signal to a computer (not shown) on the machine 10 that is reflective of the volume of crop material. The computer controls the operative speed of the hydraulic motor 65 which in turn controls the speed of rotation of the tapered rolls 27 and the cylindrical rolls 29 that define the speed of rotation of the forming bale and the rate of protrusion of the forming bale from the cylindrical bale-forming chamber 28. Accordingly, when the lightweight member is pivoted downwardly to indicate a light volume of crop on the feed table 20, the speed of the continuous round baler 10 is slower so that a consistent volume of crop material C is fed into the conical bale-forming chamber 26.

The starter roll 24 has flaps 24a, as best seen in Figs. 33 to 35, that compress the crop material C against the feed table 20 and against the feed strips 22 that urge crop material outwardly on the feed table 20 during the transfer from the pick-up mechanism 19 to the starter roll 24. As the crop material passes underneath the starter roll 24, the flaps 24a start to elevate the crop material upwardly into engagement with the dual conical feed roll 25. The forward conical portion 25b is oriented such that the top surface is in alignment with the conical bale-forming chamber 26. The feed roll 25 is rotatably driven in opposition to the starter roll 24 so that the crop material being elevated by the flaps 24a will be fed by the forward conical portion 25b into the conical bale-forming chamber 26 where the crop material is rotated by the tapered rolls 27 to create a conically-shaped core of crop material.

For the first bale that is being formed in the conical bale-forming chamber 26, the crop material C is placed into an empty conical bale-forming chamber and is rotated by the conical rolls 27 until sufficient crop material has been added to form a conical core of crop material. Accordingly, as more crop material is added into the conical bale-forming chamber 26, the conical core begins to form and is pushed out of the conical bale-forming chamber and into the cylindrical bale-forming chamber 28 by the additional crop material being fed into the conical bale-forming chamber 26. As noted above, the rear bale support member 35 can be extended into the cylindrical bale-forming chamber 28 to partially fill the cylindrical bale-forming chamber 28 and to help increase the density of the first bale.

Meanwhile, additional crop material C is fed into the conical bale-forming chamber 26 and with the rear bale support member 35 controlling density of the forming bale, the density of the conical core of crop material increases to an acceptable level and progressively moves into the cylindrical bale-forming chamber 28 where the rearward conical portion 25c of the feed roll 25 applies crop material C onto the outside of the conical core of the bale moving into the cylindrical bale-forming chamber 28 to increase the diameter of the forming bale by adding crop material C in a straight, essentially non-conical manner on the outside surface of the forming bale.

As the forming bale protrudes into the cylindrical bale-forming chamber 28, the net wrapping material is fed between cylindrical rolls 29 on the right clamshell 44 along the upper portion of the cylindrical rolls to engage the surface of the forming bale and keep the netting material on the outside surface. The netting material has to be applied to the outside surface of the bale after and downstream of the location at which the layer(s) of crop material have been applied by the rearward conical portion 25c of the feed roll 25 in the cylindrical bale-forming chamber. The rotation of the round bale pulls the netting material along, pulling it from the supply of netting material such as from a roll of netting material A mounted outside of the cylindrical bale-forming chamber 28. The netting material is applied continuously as the forming bale is rotated so that the protrusion of the formed bale out of the cylindrical bale-forming chamber 28 is a completed round bale ready to be severed when sufficient length has protruded.

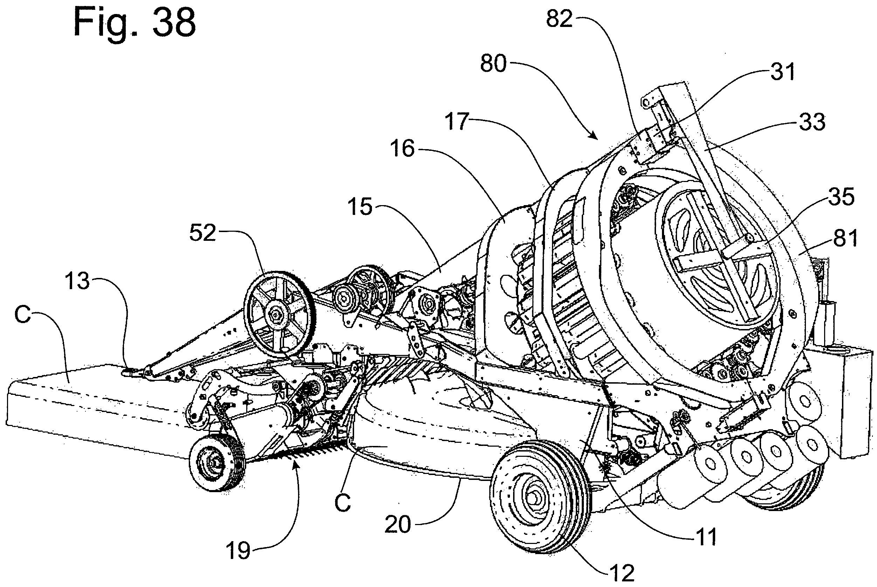

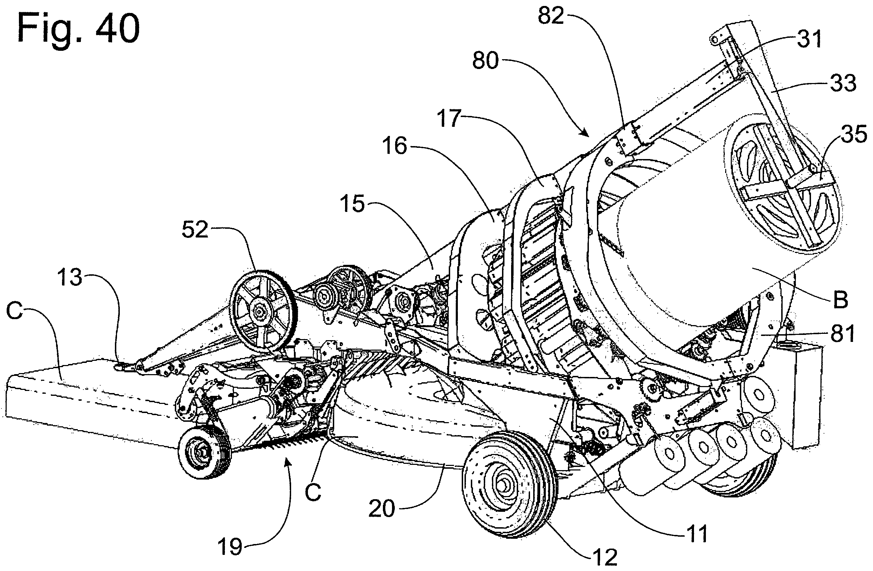

As depicted in Figs. 37 and 38, the formed bale with netting material wrapped around the outer surface thereof continues to grow, and protrude further from the cylindrical bale-forming chamber 28 with the rear bale support member 35 engaged into the distal end of the formed round bale and freely rotating with the formed bale. As is depicted in Figs. 39 and 40, the trip member 92 has actuated the latch mechanism 87 and released the severance mechanism 80 from the fixed outer member 30 to move with the inner telescoping member 31 as the forming bale continues to grow. A switch (not shown) activates the hydraulic cylinders 86 to cause the knives 85 to swing into engagement with the formed bale.

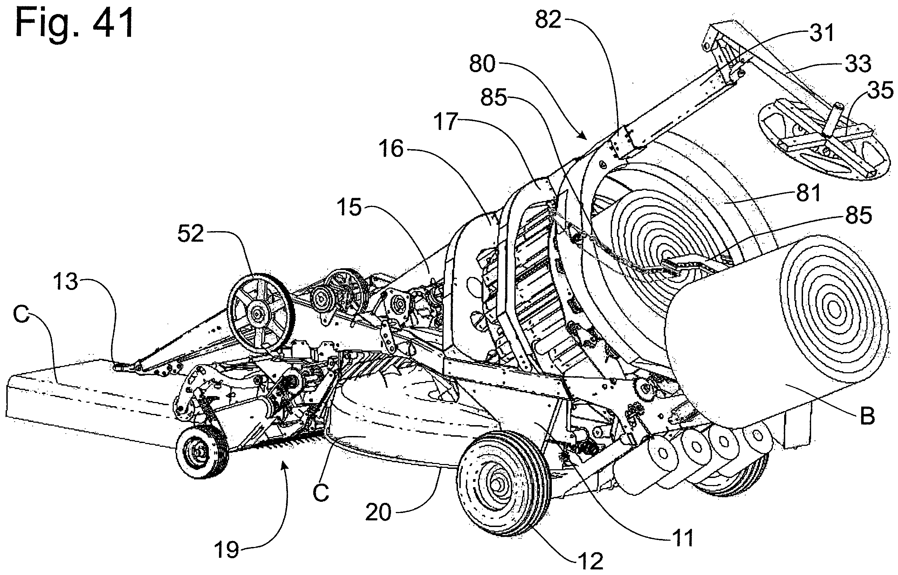

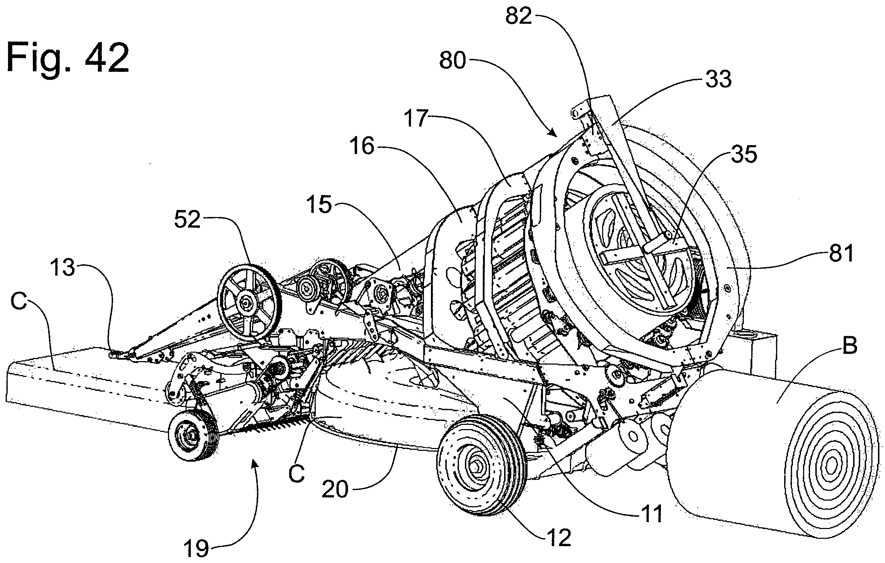

As the knives 85 are pushed into the centre of the formed bale, the rear bale support member 35 remains engaged with the end of the selected bale to provide some support thereto until the knives 85 have reached the end of their pivoted stroke and have complete the severing of the selected bale B. The rear bale support member 35 then pivots away from the selected bale B and allows the bale to fall to the ground as is depicted in Figs. 41 and 42. The rear bale support member 35 is then retracted into engagement with the end of the forming bale by the telescoping retraction of the inner telescoping member 31 into the fixed outer member 30, as shown in Fig. 42. The severance mechanism 80 retracts to the home position latched to the fixed outer member 30 of the beam 15, while the knives 85 are also retracted to their home position within the severance frame 81.

### Enhancement Devices

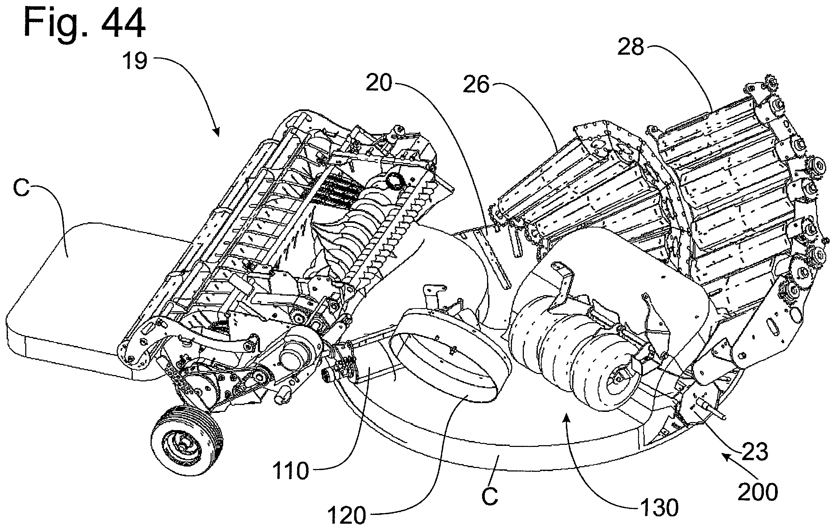

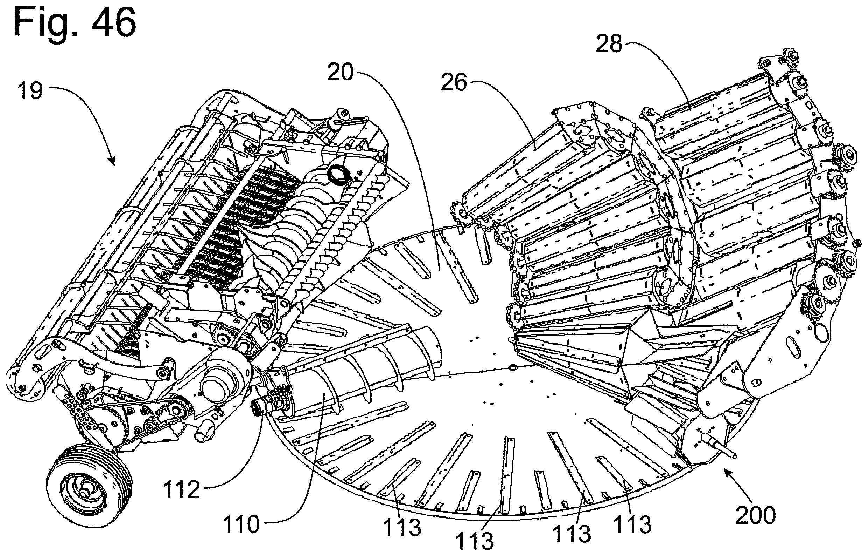

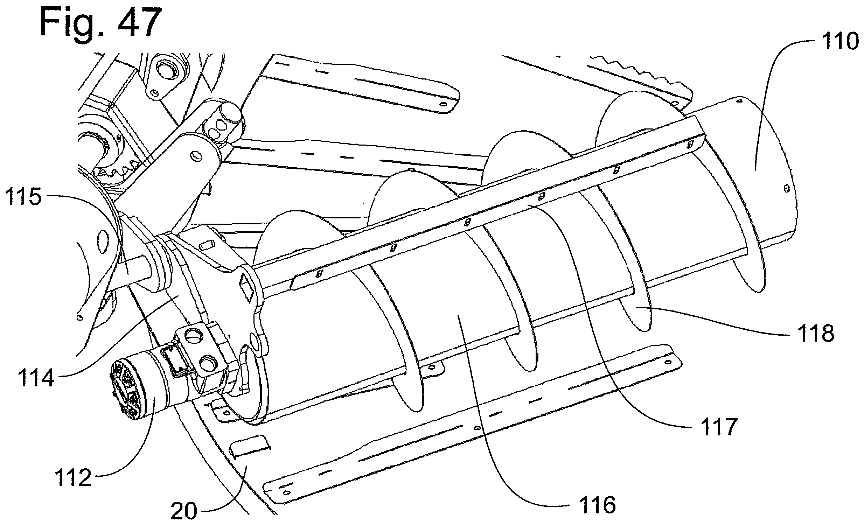

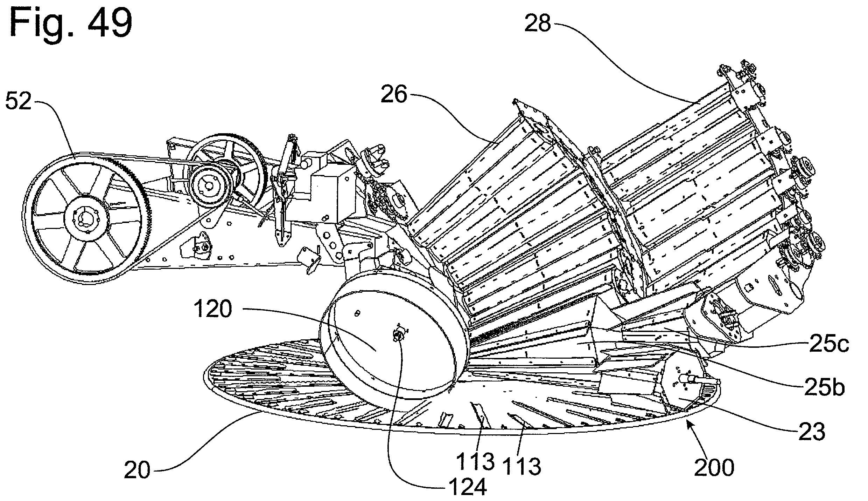

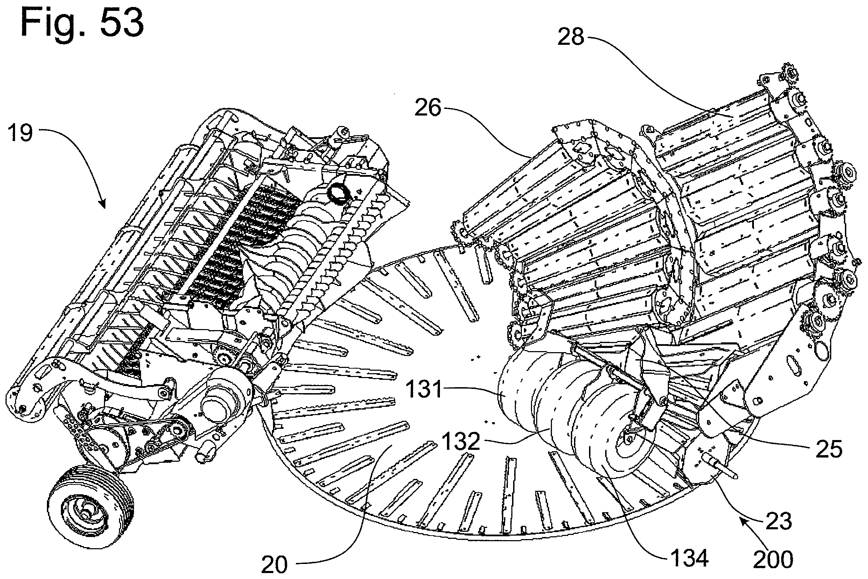

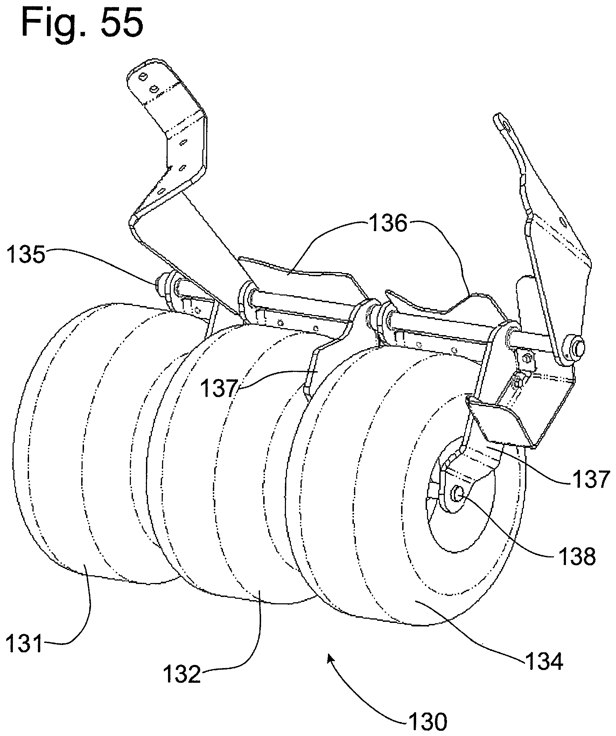

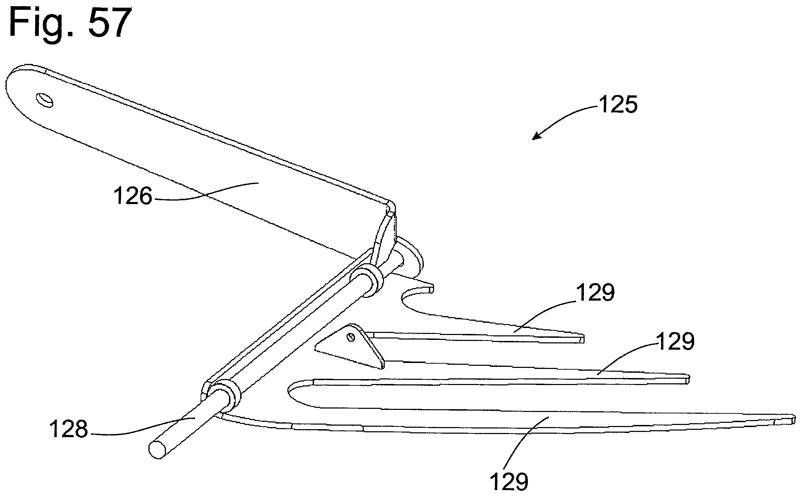

Referring now to Figs. 44 to 58 another embodiment of the continuous round baler according to the invention will now be described. The round baler according to this embodiment of the invention is substantially similar to that already described with reference to Figs. 1 to 43, and similar components are identified by the same reference numerals. This embodiment of the round baler comprises a number of enhancement devices devised to enhance the flow of crop material from the crop pick-up mechanism 19 into the bale chambers 26, 28 and can best be seen if Figs. 44 to 58. One skilled in the art will recognize that the discharge of crop material from the crop pick-up mechanism 19 is in a longitudinal direction parallel with the direction of travel of the continuous round baler 10; however, the crop material must enter into the bale chambers 26, 28 in a generally transverse direction, substantially transverse to the normal direction of travel of the baler 10. Furthermore, the flow of crop material into the bale chambers 26, 28 needs to be uniform across the radial width of the rotary feed table 20. The transition of the flow of the crop material being discharged from the crop pick-up mechanism 19 onto the rotary feed table 20 tends to overload the outer periphery of the feed table 20 with less material along the inner portions of the feed table. Accordingly, in this embodiment of the invention the arcuate starter strips are omitted from the upper surface of the rotary feed table, and are replaced by circumferentially spaced apart radially extending strips 113 on the upper surface of the rotary feed table 20. The strips 113 are provided on the rotary feed table 20 to engage the crop material C on the rotary feed table 20, so that the crop material C is moved with the rotary feed table 20 as the rotary feed table 20 rotates.

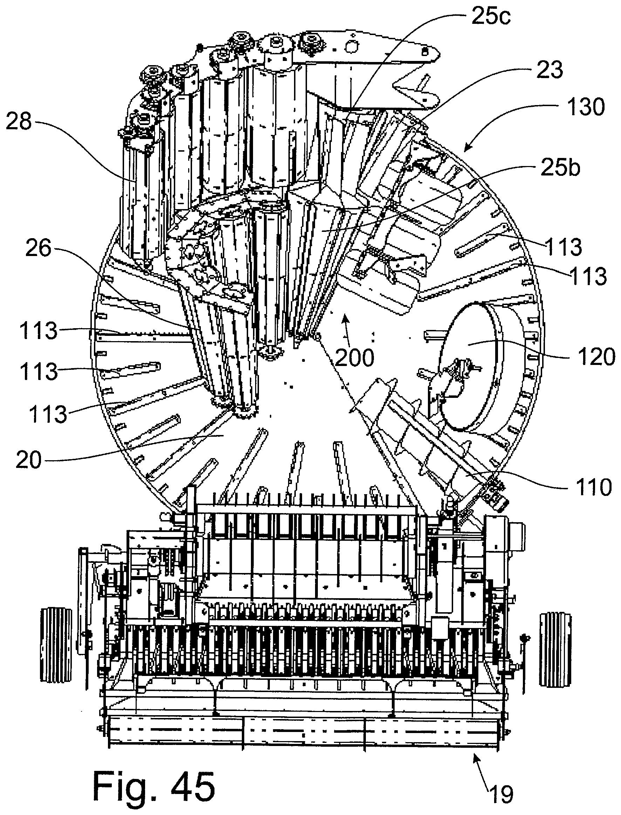

A first one of the enhancement devices comprises a crop distribution device provided for distributing the crop material on the rotary feed table 20. The crop distribution device comprises an auger distribution device 110 best seen in Figs. 45 to 47 that is oriented radially with respect to the rotary feed table 20. The auger distribution device 110 is rotatably mounted on the shaft (not shown) of the hydraulic drive motor 112 and extends in a cantilevered manner from the hydraulic motor 112. The hydraulic motor 112 is mounted on a support arm 114 that in turn is mounted on a pivot axis 115 that enables the auger distribution device 110 to rise vertically when encountering a heavy flow of crop material that is to pass beneath the cantilevered auger distribution device 110.

The auger distribution device 110 is formed with helical flighting 118 spiralled around the circumference of the auger body 116. A scraper 117 is mounted on the support arm 114 such that the flighting 118 turns underneath the scraper 117 that prevents the crop material from wrapping about the auger body 116. The hydraulic motor 112 rotates the auger body 116 in a counter-clockwise direction, when view from the hydraulic motor 112, so that the auger flighting 118 pushes crop material under the auger body 116 assisting the rotary feed table 20 to move crop rearward. The auger flighting 118 also pushes a portion of that crop material along the auger body 116, as the feed table 20 is rotating, toward the central portions of the rotary feed table 20 to move a portion of the crop material from the outer periphery toward the inner portion of the feed table 20.

One of ordinary skill in the art will recognize that the operation of the auger distribution device 110 will be different when a smaller diameter round bale is being formed compared to when a larger diameter round bale is being formed. For a smaller diameter round bale, for example a four foot diameter round bale, the tapered feed roll 25 should operate to feed substantially equal amounts of crop material into the conical and cylindrical bale chambers 26, 28. However, when the cylindrical bale chamber 28 is pivoted outwardly, as described above, to affect the formation of a larger diameter round bale, such as a five foot diameter round bale, the crop material being fed into the forward portion of the cylindrical bale-forming chamber 28 would have to be increased as compared to forming a four foot diameter round bale. Accordingly, the operation of the auger distribution device needs to be modified to allow a larger amount of crop material to remain along the outer circumference of the feed table so that more crop material will be fed into the cylindrical bale-forming chamber 28. This adjustment can be accomplished through a manipulation of the rotational speed of the auger distribution device 110.

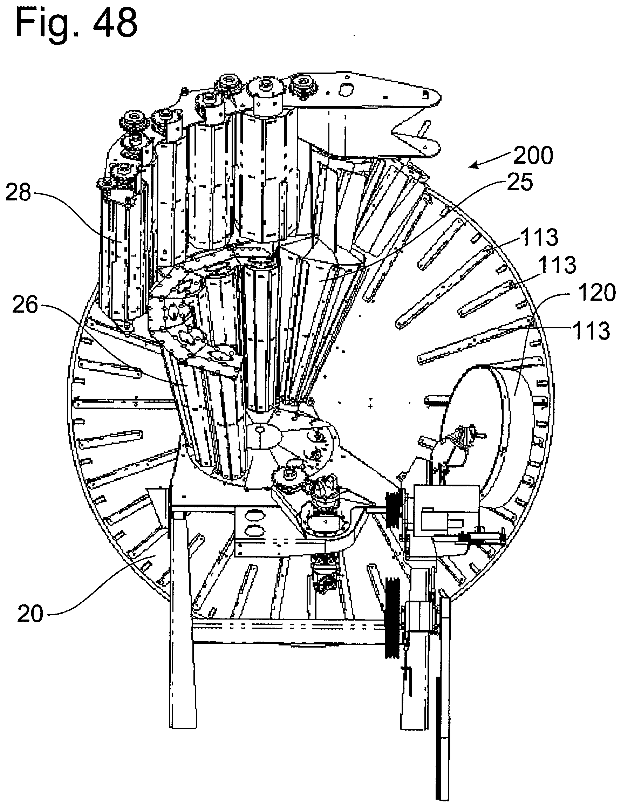

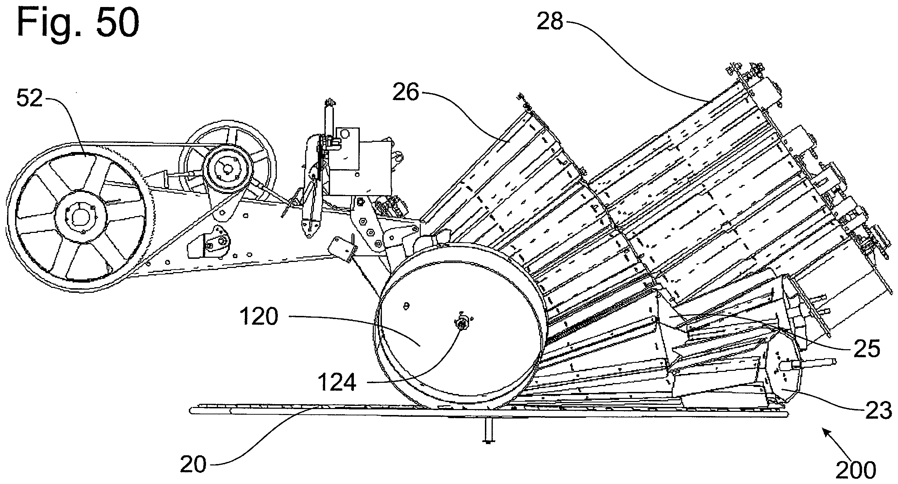

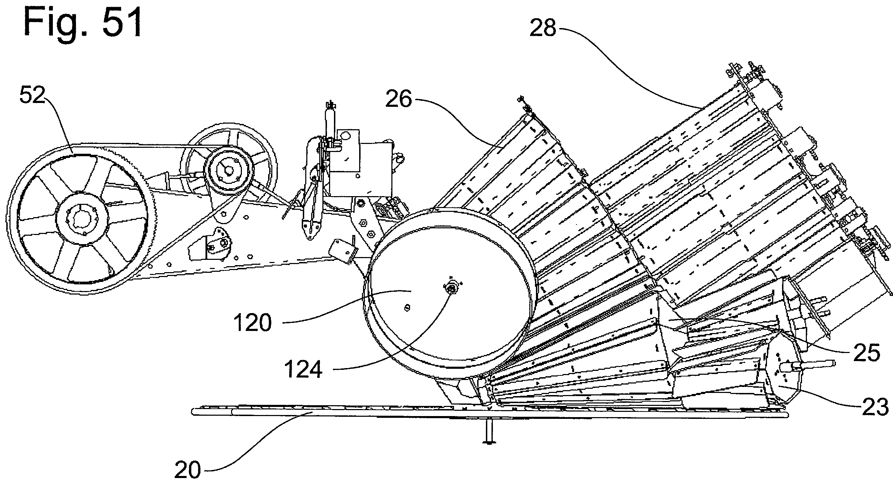

The next one of the enhancement devices can be seen best in Figs. 48 to 51, and comprises a gauge wheel 120 which is pivotally mounted for vertical movement over the top of the flow of crop material on the rotary feed table 20. The gauge wheel 120 is canted slightly from being vertically oriented, but is rotatable about a stub shaft 124, although driven only through contact with the top surface of the feed table 20 or via contact with the crop material rotating on the feed table 20. The gauge wheel 120 pivots vertically upwardly as the depth of crop material on the rotary feed table 20 increases, and in turn as the flow of crop material increases in volume. The purpose of the gauge wheel 120 is to move vertically in relation to the depth of the crop material on the rotary feed table 20 being conveyed to the bale chambers 26, 28. When the flow of crop material is light, the gauge wheel 120 is in a lower position, as is reflected in Fig. 50, and when the flow of crop material is heavy, the gauge wheel 120 moves vertically upwardly to a position as shown in Fig. 51.

The gauge wheel 120 is connected, electronically or physically to a control mechanism (not shown) that cooperates with the drive mechanism for the rollers 27, 29 to control the rate of rotational speed to the rollers 27, 29. As is noted above, the bale of crop material being formed in the bale chambers 26, 28 is rotated by the rollers 27, 29 at a speed commensurate with the rate of crop material being fed into the bale chambers 26, 28. As a result, the application of netting material onto the forming bale is substantially uniform. Accordingly, the control mechanism increases the rate of rotational speed for the rollers 27, 29 as the gauge wheel 120 rises from the lowermost position shown in Fig. 50 to the raised position shown in Fig. 51.

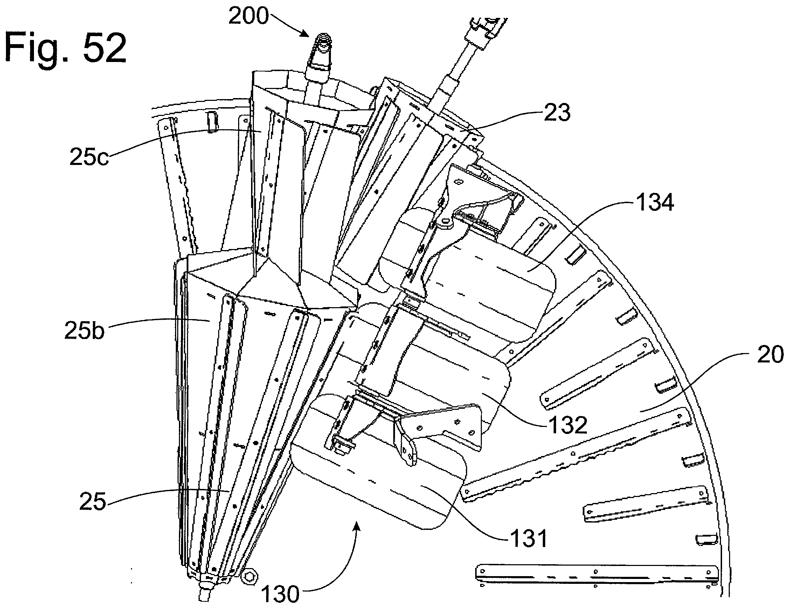

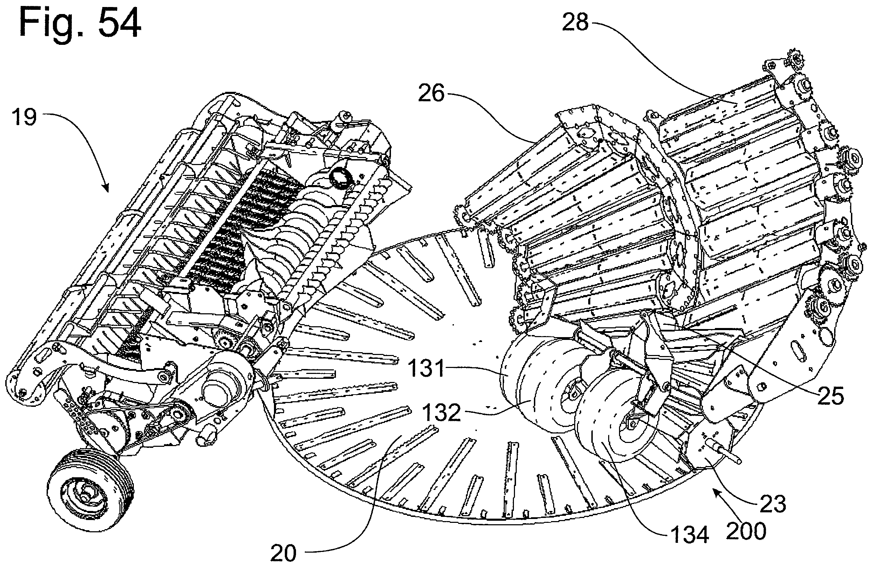

The next enhancement device comprises a modified infeed apparatus 200. In this embodiment of the invention, the infeed apparatus 200 comprises the dual conical feed roll 25, but the starter roll 24 has been omitted and replaced with a pinch roller apparatus 130, which comprises a series of, preferably, three individual, and separately operable, pinch rollers 131, 132 and 134. The pinch roller apparatus 130 and the dual conical feed roll 25, as well as the assist roll 23, and their cooperating action can best be seen in Figs. 52 to 55. Each of these individual pinch rollers 131, 132 and 134 are in contact with the feed roll 25, with the inward pinch roll 131 and the centre pinch roll 132 being engaged with the forward conical portion 25b, and the outward pinch roll 134 being engaged with the assist roll 23. Each pinch roller 131, 132 and 134 is separately mounted for vertical pivotal movement about the pivot axis 135. This pivotal movement is shown as an example in Fig. 54 with the centre pinch roller 132 being pivoted upwardly relative to the pinch rollers 131, 134 to either side thereof.

These pinch rollers 130 are not driven, but do rotate with engagement with the feed roll 25 and the assist roll 23 and with engagement with the flow of crop material passing beneath the pinch rollers 130. The shaft 138 defining the axis of rotation for each pinch roller 131, 132, 134 is supported by a mounting bracket 137 on one side of each of the pinch rollers 131, 132 and 134, with the mounting brackets 137 providing the pivotal connection of each respective pinch roller 131, 132, 134 to the pivot axis 135. Each pinch roller 131,132, 134 is also provided with a scraper 136 supported from the corresponding mounting brackets 137 so that crop material is not carried over top of the pinch rollers 130. In operation, the pinch rollers 130 pinches the crop material against forward portion of the feed roll 25b and assist roll 23 to help feed the crop material into the respective bale chambers 26, 28.

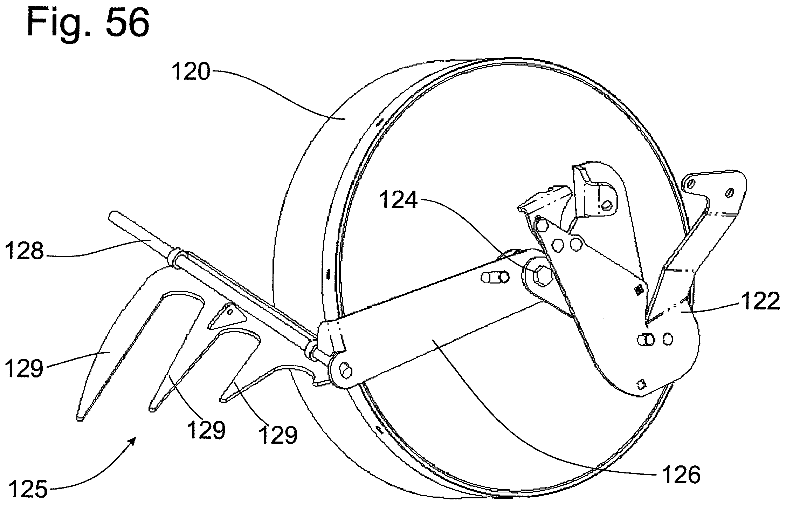

A windguard 125 presents an optional infeed assist component and is depicted in Figs. 56 to 58. The windguard 125 is formed with a mounting arm 126 that connects with the gauge wheel 120 on the stub shaft 124 on the back side of the gauge wheel 120, positioning the prongs 129 between the gauge wheel 120 and the pinch rollers 130. The prongs 129 are pivotable about a pivot shaft 128, but are preferably biased into a neutral position by a spring (not shown) so that the windguard can function to keep the crop material from bunching up between the gauge wheel 120 and the pinch rollers 130. The pivot shaft 128 extends outwardly beyond the prongs 129 so as to rest on a frame member 11 positioned peripherally outside of the rotary feed table 20.

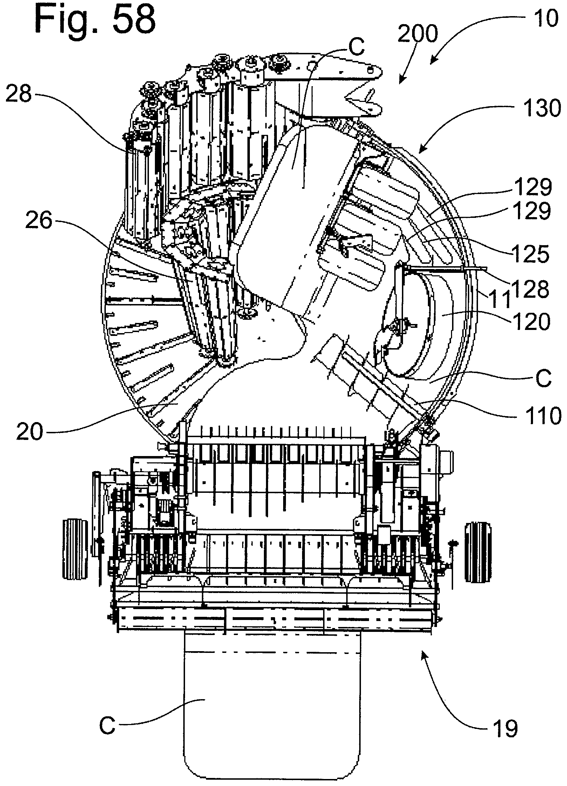

The operation of the enhancement devices, namely, the auger device 110, the gauge wheel 120 and the infeed apparatus 200 components, is shown in Fig. 58. The crop material is elevated by the crop pick-up mechanism 19 and deposited on the rotary feed table 20 immediately rearwardly of the pick-up 19. As the rotation of the feed table moves the elevated crop material laterally toward the left side of the baler 10. The crop material on the feed table first engages the auger distribution device 110 that is powered in rotation by the hydraulic motor 112 in a manner that the helical flights 118 push crop material rearwardly along the rotary feed table 20 and inwardly toward the central part of the feed table 110, thus evenly spreading the crop material radially across the feed table 20. The gauge wheel 120 then measures the thickness of the crop material being conveyed along the feed table 20, although an ancillary function of the gauge wheel 120 is to press the crop material downwardly onto the feed table 20. The subsequent windguard 124, if utilized, simply controls the flow of crop material on the feed table in a manner that the crop material will not bunch up when engaged by the pinch rollers 131, 132 and 134 of the pinch roller apparatus 130. The pinch roller apparatus 130 then forces the crop material beneath the individual rollers 131, 132, 134 and into engagement with the feed roll 25 and the assist roll 23, respectively.

### Drive for Rear Bale Support Member

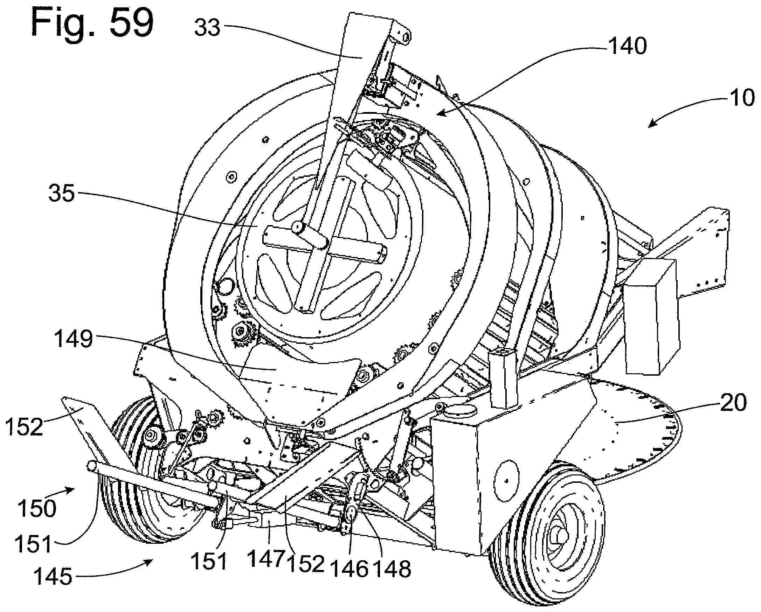

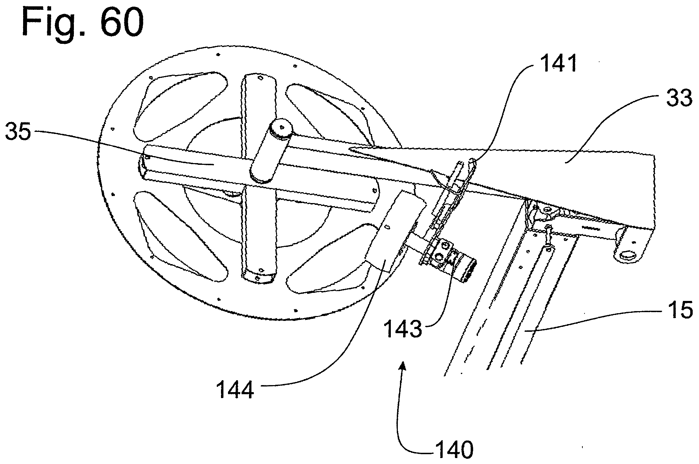

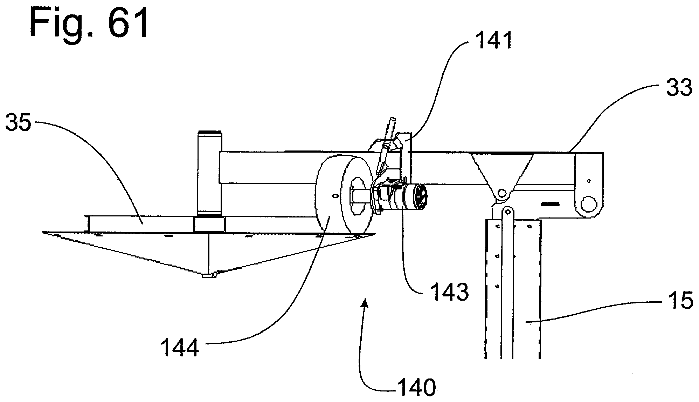

Referring now to Figs. 59 to 61, the distal or rear bale support member 35 is preferably provided with a drive apparatus 140 to cause a selective rotation of the bale support member 35 under circumstances where the bale severance mechanism 80 has been activated. The knives 85 cutting into the bale work best when the bale is being rotated. The formed bale is rotated, as described above, by the rollers 29 in the cylindrical bale chamber 28; however, as the knives 85 slice through the formed bale to create a severed bale B that can be discharged to the ground, the connection between the bale being severed and the formed bale has been interrupted and the severed bale tends to stop rotating. In such circumstances, the drive apparatus 140 drives the rotation of the severed bale through the connection thereof with the rear bale support member 35, thus enabling the knives 85 to finish the severance process and part the severed bale from the formed bale.

The drive apparatus 140 includes a hydraulic motor 143 that is configured to be free-wheeling when not powered hydraulically. This hydraulic motor 143 is mounted on a support bracket 141 that is welded (preferably) to the rear support member 33. The hydraulic motor 143 powers the rotation of a drive wheel 144 that engages the upper surface of the bale support member 35 to drive the rotation thereof through a frictional engagement between the drive wheel 144 and the bale support member 35. Thus, when the bale support member 35 is in engagement with the rearward end of the bale to be severed, the rotation of the drive wheel 144 will cause rotation of the bale being severed.

Before the severance mechanism 80 is activated, as is described in detail above, the hydraulic motor 143 is in a free-wheeling mode because the flow of hydraulic fluid to the drive motor 143 is interrupted. A preferred manner to accomplish this objective is to include a solenoid valve (not shown) in the hydraulic circuit to the motor 143. Thereby, the solenoid valve interrupts the flow of hydraulic fluid to the motor 143 to permit the motor to freely turn with the movement of the rear bale support member 35 before the severance mechanism 80 is activated. Then, when the severance mechanism 80 is activated, a signal is sent to the solenoid valve to allow the motor 143 to be powered hydraulically. Preferably, the motor 143 has insufficient power to override the rotation induced into the formed bale by the rotating rollers 29, so that the motor 143 will not affect rotation of the bale being severed until a disconnect with the formed bale has occurred. Then, once the knives are retracting or have been retracted to their home position, as described in detail above, the solenoid valve is again signalled to stop the flow of fluid to the motor 143 and allow the motor 143 to revert to the free-wheeling mode.

However, one skilled in the art will recognize that the drive mechanism 140 utilizing a drive wheel 144 to rotate the bale support member 35, is merely one of several different drive mechanisms 140 that could be used to provide the desired drive to the bale support member 35. For example, a direct drive alternative would come to mind in which the hydraulic motor 143 is coupled to a chain drive mechanism (not shown) or a belt drive mechanism (not shown) to cause rotation of the bale support member 35 in a positive manner without relying on the frictional engagement between the drive wheel 144 and the upper surface of the bale support member 35.

### Bale Discharge Drop Assist Apparatus

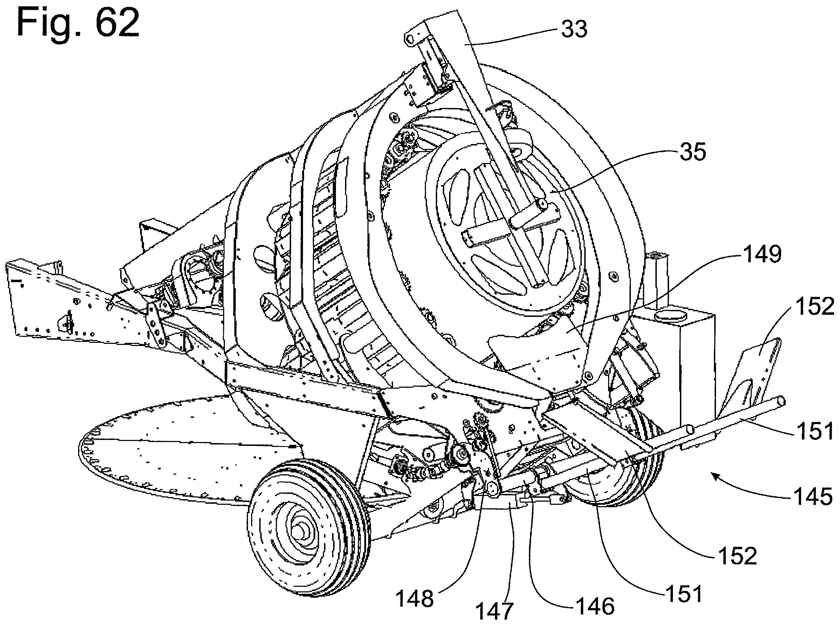

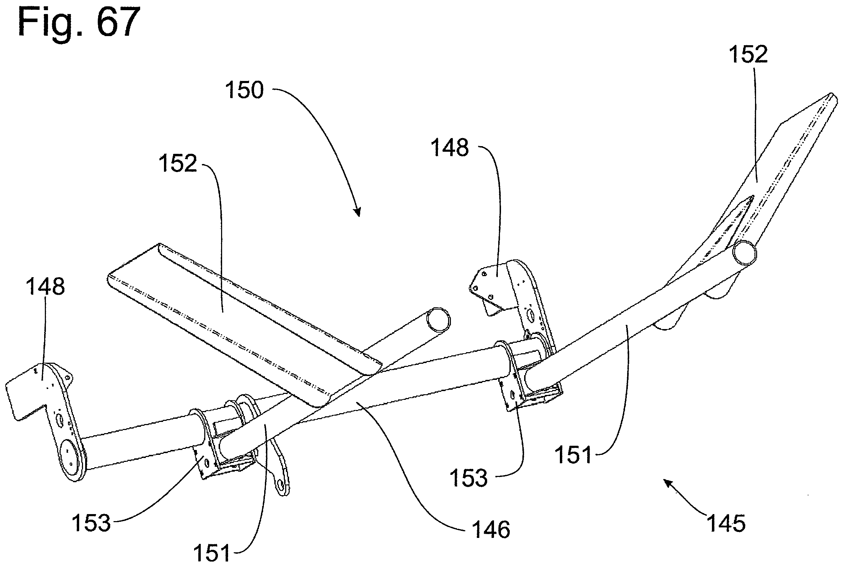

As is shown in Figs. 62 to 67, the rear of the continuous round baler 10 is preferably provided with a bale discharge drop assist apparatus 145. A slide plate 149 mounted to the severance frame 81 directs a severed bale onto the drop assist apparatus 145. The drop assist apparatus 145 comprises a receiver 150 pivotally connected to the frame 11 below the bale to be severed for receiving a severed bale thereon, and for lowering the severed bale onto the ground. As is best seen in Fig. 67, the receiver 150 is formed with a transversely extending pivot bar 146 that is pivotally supported by brackets 148 affixed to the frame 11. Extending rearwardly from the transverse pivot bar 146, a pair of laterally spaced support members 151 having mounted thereon outwardly and upwardly projecting flanges 152 complete the receiver 150. A hydraulic cylinder 147 serves as a shock absorber and a damping means, and interconnects the pivot bar 146 and the frame 11 for absorbing the shock of the severed bale as it drops onto the receiver 150, and for damping and retarding downward pivoting of the receiver 150 for slowly lowering the bale to the ground.

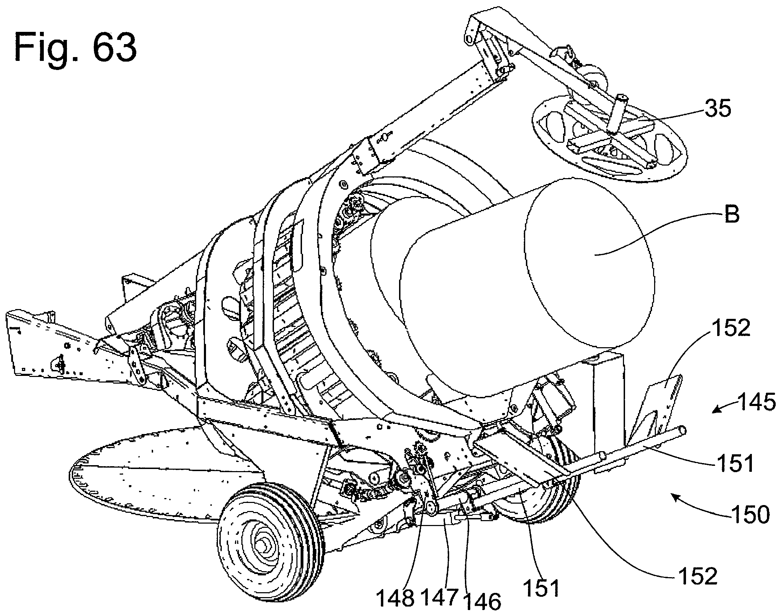

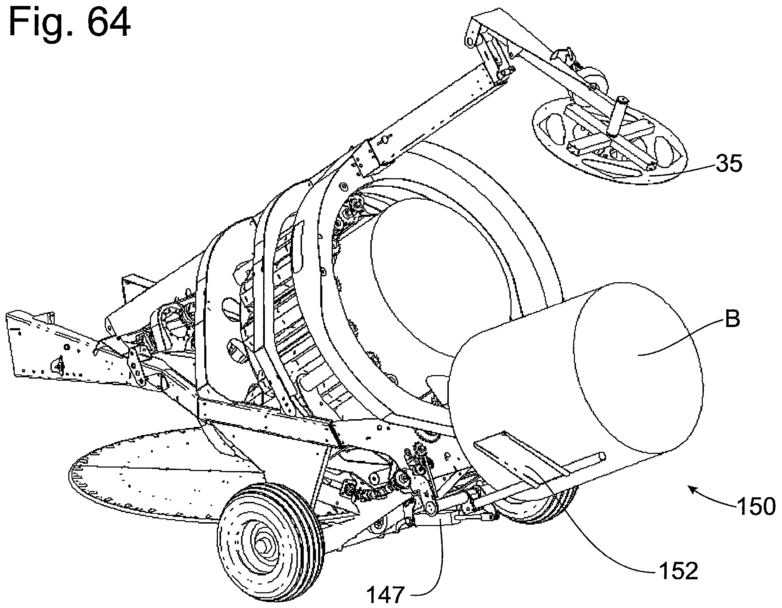

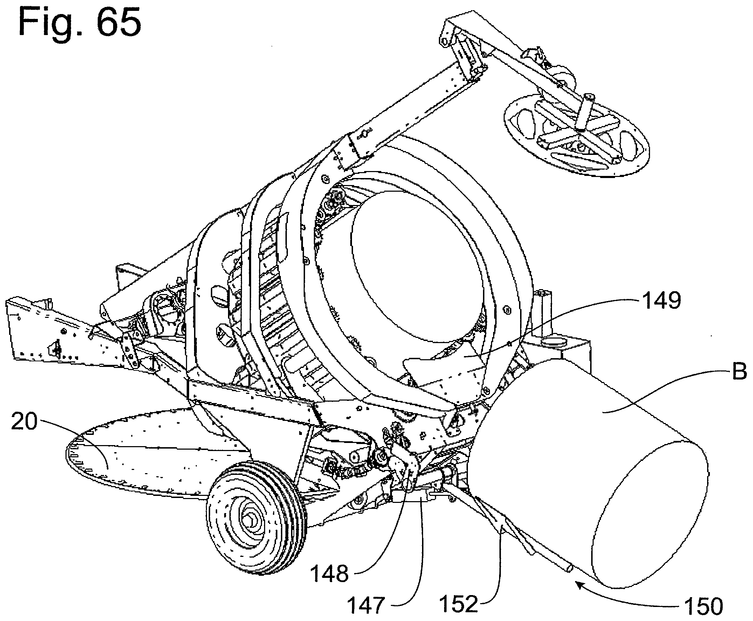

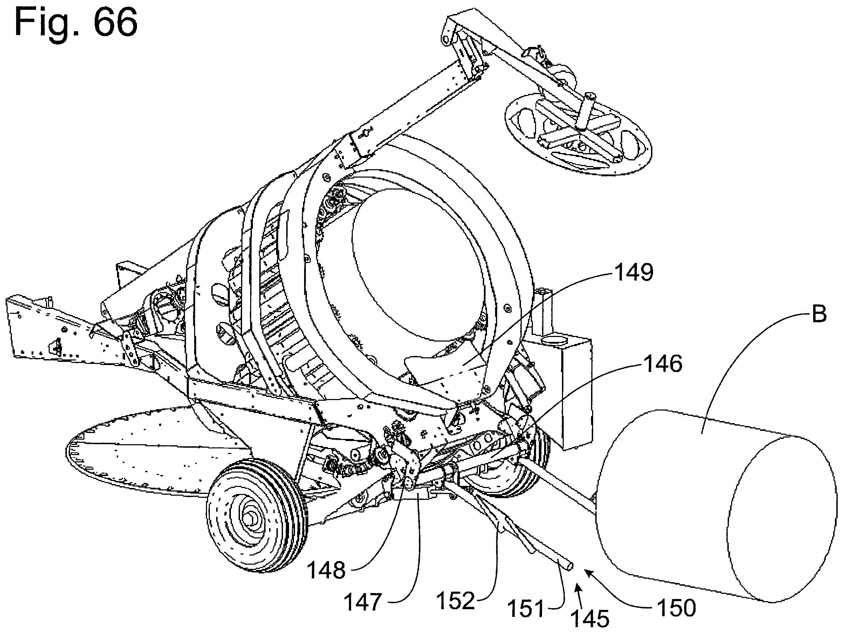

The sequence of the operation of the bale discharge drop assist apparatus, is seen in Figs. 63 to 66. When a severed bale B is discharged from the baler 10, as is described above, the severed bale B is dropped vertically from the formed bale retained in the cylindrical bale chamber 28. As depicted in Fig. 63, the slide plate 149 guides the severed bale B downwardly toward the receiver 150, which receives the severed bale B between the rearwardly extending support members 151, as is shown in Fig. 64. The upwardly and outwardly extending lateral flanges 152 are operable to guide the falling severed bale B into the rearwardly extending support members 151. The weight of the severed bale B causes the pivot bar 146 to rotate, as is depicted in Fig. 65, slowed by the connected hydraulic ram 147 to gently deposit the severed bale B onto the surface of the ground. Once the severed bale B engages the ground, friction between the severed bale B and the ground will allow the rearwardly extending support members 151 to disengage the severed bale B with the forward movement of the baler 10, as is depicted in Fig. 66. The hydraulic ram 147 will then return the receiver 150 upwardly into the home position to receive the next severed bale B.

It will be understood that changes in the details, materials, steps and arrangements of parts which have been described and illustrated to explain the nature of the invention will occur to and may be made by those skilled in the art upon a reading of this disclosure within the principles and scope of the invention. The foregoing description illustrates the preferred embodiment of the invention; however, concepts, as based upon the description, may be employed in other embodiments without departing from the scope of the invention.

In the way of example, the rotary feed table 20, which transfers elevated crop material from the pick-up mechanism 19 to the conical bale-forming chamber 26, could take the form of a structure other than a rotary planar feed table, such as a conveyor mechanism that conveys the crop from the pick-up mechanism 19 to the infeed apparatus 200.

One skilled in the art will also recognize that the movement of the crop material on the rotary feed table provides a match for the peripheral speed of the bale being formed in the bale chambers 26, 28. The speed of movement of the crop material on the outer periphery of the feed table is faster than the speed of movement of the crop material at the innermost portion of the feed table 20. The outer circumference of the bale being formed has a matching speed of movement. The forming bale at the upstream end of the conical bale-forming chamber 26 moves more slowly than the outer circumference of the forming bale at the downstream end of the conical bale-forming chamber 26 because the diameter of the forming bale is larger than at the upstream end of the conical bale-forming chamber. Likewise, the cylindrical bale-forming chamber 28 has a larger diameter than any portion of the conical bale chamber 26. Thus, the faster moving crop material along the outer periphery of the feed table 20 is fed into the cylindrical bale-forming chamber 28, and the slowest moving crop material at the inner portion of the feed table 20 is fed into the conical bale-forming chamber adjacent the upstream end thereof.

While the round baler has been described as comprising the conical bale-forming chamber and the cylindrical bale-forming chamber being substantially aligned with the normal direction of travel of the baler, it will be appreciated that in some embodiments of the invention the alignment of the conical and cylindrical bale-forming chambers may extend at an angle relative to the normal direction of travel of the baler, for example, in some embodiments of the invention, it is envisaged that the conical and cylindrical bale-forming chambers may be aligned substantially transversely with the normal direction of travel of the baler. In which case, the bale would be urged through the bale-forming chambers in a general direction transversely of the normal direction of travel of the baler.

Needless to say, any other alignment arrangement of the bale-forming chambers with the direction of travel of the baler may be provided.

While a particular construction of partly semi-circular arrays of cylindrical rolls of the cylindrical bale-forming chamber have been described for facilitating varying of the diameter of the formed round bale, any other suitable construction and arrangement of the cylindrical rolls of the cylindrical bale-forming chamber may be used.

It will also be appreciated that while two specific selectable diameters of round bales have been described, the cylindrical bale-forming chamber may be configured to produce bales of many suitable selectable diameters.

It will also be appreciated that the bales may be severed to be of any suitable selectable desired length. Additionally, it will be appreciated that while the round balers have been described as being configured for facilitating the forming of bales of selectable diameters and selectable lengths, it will be appreciated that in some embodiments of the invention neither the diameter nor the length of the bale will be selectable.

While the crop distribution device has been described as comprising an auger, it will be appreciated that any other suitable crop distribution device may be provided besides a distributing auger.

It is also envisaged that other suitable bale drop apparatus besides that described may be provided for lowering a severed bale onto the ground.

Needless to say, any other suitable drive arrangements for driving the various components of the apparatus may be provided, and in some embodiments of the invention, instead of providing hydraulically powered motors, some or all of the motors may be electrically powered or pneumatically powered, or mechanical drives may be taken directly from a power-take-off shaft of a prime mover for driving the various components of the baler.

It will also be appreciated that any other suitable pressure inducing means besides a hydraulic ram may be provided for controlling the density of the bale.

It will also be appreciated that any other suitable means for determining the depth of the crop material on the rotary feed table or on any other suitable crop conveying means may be provided besides a gauge wheel. In fact, in some embodiments of the invention it is envisaged that a skid plate instead of a gauge wheel may be provided, which would be configured to freely ride on top of the crop material on the rotary feed table or on other suitable crop conveying means as the crop material is being delivered to the infeed apparatus.

It will also be appreciated that other suitable infeed apparatus besides that described may be provided.

It will also be appreciated that in some embodiments of the invention the windguard may be omitted, or a windguard of other suitable construction may be provided.

It will of course be appreciated that any other suitable control arrangement for controlling the rotational speed of the rolls of the conical bale-forming chamber and the cylindrical bale-forming chamber in response to the depth of crop material on the rotary feed table or other suitable conveying means may be provided.

It will of course be appreciated that other suitable conveying means besides a rotary feed table may be provided for conveying crop material from the pick-up mechanism to the infeed apparatus.

## Claims

1. A round baler operable to form an axially extending round bale from crop material comprising:
a frame (11);
a conical bale-forming chamber (26) defining a central geometrical axis (26a), and formed from a plurality of tapered rolls (27) arranged in a generally circular array, the conical bale-forming chamber (26) being carried on the frame (11) and being configured to receive crop material therein, to form the crop material into a round bale and to urge the round bale axially therefrom;
a cylindrical bale-forming chamber (28) formed from a plurality of cylindrical rolls (29) arranged in a generally circular array, the cylindrical bale-forming chamber (28) being in communication with said conical bale-forming chamber (26) to receive a protrusion of said round bale urged from the conical bale-forming chamber (26) and to produce the round bale of crop material axially extending from the cylindrical bale-forming chamber (28);
a crop pick-up mechanism (19) for picking up crop material from the ground; and
a crop conveying means (20) receiving crop material from said crop pick-up mechanism (19) and presenting said crop material to said conical bale-forming chamber (26) in a generally transverse direction transversely relative to the central geometrical axis (26a) of the conical bale-forming chamber (26); **characterised in that**
an infeed apparatus (200) is provided that lifts the crop material from said crop conveying means (20) and feeds the crop material into said conical bale-forming chamber (26).

2. A round baler as claimed in Claim 1 **characterised in that** the infeed apparatus (200) comprises a feed roll (25) supported above said crop conveying means (20) adjacent said conical bale-forming chamber (26) to direct said crop material from said crop conveying means (20) into said conical bale-forming chamber (26).

3. A round baler as claimed in Claim 2 **characterised in that** the feed roll (25) is configured to direct the crop material from the crop conveying means (20) into the cylindrical bale-forming chamber (28).

4. A round baler as claimed in Claim 2 or 3 **characterised in that** said feed roll (25) comprises:
a first conical portion (25b) adjacent the conical bale-forming chamber (26), and operable to direct said crop material from the crop conveying means (20) into said conical bale-forming chamber (26); and
a second conical portion (25c) located axially aligned with said first conical portion (25b) and located adjacent the cylindrical bale-forming chamber (28), the second conical portion (25c) being operable to direct said crop material into an upstream portion of said cylindrical bale-forming chamber (28), relative to the direction of travel of the axially extending round bale.

5. A round baler as claimed in any of Claims 2 to 4 **characterised in that** the infeed apparatus (200) comprises a pinch roller apparatus (23, 24) supported above said crop conveying means to cooperate with said feed roll (25) to direct said crop material into said conical bale-forming chamber (26), said crop material passing beneath said pinch roller apparatus (23, 24) before engaging said feed roll (25).

6. A round baler as claimed in Claim 5 **characterised in that** the pinch roller apparatus (23, 24) is cooperable with the feed roll (25) to direct the crop material from the crop conveying means (20) into the cylindrical bale-forming chamber (28).

7. A round baler as claimed in Claim 5 or 6 **characterised in that** the pinch roller apparatus (23, 24) comprises at least one pinch roller member (24) cooperable with the feed roll (25) for urging crop material into the conical bale-forming chamber (26).

8. A round baler as claimed in any of Claims 5 to 7 **characterised in that** the pinch roller apparatus (23, 24) comprises at least two pinch roller members (23, 24), one of the pinch roller members (24) being cooperable with the feed roll (25) for urging crop material into the conical bale-forming chamber (24), and the other one of the pinch roller members (23) being cooperable with the feed roll (25) for urging the crop material into the cylindrical bale-forming chamber (28).

9. A round baler as claimed in any of Claims 5 to 8 **characterised in that** each respective pinch roller member (23, 24) is independently mounted for vertical pivotal movement to accommodate varying depths of the crop material passing underneath said pinch roller member (23, 24).

10. A round baler as claimed in any of Claims 2 to 9 **characterised in that** the infeed apparatus (200) comprises a starter roll (24) oriented to extend above the crop conveying means (20) and being located relative to the feed roll (25) so that the crop material passes beneath the starter roll (24) before engaging the feed roll (25), said starter roll (24) having a plurality of circumferentially extending flaps (24a) that compress the crop material onto the crop conveying means (20), said starter roll (24) being rotated in a direction that enables a lower surface of said starter roll (24) to move in the same direction as the crop conveying means (20) beneath said starter roll (24), the starter roll (24) being cooperable with the feed roll (25) to elevate crop material passing beneath the starter roll (24) into said conical bale-forming chamber (26).

11. A round baler as claimed in any preceding claim further comprising a crop distribution device (110) to distribute said crop material in a desired manner on said crop conveying means (20), the crop distribution device (110) being supported on the frame (11) above the crop conveying means (20), upstream of the infeed apparatus (200) relative to the direction of flow of the crop material on the crop conveying means (20).

12. A round baler as claimed in Claim 11 **characterised in that** said crop distribution device (110) comprises an auger (110) oriented generally transversely relative to the flow of the crop material on the crop conveying means (20), said auger (110) being positioned to engage said crop material as said crop material passes beneath said auger, said auger (110) having helical flighting that engages said crop material to move said crop material generally transversely relative to the flow of the crop material on the crop conveying means (20).

13. A round baler as claimed in any preceding claim **characterised in that** a gauge wheel (120) is rotatably supported to ride on top of the crop material on the crop conveying means (20), the gauge wheel (120) being pivotally mounted for vertical movement in response to the depth of the crop material passing beneath said gauge wheel (120), and being operatively connected to the rolls (27) of the conical and cylindrical bale-forming chambers (26) to control the speed of operation thereof in response to the depth of the crop material on the crop conveying means (20).

14. A round baler as claimed in any preceding claim **characterised in that** a severance mechanism (80) is operable to sever the cylindrical bale extending axially from the cylindrical bale-forming chamber (28) to form the round bale therefrom, the severance mechanism (80) is operable to engage the axially extending round bale when sufficient length has protruded from the cylindrical bale-forming chamber (28) to sever a selected length of said axially extending bale for discharge to the ground, and
is configured to travel with the round bale extending axially from the cylindrical bale-forming chamber (28) during severing thereof.

15. A round baler as claimed in any preceding claim **characterised in that** the cylindrical bale chamber (28) is configured to be selectively operable to form axially extending round bales of at least two different bale diameters, the cylindrical bale-forming chamber (28) being formed by two opposing partly semi-circular arrays (43, 44) of the cylindrical rolls (29), a first one of the partly semi-circular arrays (43) defining a left side of said cylindrical bale-forming chamber (28) and being pivotally mounted for movement about a first pivot (48), and a second one of the partly semi-circular arrays (44) defining a right side of the cylindrical bale-forming chamber (28), and being pivotally mounted for movement about a second pivot (49), said first and second partly semi-circular arrays (43, 44) being selectively pivotally movable between a first diameter position and a second diameter position for formation of said axially extending round bale of the selectable diameters.

## Patentansprüche

1. Rundballenpresse, die zum Formen eines sich axial erstreckenden Rundballens aus Erntegut eingerichtet ist, umfassend:
einen Rahmen (11);
eine konische Ballenformkammer (26), die eine geometrische Mittelachse (26a) definiert und aus einer Mehrzahl konischer Walzen (27) gebildet ist, die in einer im Allgemeinen kreisförmigen Anordnung angeordnet sind, wobei die konische Ballenformkammer (26) am Rahmen (11) getragen ist und eingerichtet ist, um Erntegut darin aufzunehmen, das Erntegut zu einem Rundballen zu formen und den Rundballen axial daraus zu drücken;
eine zylindrische Ballenformkammer (28), die aus einer Mehrzahl zylindrischer Walzen (29) gebildet ist, die in einer im Wesentlichen kreisförmigen Anordnung angeordnet sind, wobei die zylindrische Ballenformkammer (28) mit der konischen Ballenformkammer (26) in Verbindung steht, um einen Vorsprung des aus der konischen Ballenformkammer (26) gedrückten Rundballens aufzunehmen und den Rundballen aus Erntegut zu formen, das sich axial aus der zylindrischen Ballenformkammer (28) erstreckt,
einen Erntegutaufnahmemechanismus (19) zum Aufnehmen von Erntegut vom Boden und
eine Erntegutfördereinrichtung (20), die Erntegut aus dem Erntegutaufnahmemechanismus (19) aufnimmt und das Erntegut der konischen Ballenformkammer (26) im Allgemeinen in einer Querrichtung zuführt, die quer zur geometrischen Mittelachse (26a) der konischen Ballenformkammer (26) verläuft,
**dadurch gekennzeichnet, dass**
eine Zuführvorrichtung (200) bereitgestellt wird, die das Erntegut vom Erntegutfördereinrichtung (20) anhebt und das Erntegut der konischen Ballenformkammer (26) zuführt.

2. Rundballenpresse nach Anspruch 1, **dadurch gekennzeichnet, dass** die Zuführvorrichtung (200) eine oberhalb der Erntegutfördereinrichtung (20) neben der konischen Ballenformkammer (26) gestützte Förderwalze (25) umfasst, um das Erntegut aus der Erntegutfördereinrichtung (20) in die konische Ballenformkammer (26) zu leiten.

3. Rundballenpresse nach Anspruch 2, **dadurch gekennzeichnet, dass** die Förderwalze (25) eingerichtet ist, um das Erntegut aus der Erntegutfördereinrichtung (20) in die zylindrische Ballenformkammer (28) zu leiten.

4. Rundballenpresse nach Anspruch 2 oder 3, **dadurch gekennzeichnet, dass** die Förderwalze (25) umfasst:
einen ersten konischen Abschnitt (25b), der an die konische Ballenformkammer (26) angrenzt und eingerichtet ist, um das Erntegut aus der Erntegutfördereinrichtung (20) in die konische Ballenformkammer (26) zu leiten; und
einen zweiten konischen Abschnitt (25c), der axial mit dem ersten konischen Abschnitt (25b) ausgerichtet angeordnet ist und neben der zylindrischen Ballenformkammer (28) angeordnet ist, wobei der zweite konische Abschnitt (25c) eingerichtet ist, um das Erntegut in einen stromaufwärts gelegenen Abschnitt der zylindrischen Ballenformkammer (28) relativ zur Laufrichtung des sich axial erstreckenden Rundballens zu leiten.

5. Rundballenpresse nach einem der Ansprüche 2 bis 4, **dadurch gekennzeichnet, dass** die Zuführvorrichtung (200) eine oberhalb der Erntegutfördereinrichtung gestützte Andruckrollenvorrichtung (23, 24) umfasst, um mit der Förderwalze (25) zusammenzuwirken und dabei das Erntegut in die konische Ballenformkammer (26) zu leiten, wobei das Erntegut unter der Andruckrollenvorrichtung (23, 24) hindurchläuft, bevor es mit der Förderwalze (25) in Eingriff gelangt.

6. Rundballenpresse nach Anspruch 5, **dadurch gekennzeichnet, dass** die Andruckrollenvorrichtung (23, 24) mit der Förderwalze (25) zusammenwirkt, um das Erntegut aus der Erntegutfördereinrichtung (20) in die zylindrische Ballenformkammer (28) zu leiten.

7. Rundballenpresse nach Anspruch 5 oder 6, **dadurch gekennzeichnet, dass** die Andruckrollenvorrichtung (23, 24) mindestens ein Andruckrollenelement (24) umfasst, das mit der Förderwalze (25) zusammenwirkt, um das Erntegut in die konische Ballenformkammer (26) zu drücken.

8. Rundballenpresse nach einem der Ansprüche 5 bis 7, **dadurch gekennzeichnet, dass** die Andruckrollenvorrichtung (23, 24) mindestens zwei Andruckrollenelemente (23, 24) umfasst, wobei eines der Andruckrollenelemente (24) mit der Förderwalze (25) zusammenwirkt, um das Erntegut in die konische Ballenformkammer (26) zu drücken, und das andere der Andruckrollenelemente (23) mit der Förderwalze (25) zusammenwirkt, um das Erntegut in die zylindrische Ballenformkammer (28) zu drücken.

9. Rundballenpresse nach einem der Ansprüche 5 bis 8, **dadurch gekennzeichnet, dass** jedes Andruckrollenelement (23, 24) für eine vertikal schwenkbare Bewegung unabhängig befestigt ist, um sich unterschiedlichen Tiefen des unter dem Andruckrollenelement (23, 24) hindurchlaufenden Ernteguts anzupassen.

10. Rundballenpresse nach einem der Ansprüche 2 bis 9, **dadurch gekennzeichnet, dass** die Zuführvorrichtung (200) eine Starterwalze (24) umfasst, die ausgerichtet ist, um sich oberhalb der Erntegutfördereinrichtung (20) zu erstrecken, und so relativ zur Förderwalze (25) angeordnet ist, dass das Erntegut unter der Starterwalze (24) hindurchläuft, bevor es mit der Förderwalze (25) in Eingriff gelangt, wobei die Starterwalze (24) eine Mehrzahl sich in Umfangsrichtung erstreckender Klappen (24a) aufweist, die das Erntegut auf der Erntegutfördereinrichtung (20) zusammendrücken, wobei die Starterwalze (24) in eine Richtung gedreht wird, die es einer Unterseite der Starterwalze (24) ermöglicht, sich in die gleiche Richtung wie die Erntegutfördereinrichtung (20) unter der Starterwalze (24) zu bewegen, wobei die Starterwalze (24) mit der Förderwalze (25) zusammenwirkt, um das unter der Starterwalze (24) hindurchlaufende Erntegut in die konische Ballenformkammer (26) hochzuheben.

11. Rundballenpresse nach einem der vorhergehenden Ansprüche, weiterhin umfassend eine Erntegutverteilungsvorrichtung (110) zum Verteilen des Ernteguts auf der Erntegutfördereinrichtung (20) in einer gewünschten Weise, wobei die Erntegutverteilungsvorrichtung (110) am Rahmen (11) oberhalb der Erntegutfördereinrichtung (20) und stromaufwärts der Zuführvorrichtung (200) relativ zur Fließrichtung des Ernteguts auf der Erntegutfördereinrichtung (20) gestützt ist.

12. Rundballenpresse nach Anspruch 11, **dadurch gekennzeichnet, dass** die Erntegutverteilungsvorrichtung (110) eine Förderschnecke (110) umfasst, die im Allgemeinen quer zum Fluss des Ernteguts auf der Erntegutfördereinrichtung (20) ausgerichtet ist, wobei die Förderschnecke (110) so positioniert ist, dass sie mit dem Erntegut in Eingriff gelangt, wenn das Erntegut unter der Förderschnecke hindurchläuft, wobei die Förderschnecke (110) einen schneckenförmigen Schraubengang aufweist, der mit dem Erntegut in Eingriff gelangt, um das Erntegut im Allgemeinen quer zum Fluss des Ernteguts auf der Erntegutfördereinrichtung (20) zu bewegen.

13. Rundballenpresse nach einem der vorhergehenden Ansprüche, **dadurch gekennzeichnet, dass** ein Tastrad (120) drehbar gelagert ist, um auf dem Erntegut auf der Erntegutfördereinrichtung (20) zu laufen, wobei das Tastrad (120) für eine vertikale Bewegung als Reaktion auf die Tiefe des unter dem Tastrad (120) hindurchlaufenden Ernteguts schwenkbar befestigt ist, und betriebsmäßig mit den Walzen (27) der konischen und zylindrischen Ballenformkammern (26) verbunden ist, um deren Betriebsgeschwindigkeit als Reaktion auf die Tiefe des Ernteguts auf der Erntegutfördereinrichtung (20) zu steuern.

14. Rundballenpresse nach einem der vorhergehenden Ansprüche, **dadurch gekennzeichnet, dass** ein Trennmechanismus (80) eingerichtet ist zum Abtrennen des axial aus der zylindrischen Ballenformkammer (28) hervorragenden Rundballens, um so den Rundballen zu formen, wobei der Trennmechanismus (80) eingerichtet ist, um mit dem axial austretenden Rundballen in Eingriff zu gelangen, wenn eine ausreichende Länge aus der zylindrischen Ballenformkammer (28) hervorragt, um eine ausgewählte Länge des sich axial erstreckenden Ballens für eine Abgabe auf den Boden abzutrennen, und
eingerichtet ist, um mit dem sich axial aus der zylindrischen Ballenformkammer (28) erstreckenden Rundballen während des Abtrennens zu bewegen.

15. Rundballenpresse nach einem der vorhergehenden Ansprüche, **dadurch gekennzeichnet, dass** die zylindrische Ballenkammer (28) so eingerichtet ist, dass sie wahlweise so eingerichtet ist, dass sie sich axial erstreckende Rundballen mit mindestens zwei verschiedenen Ballendurchmessern formt, wobei die zylindrische Ballenformkammer (28) aus zwei gegenüberliegenden, teilweise halbkreisförmigen Anordnungen (43, 44) der zylindrischen Walzen (29) gebildet ist, wobei eine erste der teilweise halbkreisförmigen Anordnungen (43) eine linke Seite der zylindrischen Ballenformkammer (28) bildet und schwenkbar für eine Bewegung um einen ersten Drehpunkt (48) befestigt ist, und eine zweite der teilweise halbkreisförmigen Anordnungen (44) eine rechte Seite der zylindrischen Ballenformkammer (28) definiert und schwenkbar für eine Bewegung um einen zweiten Drehpunkt (49) befestigt ist, wobei die erste und die zweite teilweise halbkreisförmige Anordnung (43, 44) wahlweise zwischen einer ersten Durchmesserposition und einer zweiten Durchmesserposition schwenkbar befestigt sind, um den sich axial erstreckenden Rundballen mit den wählbaren Durchmessern zu formen.

## Revendications

1. Une presse à balle ronde opérable pour former une balle ronde s'étendant axialement à partir d'un matériau de culture, comprenant :
un cadre (11) ;
une chambre conique de formation de balle (26) définissant un axe géométrique central (26a), et formée de plusieurs rouleaux coniques (27) disposés en un réseau généralement circulaire, la chambre conique de formation de balle (26) étant portée sur le cadre (11) et étant configurée pour recevoir un matériau de culture, pour former le matériau de culture en une balle ronde et pour pousser la balle ronde axialement à partir de celle-ci ;
une chambre cylindrique de formation de balle (28) formée d'une pluralité de rouleaux cylindriques (29) disposés en un réseau généralement circulaire, la chambre cylindrique de formation de balle (28) étant en communication avec ladite chambre conique de formation de balle (26) pour recevoir une protubérance de ladite balle ronde poussée depuis la chambre conique de formation de balle (26) et pour produire la balle ronde de matériau de culture s'étendant axialement depuis la chambre cylindrique de formation de balle (28) ;
un mécanisme de ramassage de culture (19) pour ramasser le matériau de culture du sol ; et
un moyen de transport de culture (20) recevant du matériau de culture du mécanisme de ramassage de culture (19) et présentant ledit matériau de culture à ladite chambre conique de formation de balle (26) dans une direction généralement transversale, transversalement par rapport à l'axe géométrique central (26a) de la chambre conique de formation de balle (26) ;
**caractérisé en ce que**
un appareil d'alimentation (200) est prévu qui soulève le matériau de culture dudit moyen de transport de culture (20) et alimente le matériau de culture à l'intérieur de ladite chambre conique de formation de balle (26).

2. Une presse à balle ronde selon la revendication 1, **caractérisée en ce que** l'appareil d'alimentation (200) comprend un rouleau d'alimentation (25) soutenu au-dessus dudit moyen de transport de culture (20) adjacent à ladite chambre conique de formation de balle (26) pour diriger ledit matériau de culture dudit moyen de transport de culture (20) dans ladite chambre conique de formation de balle (26).

3. Une presse à balle ronde selon la revendication 2, **caractérisée en ce que** le rouleau d'alimentation (25) est configuré pour diriger le matériau de culture du moyen de transport de culture (20) dans la chambre cylindrique de formation de balle (28).

4. Une presse à balle ronde selon la revendication 2 ou 3, **caractérisée en ce que** ledit rouleau d'alimentation (25) comprend :
une première portion conique (25b) adjacente à la chambre conique de formation de balle (26), et opérable pour diriger ledit matériau de culture du moyen de transport de culture (20) dans ladite chambre conique de formation de balle (26) ; et
une deuxième portion conique (25c) alignée axialement avec ladite première portion conique (25b) et adjacente à la chambre cylindrique de formation de balle (28), la deuxième portion conique (25c) étant opérable pour diriger ledit matériau de culture à l'intérieur d'une portion amont de ladite chambre cylindrique de formation de balle (28), par rapport à la direction de déplacement de la balle ronde s'étendant axialement.

5. Une presse à balle ronde selon l'une quelconque des revendications 2 à 4, **caractérisée en ce que** l'appareil d'alimentation (200) comprend un appareil à rouleau de pincement (23, 24) soutenu au-dessus dudit moyen de transport de culture pour coopérer avec ledit rouleau d'alimentation (25) pour diriger ledit matériau de culture dans ladite chambre conique de formation de balle (26), ledit matériau de culture passant sous ledit appareil à rouleau de pincement (23, 24) avant de s'engager dans ledit rouleau d'alimentation (25).

6. Une presse à balle ronde selon la revendication 5, **caractérisée en ce que** l'appareil à rouleau de pincement (23, 24) peut coopérer avec le rouleau d'alimentation (25) pour diriger le produit de culture du moyen de transport de culture (20) dans la chambre cylindrique de formation de balle (28).

7. Une presse à balle ronde selon la revendication 5 ou 6, **caractérisée en ce que** l'appareil à rouleau de pincement (23, 24) comprend au moins un élément de rouleau de pincement (24) pouvant coopérer avec le rouleau d'alimentation (25) pour pousser le matériau de culture dans la chambre conique de formation de la balle (26).

8. Une presse à balle ronde selon l'une quelconque des revendications 5 à 7, **caractérisée en ce que** l'appareil à rouleau de pincement (23, 24) comprend au moins deux éléments de rouleau de pincement (23, 24), l'un des éléments de rouleau de pincement (24) pouvant coopérer avec le rouleau d'alimentation (25) pour pousser le matériau de culture dans la chambre conique de formation de balle (24), et l'autre des éléments de rouleau de pincement (23) pouvant coopérer avec le rouleau d'alimentation (25) pour pousser la matériau de culture dans la chambre cylindrique de formation de balle (28).

9. Une presse à balle ronde selon l'une quelconque des revendications 5 à 8, **caractérisée en ce que** chaque élément de rouleau de pincement (23, 24) respectif est monté indépendamment pour pivoter verticalement afin de s'adapter aux différentes profondeurs du matériau de culture passant sous ledit élément de rouleau de pincement (23, 24).

10. Une presse à balle ronde selon l'une quelconque des revendications 2 à 9, **caractérisée en ce que** l'appareil d'alimentation (200) comprend un rouleau de départ (24) orienté de manière à s'étendre au-dessus du moyen de transport de culture (20) et étant situé par rapport au rouleau d'alimentation (25) de manière à ce que le matériau de culture passe sous le rouleau de départ (24) avant d'engager le rouleau d'alimentation (25), ledit rouleau de départ (24) ayant une pluralité de volets (24a) s'étendant circonférentiellement qui compriment le matériau de culture sur le moyen de transport de culture (20), ledit rouleau de départ (24) étant tourné dans une direction qui permet à une surface inférieure dudit rouleau de départ (24) de se déplacer dans la même direction que le moyen de transport de culture (20) sous ledit rouleau de départ (24), le rouleau de départ (24) pouvant coopérer avec le rouleau d'alimentation (25) pour élever du matériau de culture passant sous le rouleau de départ (24) dans ladite chambre conique de formation de balle (26).

11. Une presse à balle ronde selon l'une quelconque des revendications précédentes, comprenant en outre un dispositif de distribution de culture (110) pour distribuer ledit matériau de culture d'une manière souhaitée sur ledit moyen de transport de culture (20), le dispositif de distribution de culture (110) étant supporté sur le cadre (11) au-dessus du moyen de transport de culture (20), en amont de l'appareil d'alimentation (200) par rapport à la direction d'écoulement du matériau de culture sur le moyen de transport de culture (20).

12. Une presse à balle ronde selon la revendication 11, **caractérisée en ce que** ledit dispositif de distribution de culture (110) comprend une vis sans fin (110) orientée généralement transversalement par rapport à l'écoulement du matériau de culture sur le moyen de transport de culture (20), ladite vis sans fin (110) étant positionnée pour engager ledit matériau de culture lorsque ledit matériau de culture passe sous ladite vis sans fin, ladite vis sans fin (110) ayant des ailettes hélicoïdales qui engagent ledit matériau de culture pour déplacer ledit matériau de culture généralement transversalement par rapport à l'écoulement du matériau de culture sur le moyen de transport de culture (20).

13. Une presse à balle ronde selon l'une quelconque des revendications précédentes, **caractérisée en ce qu'**une roue de jauge (120) est supportée de manière rotative pour monter sur le dessus du matériau de culture sur le moyen de transport de culture (20), la roue de jauge (120) étant montée pivotante pour un mouvement vertical en réponse à la profondeur du matériau de culture passant sous ladite roue de jauge (120), et étant reliée de manière opérationnelle aux rouleaux (27) des chambres conique et cylindrique de formation de balle (26) pour contrôler la vitesse de fonctionnement de ces derniers en réponse à la profondeur du matériau de culture sur le moyen de transport de culture (20).

14. Une presse à balle ronde selon l'une quelconque des revendications précédentes, **caractérisée en ce qu'**un mécanisme de séparation (80) est opérable pour séparer la balle cylindrique s'étendant axialement à partir de la chambre cylindrique de formation de balle (28) pour former la balle ronde à partir de celle-ci, le mécanisme de séparation (80) est opérable pour engager la balle ronde s'étendant axialement lorsqu'une longueur suffisante a dépassé de la chambre cylindrique de formation de balle (28) pour séparer une longueur sélectionnée de ladite balle s'étendant axialement pour la décharge sur le sol, et est configuré pour se déplacer avec la balle ronde s'étendant axialement à partir de la chambre cylindrique de formation de balle (28) pendant qu'elle est séparée.

15. Une presse à balle ronde selon l'une quelconque des revendications précédentes, **caractérisée en ce que** la chambre cylindrique de balle (28) est configurée pour être sélectivement opérable pour former des balles rondes s'étendant axialement d'au moins deux diamètres de balles différents, la chambre de formation de balle (28) étant formée par deux réseaux opposés partiellement semi-circulaires (43, 44) des rouleaux cylindriques (29), un premier des réseaux partiellement semi-circulaires (43) définissant un côté gauche de ladite chambre cylindrique de formation de balle (28) et étant monté de façon pivotante pour se déplacer autour d'un premier pivot (48), et un deuxième des réseaux partiellement semi-circulaires (44) définissant un côté droit de la chambre cylindrique de formation de balle (28), et étant monté de façon pivotante pour se déplacer autour d'un second pivot (49), lesdits premier et deuxième réseaux partiellement semi-circulaires (43, 44) étant sélectivement pivotants entre une première position de diamètre et une deuxième position de diamètre pour la formation de ladite balle ronde s'étendant axialement selon les diamètres sélectionnables.
